# EUROPEAN PATENT APPLICATION

(11) **EP 4 826 603 A1**
(43) Date of publication of application: **21.10.2026**
(21) Application number: 25305562.8
(22) Date of filing: 16.04.2025
(51) Int. Cl.: G06N 10/60, G06N 10/20

(54) **SYSTEM AND METHOD FOR SOLVING A DIFFERENTIAL PROBLEM USING A QUANTUM COMPUTER**

(71) Applicant: Pasqal S.A.S., 91120 Palaiseau (FR)
(72) Inventor: WU, Hsin-Yu, 91120 Palaiseau (FR); KYRIIENKO, Oleksandr, 91120 Palaiseau (FR)
(74) Representative: De Vries & Metman

(57) **Abstract**

Methods and systems are disclosed for solving a differential problem using a hybrid computer system. The differential problem defines a differential equation and one or more constraints, and solving the differential problem comprises finding a target function defining an approximate solution of the differential equation and obeying the constraints. The target function is represented by a vector of coefficients with respect to a given function basis. The method comprises receiving or determining information on one or more quantum circuits encoding a Hamiltonian representing the differential problem with respect to the basis functions; and determining the solution to the differential problem. The determining comprises encoding the quantum circuits using the quantum processor; and determining an eigenvector of the Hamiltonian with a minimal eigenvalue, preferably the eigenvalue being equal to zero, the eigenvector representing the vector of coefficients of the target function.

## Description

### Technical field

The disclosure relates to solving differential problems, and in particular, though not exclusively, to methods and systems for solving differential problems using a hybrid computer system, and to a computer program product enabling a hybrid computer system to perform such methods.

### Background

Solving differential equations (DEs) is a crucial task in many fields of science, engineering and economics. Differential equations provide a concise and powerful mathematical framework for formulating the dynamics of real-world phenomena. Because closed forms of the solution are often unavailable for practical problems, several classical techniques (e.g., finite-difference methods (FDM), finite-element methods (FEM) and spectral methods) have been developed for numerically solving differential equations to obtain approximate solutions. Many variations of these kinds of algorithms are known in the art.

Finite-difference methods break down a problem domain into a regular gird of discrete pieces, approximating differential terms by finite differences at each grid point. A numerical solution is typically found by collecting the differential equations and data constraints (e.g., boundary conditions, initial conditions, or fixed points) into a single matrix equation that can be solved by matrix inversion techniques. Finite-difference methods need to balance the resolution of the solution with the grid size, which can grow very quickly with the dimension of the problem, and which is practically speaking often limited by hardware constraints such as memory size, cache memory, et cetera.

Instead of a regular grid, finite-element methods use a mesh of elements to model the problem domain. Various solving techniques may be used; some popular methods employ so-called 'weak' formulations that describe the differential equations in integral form. The approximate solution can then be expressed as a linear combination of shape (basis) functions that are applied independently across each element. A system matrix equation is produced (and solved) after assembling individual local equations along with any data constraints.

In spectral methods, the solution is approximated by a finite set of orthogonal basis function (e.g., Fourier series or trigonometric functions for periodic problems, or Chebyshev or Legendre polynomials for non-periodic problems). This converts the problem into finding optimal coefficients of the truncated expansion of the sought solution through solving a matrix equation. Because basis function spans the entire domain, spectral methods provide a global (non-local) approximation and discretization is not required, making it distinct from finite-difference methods and finite-element methods.

Typically, these techniques can handle nonlinear differential equations (NDEs) using iterative methods. The order of accuracy can be increased by increasing the number of elements and/or higher-order shape function for finite-difference and finite-element methods, or by increasing the number of expansion terms for spectral methods. However, these introduce computational difficulties when tackling complex problems in high-dimensional spaces.

Alternatively, the increasingly popular field of machine learning has also been turned to the task of solving differential equations. This is part of the field known as SciML (scientific machine learning), where machine-learning models are tasked with learning relationships from scientific data. The solving of differential equations generally utilises PINNs (physics-informed neural networks) - deep neural networks that include differential constraints introduced with automatic differentiation. PINNs have been applied to a wide range of problems. However, it is still a developing field with issues left to address such as training guarantees and cost per epoch.

Quantum computing offers a fundamentally different way to compute. Correspondingly, certain processes and techniques can efficiently be implemented on quantum devices (or hybrid quantum computers), but not on classical computing devices. The expectation is that by utilizing these areas of efficiency, algorithms for problems of interest can be found and implemented which offer a speed up over classical methods. The solving of (certain classes of) differential equations offers one potential area for advantage, and consequently, there has been effort in creating quantum algorithms for this use using a variety of approaches. Many of these approaches are analogous to the approaches for classical algorithms described above.

For example, in quantum finite-differencing approaches, the problem is discretised into a system of equations and then solved. However, the absence of, e.g., register shifts makes implementing these algorithms on current hardware very challenging. Also proposed are spectral methods, where the solution is fit by finding coefficients for a given basis. Other proposed works can be categorized as SciML approaches using quantum machine learning, where a quantum model is variationally taught to respect the known differential constraints - similar to PINNs. However, variational methods tend to require a large number of circuit evaluations, which quickly leads to (very) long computation times given the repetition rate of current quantum hardware.

It is classically a hard problem to generate random samples from a given probability distribution. This is especially the case for multivariate problems. Because quantum systems are inherently probabilistic, generative modelling is one of the areas where quantum computers can provide an advantage. This is particularly true for multivariate problems, which can be associated with measurements on entangled quantum states.

Quantum generative modelling (QGM) aims to exploit trainable circuits that can prepare distributions as quantum states. Being a subject of emerging quantum machine learning (QML), QGM utilizes the Born rule inherent to quantum mechanics. The goal is to represent a parametrized probability distribution *p_{θ}(x)* as a probability to measure a bit string *x* from a variational state parametrized by a vector gate parameters *θ*. By using so-called quantum circuit Born machines (QCBMs) models can be learned *directly* from samples of a target distribution using various loss functions. Here, directly means that a sample can be determined directly from a measured wavefunction, so that for one sample in principle only one quantum measurement is needed. However, while making a step towards sampling-based advantage on quantum computers, QGM performance is largely limited, both by poor trainability and due to undefined or poorly defined derivatives. This limits in particular applications such as solving stochastic differential equations (SDE). Alternative solutions that have been proposed in the art rely on computationally-expensive amplitude encoding schemes, complex or deep quantum circuits, or other incompatibilities with realistic NISQ hardware devices available today and in the expected near future.

WO 2023/158404 A1 describes a way to sample probability distribution functions based on a variational approach, e.g., to solve a stochastic differential equation. While this approach addresses many of the above-mentioned drawbacks, such a variational approach is still relatively sensitive to noise.

Hence, there is a need in the art to quickly and efficiently solve differential problems using hybrid quantum computers.

### Summary

It is an aim of the embodiments in this disclosure to provide a system and method for solving differential equations that avoids, or at least reduces the drawbacks of the prior art.

In a first aspect, embodiments in this disclosure relate to a method for solving a differential problem using a hybrid computer system comprising a classical computer system and a quantum processor. The quantum processor may comprise a plurality of quantum elements, e.g., qubits, qutrits, or other qudits. The differential problem defines one or more differential equations and, optionally, one or more constraints. Solving the differential problem comprises finding a target function defining an approximate solution of the differential equation, the target function being represented by a vector of coefficients with respect to a given function basis. The method comprises receiving or determining information on one or more quantum circuits encoding a Hamiltonian representing the differential problem with respect to the basis functions, and determining the solution to the differential problem. The Hamiltonian comprises a first contribution representing the differential equation and, optionally, a second contribution representing the one or more constraints. The determination of the solution to the differential problem comprises: encoding the one or more quantum circuits using the quantum processor; and determining an eigenvector of the Hamiltonian by finding a ground state, or zero-eigenvalue state, of the Hamiltonian, which eigenvector represents the vector of coefficients of the target function. More in particular, the determination of the solution to the differential problem may comprise: initialising at least a first part of the quantum processor (e.g., a first plurality of quantum elements) in an initial state, e.g., an initial fiducial state; evolving the at least a first part of the quantum processor into a final state, the final state targeting the ground state of the Hamiltonian; and receiving measurement data from the quantum processor, e.g., from measuring at least some of the plurality of quantum elements, to obtain the solution to the differential problem. The evolving the plurality of quantum elements may comprise applying a sequence of pulses to at least part of the plurality of quantum circuits, the sequence of pulses encoding the one or more quantum circuits.

Such a Hamiltonian effectively encoding a differential problem may also be referred to as an effective Hamiltonian.

The solution may be constrained by the constraints, e.g., boundary constraints, initial constraints, internal fixed points, and/or data driven constraints. In some cases, the solution may also be considered a fitted function to the constraints, wherein the fit is constrained by the differential equation. The described method allows to encode the solution in a quantum register of the quantum processor. The thus encoded solution may be evaluated at one or more points, or may be used as a starting point for further operations, as will be discussed in more detail below.

An advantage of this method is that the representation of the target function is a ground state of the Hamiltonian, and is therefore inherently stable: the quantum elements (typically qubits) cannot make an unwanted transition to a lower-energy state. Moreover, small deviations around the ground state remain close to the desired solution. This makes a function encoded in a ground state suitable for further computations; this includes not only determining function values of the target function at one or more points of interest, but also analysis of properties like convexity of the target function, using the target function as input for a further model, et cetera.

As a further example, the described method are particularly suitable for modelling ongoing processes, wherein the Hamiltonian can be updated in a relatively straightforward manner by adding or replacing one or more data constraints, and allowing the system to transition to the new ground state.

The target function may be defined as an overlap of a basis state representing the basis functions of the function basis, and the eigenvector representing the coefficients of the target function. The basis state is dependent on the one or more independent variables of the differential problem, whereas the coefficients vector is independent of the one or more independent variables. That is, the Hamiltonian may be formulated with respect to some function basis 〈*τ*(*x*)|; then, if the Hamiltonian's eigenvector corresponding to the ground state is represented by |*ψ*〉, then the solution to the differential problem is given by 〈*τ*(*x*)|*ψ*〉*.* In general, for a system using *n* encoding qubits, *N* = 2*ⁿ* basis functions can be used to represent the solution.

In brief, the method employs collecting individual latent contributions of the differential equation and constraints, to form an effective Hamiltonian operator 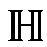 . An energy function *ε*(*η*) can be constructed as an expectation value of 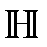 with respect to an unknown quantum state |*ψ*〉 to yield a scalar energy. In principle, there are various options to find a solution to such a problem. For example, the problem can be treated as a conventional machine-learning task with a cost function corresponding to the energy, using known quantum machine-learning techniques, e.g., by variationally tuning *N* = 2*ⁿ* independent parameters {c*ₖ*} for *k* = 0, 1, *... , N* - 1, related to each component of |*ψ*〉 (for a system with *n* encoding qubits).

Alternatively, a solution can be found by exploring the eigenproperties of the effective Hamiltonian operator 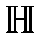 , which can be constructed as a function of a single variable *η* > 0. This approach does not require a variational Ansatz, thus avoiding common training issues, such as barren plateaus and local minima trapping, that are generally applicable to variational protocols. Moreover, as a spectral method, there is no dependence on a grid of collation points, making the method scalable to higher dimensions.

In general, the Hamiltonian 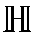 can be represented by a real symmetric matrix with distinct real non-negative eigenvalues and mutually orthonormal eigenvectors. Thus, the effective Hamiltonian operator can be written as $ℍ = {QΛQ}^{T}$, where **Q** is a matrix where the *k*^{th} column is the *k*^{th} eigenvector ***q**ₖ*, and Λ is a diagonal matrix containing all eigenvalues *λₖ*. This is also known as the eigenspace representation. In this eigenspace representation, *ε*(*η*) can be expressed as a sum of *N* squared projection lengths ${d}_{k}^{2}$ weighted by the eigenvalue *λₖ* associated with eigenvector ***q**ₖ*. The diagonal entries of A control the definiteness of ε(*η*), and the total energy is always nonnegative and (at least approximately) equal to zero for solving the problem. This implies that $ℍ \left(η\right)$ must be a positive-semidefinite matrix for certain $η ∈ \left\{{η}_{k}^{*}\right\} = {argmin}_{η} ε \left(η\right)$ with *k* = 0,1, *..., N.* A positive-semidefinite $ℍ \left(η\right)$ with exactly one eigenvalue being zero can be achieved when $η = {η}_{max}^{*}$, where ${η}_{max}^{*}$ is the largest value of *η* in $\left\{{η}_{k}^{*}\right\}$. The energy minimization requires that |*ψ*〉 aligns with ${q}_{j}^{*}$*,* the eigenvector (ground state) associated with the zero eigenvalue ( ${λ}_{j}^{*} = 0$) of $ℍ \left({η}_{max}^{*}\right)$, and is perpendicular to the other eigenvectors ( ${d}_{k}^{*} = 0$ for *k* = *j*), thus solving the differential problem (up to a normalisation factor) without the use of variational methods.

This solution can be obtained in a fully analogue manner, avoiding some of the issues associated with limited qubit correlation times and lack of error correction on current-era and near-term quantum systems. As the effective Hamiltonian can be encoded using digital gates (e.g., specific programmable pulse sequences), a general-purpose quantum processor can be used to solve the differential problem. Alternatively, special-purpose quantum processors may be designed to solve specific differential problems in an efficient manner.

Depending on the context, the value of the normalisation factor may or may not be required. For instance, if the solution is a probability density function, the normalisation factor is equal to 1 by definition. If one is only interested in the 'shape' of the solution (e.g., convexity, increasing or decreasing parts, linear and non-linear parts, et cetera), or if the problem is defined in arbitrary units, the value of the normalisation factor is immaterial.

However, if computation of the normalisation factor is required, there are several potential solutions. For instance, if a non-zero function value is known for some input value, one may evaluate the function for that input value and derive the normalisation factor from the ratio between the known function value and the evaluated value. The normalisation factor can also be computed without evaluating the quantum solution (i.e., using only a classical computer), by determining the eigenvalue corresponding to the ground state of the matrix representation of the effective Hamiltonian. In that case, the task of searching for $\left\{{η}_{k}^{*}\right\}$ corresponds to solving a set of linear equations $\left\{{α}_{k}\times {η}_{k}^{*}-β=0\right\}$, indicating that the scalar value of ${η}_{max}^{*}$ can be specifically located without the need of any optimization procedures. It is noted that numerical methods are known in the art for finding a smallest eigenvalue using a classical computer, without needing to determine all eigenvalues. By substituting ${η}_{max}^{*}$ and the corresponding ground state $\left|ψ\right〉 = {q}_{j}^{*}$ into the quantum model, the solution to the differential problem is obtained. However, it is noted that in general, it is not needed to (explicitly) determine the smallest eigenvalue and corresponding eigenvector.

Thus, the method may be considered a method for encoding a solution to a differential equation in an eigenstate of a Hamiltonian of a quantum processor. Such an encoding in a ground state is relatively stable even for entangled states, and resilient to perturbations. Excited states will exhibit similar behaviour, and will tend to be at least close to solutions of the differential problem, obeying constraints posed by the differential equation and the boundary constraints. This is in contrast to solutions of variational problems, where a small change in the encoding state can correspond to a large difference in the encoded function. Moreover, such an encoding is generally well scalable to, e.g., larger qubit registers.

The encoded solution can then be used to study various properties of the solution, e.g., as described in C.A. Williams et al., 'Addressing the Readout Problem in Quantum Differential Equation Algorithms with Quantum Scientific Machine Learning', arXiv:2411.15259v1 [quant-ph], which is hereby incorporated by reference in its entirety. For example, the convexity of the solution may be studied; if the solution represents a state of a physical system, that state may be classified (e.g., running properly or being at fault), et cetera. In general, if the problem is cast as an optimisation problem, a quantum advantage may be expected in cases where the model is trainable, i.e., if the resulting optimisation problem is convex and the optimisation landscape sufficiently smooth.

Thus, as an example, a probability distribution (e.g., a probability density function) may be loaded into the quantum register, where the probability distribution is a solution to a differential problem (for example, a stochastic differential equation). Hence, in an embodiment, the solution to the differential problem represents a probability density function and the method further comprises generating, by the quantum processor, samples based on the probability density function. The generation of samples may comprise applying a unitary transformation associated with the function basis, and measuring the quantum register in a computational basis associated with the function basis. This measurement may yield bitstrings as measurement results, each bitstring representing a sample based on the probability density function. Methods to generate samples from a probability distribution encoded in a plurality of quantum elements is described in more detail in WO 2023/158404 A1, which is hereby incorporated by reference in its entirety.

It is noted that once the solution is encoded in at least some of the quantum elements, the solution may be scaled to a larger number of quantum elements using known methods. This is e.g. the procedure used in qubit-wise learning for O. Kyriienko et al., 'Protocols for trainable and differentiable quantum generative modelling', Phys. Rev. Research 6 (2024) 033291, but also reminiscent of classical methodologies for super-resolution, as mentioned e.g. in Ren, Pu, et al. "PhySR: Physics-informed deep super-resolution for spatiotemporal data." Journal of Computational Physics 492 (2023): 112438. This way, for example, the resolution of generated samples may be increased. Thus, in an embodiment, the solution (the final state) is encoded in a first selection of quantum elements from the plurality of quantum elements. In such an embodiment, the method may further comprise transferring, e.g., scaling, the solution to a second selection of quantum elements from the plurality of quantum elements, the second selection of quantum elements containing a different number, typically a larger number, of quantum elements than the first selection of quantum elements.

In an embodiment, the method further comprises evaluating the target function. Evaluating the target function may comprise encoding an independent variable of the target function in a latent space of the quantum processor state by initialising a second part of the quantum processor in a fiducial state and evolving the fiducial state with a feature map associated with the given function basis to obtain an encoded state, the feature map being based on the independent variable; and measuring an overlap of the encoded state with the final state representing the vector of coefficients with respect to the given function basis.

In other words, the independent variable may be encoded using a feature map, using known feature map encoding techniques, and an overlap with the ground state representing the vector of coefficients may be determined to obtain the target function value (dependent variable) for the given value of the independent variable.

In an embodiment, determining the eigenvector of the Hamiltonian with the minimal eigenvalue comprises encoding the Hamiltonian and determining a ground state of the Hamiltonian, the determining the ground state preferably comprising imaginary time evolution of the Hamiltonian. Other embodiments may use other annealing techniques to determine the ground state of the Hamiltonian, e.g., as reviewed in T. Albash et al., 'Adiabatic quantum computing' arXiv:1611.04471v2 [quant-ph] and Y. Suba 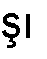 *et al.,* 'Quantum algorithms for systems of linear equations inspired by adiabatic quantum computing' arXiv:1805.12549v2 [quant-ph].

In an embodiment, the basis functions comprise a constant function. This allows easy encoding of generic constraints, such as boundary conditions or data constraints for arbitrary values of the independent variable(s).

In an embodiment, the basis functions are real-valued functions. In such an embodiment, the differential problem may also be real-valued. Using real-valued basis functions for solving a real-valued differential problem is more efficient, as a solution is sought in a smaller space.

In an embodiment, the basis functions define a complete function basis. This ensures that derivatives and products of basis functions can be written in terms of basis functions.

In an embodiment, the basis functions define an orthogonal function basis.

In an embodiment, the basis functions are the Chebyshev polynomials of the first kind and/or the Chebyshev polynomials of the second kind. The Chebyshev basis functions fulfil all the above-mentioned requirements, and are therefore a natural choice for the basis. Additionally, it is known how to prepare a feature map for the Chebyshev basis, facilitating read-out of the solution. In such an embodiment, the unitary transformation associated with the function basis may be an inverse Chebyshev transformation.

In other embodiments, a different function basis may be used. The function basis may be selected based on the differential problem. For example, a polynomial function basis is suitable for solving polynomial differential problems.

In an embodiment, the Hamiltonian is represented by a sum of a first matrix representing the differential equation and one or more second matrices representing the one or more constraints. The first matrix may be defined as a quadratic form of a third matrix, the third matrix being defined as a sum of matrices corresponding to terms of the differential equation with respect to the basis functions. Each of the one or more second matrices may comprise a quadratic form of a fourth matrix, the fourth matrix corresponding to one of the one or more constraints with respect to the basis functions.

In some embodiments, the second matrices may be provided in pairs, and each pair of second matrices may comprise a quadratic form of the fourth matrix and a product of a normalisation factor with an identity matrix. Such pairs of second matrices may be used to encode inhomogeneous constraints, e.g., a constraint of the form *f*^{(*n*)}(*x₀*) = *y*₀ with *y*₀ ≠ 0, wherein *f*^{(*n*)}(*x*₀) represents an *n*^{th} order derivative (with *n* ≥ 0) of a function *f* evaluated at a point *x*₀.

A quadratic form of a matrix A is defined as the product of a transpose of that matrix with the matrix itself, i.e., **A**^{T}**A**. A quadratic form is always positive (semi)-definite, and hence, all its eigenvalues are larger than (or equal to) zero. A sum of positive (semi)-definite matrices is itself also a positive (semi)-definite matrix, and hence, a Hamiltonian defined this way is guaranteed to be at least positive semi-definite.

Typically, each term in the differential equation can be mapped to a matrix operation acting on the vector of basis functions.

In some embodiments, the Hamiltonian may be based on a weighted sum. For example, the constraints may be weighted such that all constraints together have a weight equal to that of the differential equation. In embodiments wherein the constraints are based on measurements, the constraints may have a weight based on an accuracy of the measurement.

In some embodiments, the first matrix representing the differential equation may project the solution on the null vector. In other words, the differential equation may be represented by a matrix 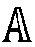 (the third matrix as defined above), such that $A \left|{ψ}_{sol}\right〉 = \left|0\right〉$, wherein |*ψ*ₛₒₗ〉 represents the eigenvector representing the vector of coefficients of the target function.

Similarly, each of the fourth matrices representing one of the one or more data constraints may project the solution on the null vector. In other words, each of the one or more boundary conditions may be represented by a matrix 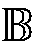 , such that $B \left|{ψ}_{sol}\right〉 = \left|0\right〉$, wherein |*ψ*ₛₒₗ〉 again represents the eigenvector representing the vector of coefficients of the target function. For example, the data constraints may be provided in the form *f*^{(*n*)}(*x₀*) *=* 0, wherein *f*^{(*n*)}(*x₀*) represents an *n*^{th} order derivative (with *n* ≥ 0) of a function *f* evaluated at a point *x*₀. In other words, in some embodiment, the one or more constraints are homogeneous data constraints.

In other embodiments, the data constraints may correspond to arbitrary values, e.g., *f*^{(*n*)}(*x*₀) = *y*₀ with typically *y*₀ ≠ 0. In such cases, it may not be known *a priori* how many data constraints are needed to obtain the solution; hence, in such cases, additional data constraints may be added until a solution to the differential problem is obtained.

In an embodiment, the one or more quantum circuits further define operations for encoding a value of an independent variable of the differential equation in a first quantum state using a feature map associated with the basis functions; encoding the eigenvector of the Hamiltonian with the minimal eigenvalue in a second quantum state; and measuring an overlap between the first and second quantum states.

For example, if the chosen basis functions are the Chebyshev basis functions, the feature map can be the Chebyshev feature map or a derivative Chebyshev feature map.

In an embodiment, the Hamiltonian comprises a scaling factor. In such an embodiment, determining the eigenvector of the Hamiltonian with the minimal eigenvalue may comprise computing a set of eigenvalues of a part of the Hamiltonian that is scaled by the scaling factor, and selecting a smallest eigenvalue of the set of eigenvalues.

The determination of the set of eigenvalues may be performed by solving a linear system of equations. This may be done using, e.g., using the quantum processor or using the classical computer system, depending, inter alia, on the size of the problem.

In an embodiment, the differential equation is a homogeneous differential equation.

In an embodiment, the differential equation is a polynomial differential equation.

In an embodiment, applying one or more quantum circuits to the quantum register comprises translating each of the one or more quantum circuits into a sequence of signals (e.g., pulses, typically electric or electromagnetic pulses such as voltage pulses, optical pulses, or microwave pulses) and using the sequence of signals to operate the quantum elements in a quantum register of the quantum processor.

In an embodiment, receiving hardware measurement data comprises applying a read-out signal to quantum elements of the quantum processor and, in response to the read-out signal, measuring quantum hardware measurement data.

In an embodiment, the pulses in the sequence of pulses are electromagnetic pulses, e.g., laser pulses or microwave pulses. In such an embodiment, encoding the quantum circuits in the sequence of pulses may comprise determining, for each pulse in the sequence of pulses, one or more of: a pulse duration, a pulse timing, a pulse amplitude, and a pulse phase.

In general, the embodiments described herein can be implemented as sequences of operations that can be executed on, e.g., a neutral atom quantum computer, either in digital mode of operation, in analog mode, or in digital-analog mode. For example, the Hamiltonian may be encoded in digital mode, whereas the determination of the ground state of the Hamiltonian may be done in analog mode. In particular, a hybrid quantum computer as described herein may include one or more of: a gate-based qubit device, a digital/analog quantum device, a purely analog quantum device, a continuous-variable operating quantum device and/or a gaussian boson sampling device. The hybrid quantum computer may comprise a plurality of intertwined layers, wherein each of the layers is implemented by one of the aforementioned quantum devices. Each of the one or more quantum devices, or each of the plurality of intertwined layers, may be implemented as a neutral atom quantum device, a photonic qubit quantum device, a superconducting qubits quantum device, and/or a trapped ion device.

One aspect of this disclosure relates to a system for solving a differential problem, the differential problem defining a differential equation and one or more constraints, the solving comprising finding a target function defining an approximate solution of the differential equation, the target function being represented by a vector of coefficients with respect to a given function basis, the system comprising a hybrid computer system comprising a classical computer system and a quantum processor, the hybrid quantum computer system being configured for:
receiving or determining information on one or more quantum circuits encoding a Hamiltonian representing the differential problem with respect to the basis functions; and
determining the solution to the differential problem, the determining comprising:
encoding the quantum circuits using the quantum processor; determining an eigenvector of the Hamiltonian with a minimal eigenvalue, preferably the eigenvalue being equal to zero, the eigenvector representing the vector of coefficients of the target function; and
optionally, measuring the eigenvector to obtain the solution to the differential problem.

In an embodiment, the hybrid computer system is further configured for executing any one or more of the method steps described above.

One aspect of this disclosure relates to a hybrid quantum computer system comprising a computer-readable storage medium having computer-readable program code stored thereon, and a processor, preferably a microprocessor, coupled to the computer-readable storage medium, wherein responsive to executing the computer-readable program code, the processor is configured to perform any of the methods described herein.

One aspect of this disclosure relates to a computer program or suite of computer programs comprising instructions (e.g., at least one software code portion) or a computer program product comprising instructions, which instructions, when executed by a hybrid quantum computer system, configure the hybrid quantum computer to execute any of the methods described herein.

One aspect of this disclosure relates to a computer-readable medium, e.g., a non-transitory computer-readable storage medium or a computer-readable carrier signal, comprising instructions (e.g., at least one software code portion), which instructions, when executed by a hybrid quantum computer system, configure the hybrid quantum computer to execute any of the methods described herein.

As will be appreciated by one skilled in the art, aspects of the present invention may be embodied as a system, method or computer program product. Accordingly, aspects of the present embodiments may take the form of an entirely hardware embodiment, an entirely software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present embodiments may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non- exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fibre, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fibre, cable, RF, etc., or any suitable combination of the foregoing. Computer program code for carrying out operations for aspects of the present embodiments may be written in any combination of one or more programming languages, including a functional or an object oriented programming language such as Java, Scala, C++, Python or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer, server or virtualized server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present embodiments are described below with reference to flowchart illustrations and/or block diagrams of methods, apparatus (systems), and computer program products according to embodiments of the embodiments. It will be understood that each block of the flowchart illustrations and/or block diagrams, and combinations of blocks in the flowchart illustrations and/or block diagrams, can be implemented by computer program instructions.

These computer program instructions may be provided to a processor, in particular a microprocessor or central processing unit (CPU), or graphics processing unit (GPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present embodiments. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The embodiments will be further illustrated with reference to the attached drawings, which schematically will show embodiments according to the invention. It will be understood that the invention is not in any way restricted to these specific embodiments. Identical reference signs refer to identical, or at least similar elements.

### Brief description of the figures

**Fig. 1** is a schematic illustration of a method according to an embodiment;
**Fig. 2A** is a flowchart of a method according to an embodiment and **Fig. 2B** is a flowchart of a corresponding example;
**Fig. 3A** is a quantum circuit for measuring an overlap, and **Fig. 3B-D** are graphs showing results of a second-order differential equation solved with a method according to an embodiment;
**Fig. 4A-D** are graphs showing results of differential equations solved with a method according to an embodiment;
**Fig. 5A-D** are graphs showing results of a second-order differential equation solved with a method according to an embodiment;
**Fig. 6A** and **6B** are quantum circuits for measuring an overlap, and **Fig. 6C-E** are graphs showing results of a differential equation solved with a method according to an embodiment;
**Fig. 7A** and **7B** are quantum circuits for measuring an overlap, **Fig. 7C** and **7D** show results of solving nonlinear differential equations using a method according to an embodiment, and **Fig. 7E** is quantum circuit for encoding a data constraint;
**FIG. 8A-C** are quantum circuits for quantum imaginary time evolution for use in a method according to an embodiment;
**Fig. 9A** shows a quantum circuit for a derivative operator, **Fig. 9B** shows a quantum circuit of a R-shift operator, and **Fig. 9C** shows an alternative quantum circuit for a derivative operator;
**Fig. 10A-D** depict circuit diagrams for evaluating an overlap, respectively a derivative thereof, according to various embodiments;
**Fig. 11A-C** schematically show quantum circuits for an amplitude Chebyshev feature map, a Fourier feature map, and a Chebyshev-grid-based spectral feature map, respectively;
**Fig. 12A** and **12B** schematically show quantum circuits for a quantum Fourier transform and a quantum Chebyshev transform, respectively;
**Fig. 13A-E** schematically depict hardware-level schematics illustrating the application of logical operations to qubits using a quantum circuit;
**Fig. 14A** and **14B** depict systems describing a Digital-Analog implementation of a quantum algorithm and a quantum feature map, respectively; **Fig. 14C** illustrates pulses corresponding to the quantum feature map;
**Fig. 15A** and **15B** present quantum circuits based on a Digital-Analog implementation of quantum circuits;
**Fig. 16A** and **16B** present quantum circuits based on a Digital-Analog implementation of quantum circuits; and
**Fig. 17A** and **17B** are block diagrams illustrating, respectively, an exemplary hybrid data processing system and an exemplary classical data processing system that may be used for executing methods and software products described in this disclosure.

### Detailed description

This disclosure describes quantum solvers for differential problems (comprising a differential equation and one or more data constraints) that combine an effective Hamiltonian approach with spectral methods to address various types of differential equation in a latent space. Execution of such a quantum solver by a hybrid quantum computer results in an encoding of a solution to the differential problem (up to a normalisation factor) in a quantum register of the hybrid quantum computer. This encoded solution may be used to, e.g., evaluate and/or plot the solution; more typically, however, the encoded solution is used as a starting point for further computational steps using the hybrid quantum computer. For instance, the encoded solution may be used to generate samples according to a distribution implicitly defined by the differential problem. Thus, the method could be considered a method for encoding a solution to a differential problem in a quantum register. A further advantage of the method is that, as the solution is encoded in a ground state, the solution is relatively stable over time.

The differential equation can be a linear or a nonlinear differential equation, and can be an ordinary or partial differential equation. The differential equation may be a homogenous differential equation. The differential equation may be a polynomial differential equation, or a polynomial approximation of a differential equation. A polynomial differential equation is a differential equation containing only polynomial terms of the dependent and independent variables.

The data constraints can be, e.g., boundary conditions, initial conditions, final conditions, (internal) fixed points, et cetera. In some embodiments, the data constraints may be based on measurements or observations on a system that is being modelled.

The function basis that is used for the spectral analysis can any suitable function basis, e.g., a Chebyshev basis comprising Chebyshev polynomials of the first and/or second kind. The formulation of quantum models in terms of the Chebyshev basis allows for the latent-space construction of an effective Hamiltonian operator of the underlying differential equations accompanied by given data constraints within a physics-informed SciML paradigm. In other words, it recasts the differential equations into a total energy function minimization problem, which can be mapped on an eigenvalue problem. Consequently, this method does not require variational optimization (although methods using variational optimization are not excluded), but enables finding a ground state (i.e., the zero-energy eigenstate) solution finding through algebraically solving a system of equations.

The choice of the latent-space basis or function basis to construct the quantum model directly affects the formulation of the effective Hamiltonian. If a linearly-independent and purely-real function basis with a purely-real differentiation matrix is used, such as the aforementioned Chebyshev basis, both linear and nonlinear differential equation can be transformed into an eigenvalue problem of a real-valued effective Hamiltonian in a finite-dimensional Hilbert space. This eigenvalue problem may be described by a concise form of the total energy function (as explained below with reference to, e.g., eq. (23), (38), and (46)).

By contrast, when a Fourier basis is utilized, the solution (overlap model) is formulated as a Fourier-series, and the Fourier differentiation matrix is purely imaginary. Due to the complex-valued quantum state, the resulting total energy function is of a complicated form, rendering it difficult to find a ground state in this scenario. Similarly, if Hartley basis is selected, the top-left entry of Hartley differentiation matrix is not a constant, being a differential operator, and thus it does not allow us to easily access to the derivative of the overlap model. Therefore, in the following example, the quantum models will be built based on the Chebyshev expansion. In addition, the x-dependent Chebyshev basis state can be readily prepared from available Chebyshev feature map circuit.

In principle, the ground state may be prepared using any known method, including fully analogue systems and digital solutions such as quantum imaginary-time evolution algorithms based on quantum singular value transformation (QSVT). The solution can be evaluated by determining an overlap between the ground state (representing the solution in latent space) and a feature map associated with the function basis. E.g., if the Chebyshev basis is used, a quantum Chebyshev feature map circuit may be used to encode independent variables. The Chebyshev feature map circuit is described in WO 2025/002636 A1 and C.A. Williams et al., 'Quantum Chebyshev Transform: mapping, embedding, learning and sampling distributions', arXiv:2306.17026 [quant-ph], which are hereby incorporated by reference in its entirety.

In the figures, a few examples are provided showcasing various types of differential equations. Nevertheless, it is understood that the current method is not limited to these examples.

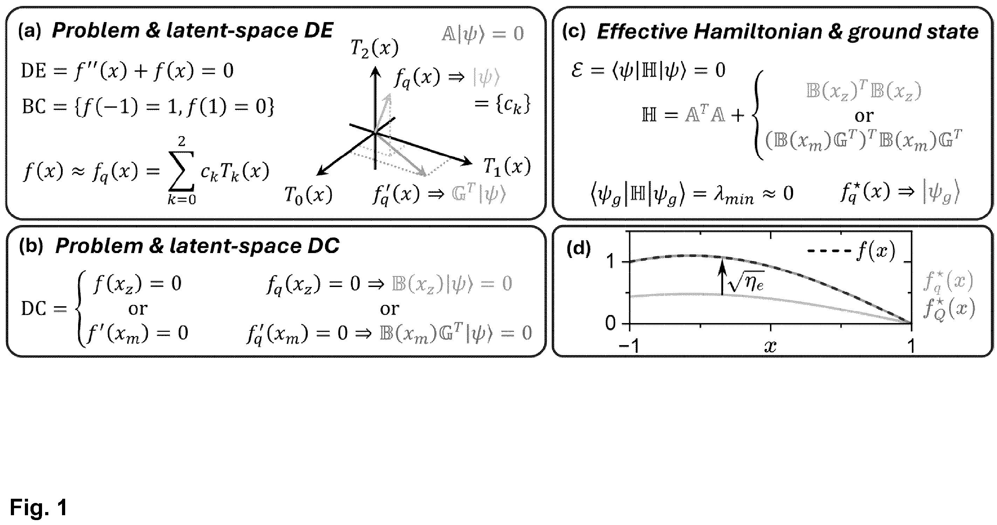

**Fig. 1** is a schematic illustration of a method according to an embodiment. In this particular example, a general solution to a second-order differential equation (DE) is sought, $\frac{{d}^{2} f \left(x\right)}{d {x}^{2}} + f \left(x\right) = 0$. A quantum model *f_{Q}*(*x*) of an (independent) scalar variable *x* is constructed as a sum of three weighted Chebyshev polynomials of the first kind, *Tₖ*(*x*) ≡ cos(k arccos(x)), to approximately represent the unknown solution function *f(x)* by a polynomial of degree 2 (for the purpose of schematic illustration shown in **Fig. 1****,** panel (a)). In other words, the solution has the form $f \left(x\right) \approx {\sum }_{k = 0}^{2} {c}_{k} {T}_{k} \left(x\right)$, or more specifically, a quantum model is constructed such that $f \left(x\right) ≃ {f}_{Q} \left(x\right) = \sqrt{η} \left〈{τ}_{k}\left(x\right)\left|ψ\right.\right〉$, wherein *〈τₖ*(*ₓ*)| represents the Chebyshev basis, $\sqrt{η}$ is a scale factor, and |*ψ*〉 represents a vector of coefficients with respect to a given function basis, in this case the Chebyshev basis.

With this quantum model, each term in the differential equation is associated with a quantum state. For instance, *f*(*x*) ≃ *f_{Q}*(*x*) is mapped to a scaled quantum state, represented as a column vector of three undetermined coefficients, and scaled by a factor of $\sqrt{η}$ in a latent (Chebyshev) space. The derivative term $f " \left(x\right) ≃ {f}_{Q}^{"} \left(x\right)$ is mapped to a transformed quantum state in the same latent space. As will be shown below, a matrix ${G}^{T}$ may be constructed that maps a function in the Chebyshev basis to its derivative, so that ${f}_{Q}^{′} \left(x\right) =$ $\sqrt{η} \left〈{τ}_{k}\left(x\right)\left|{G}^{T}\right|ψ\right〉$. Higher-order derivatives can be obtained by repeated application of such matrix. Thus, the example differential equation may be encoded as $A = {\left({G}^{T}\right)}^{2} + I$, wherein 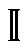 represents the identity matrix: ${f}_{Q}^{"} \left(x\right) + {f}_{Q} \left(x\right) = 0 ⇔ \sqrt{η} \left〈{τ}_{k}\left(x\right)\left|{\left({G}^{T}\right)}^{2}+I\right|ψ\right〉 = 0$

More in general, every term of the differential equation, and each constraint of the differential problem (e.g., boundary/initial conditions) has its own latent representation.

Advantageously, the constraints are chosen such that the function or a derivative thereof is invariant under scaling, which is typically achieved by the function value or derivative being equal to zero (possibly after a function transformation). In the present example, as shown in panel (b), these data constraints may be given by: ${f}_{Q} \left({x}_{z}\right) = 0 ⇔ \sqrt{η} \left〈{τ}_{k}\left({x}_{z}\right)\left|ψ\right.\right〉 = \sqrt{η} \left〈{τ}_{k}\left(x\right)\left|B\left({x}_{z}\right)\right.\left|ψ\right.\right〉 = 0$ and/or ${f}_{Q}^{′} \left({x}_{m}\right) = 0 ⇔ \sqrt{η} \left〈{τ}_{k}\left({x}_{m}\right)\left|{G}^{T}\right.\left|ψ\right.\right〉 = \sqrt{η} \left〈{τ}_{k}\left(x\right)\left|B\left({x}_{m}\right){G}^{T}\right.\left|ψ\right.\right〉 = 0$

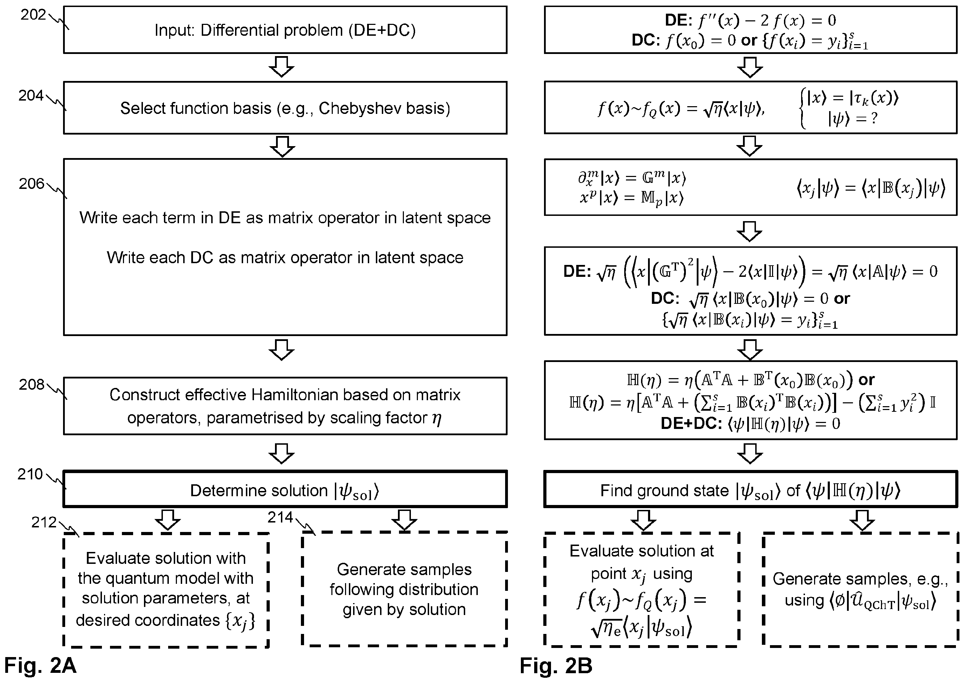

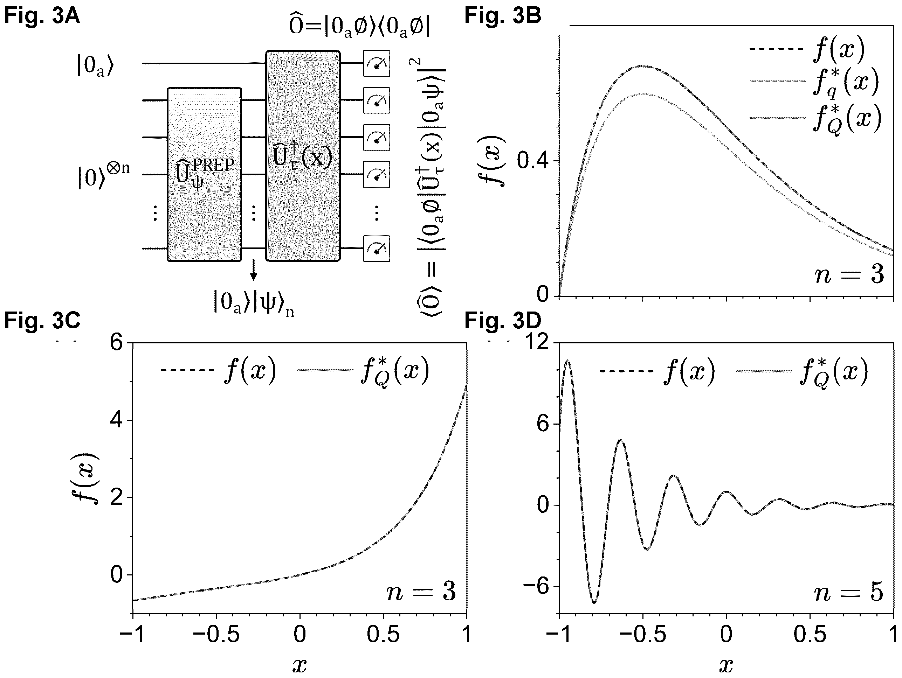

By combining (e.g., summing) these individual latent representations, an effective Hamiltonian operator 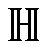 may be constructed such that the solution of the differential problem is a ground state of the Hamiltonian, e.g., $ℍ = {A}^{T} A + {B}^{T} \left({x}_{z}\right) B \left({x}_{z}\right) , ℍ = {A}^{T} A +$ ${\left(B\left({x}_{m}\right){G}^{T}\right)}^{T} B \left({x}_{m}\right) {G}^{T}$, or $ℍ = {A}^{T} A + {B}^{T} \left({x}_{z}\right) B \left({x}_{z}\right) + {\left(B\left({x}_{m}\right){G}^{T}\right)}^{T} B \left({x}_{m}\right) {G}^{T}$. An energy function *ε*(*η*) yielding a scalar energy can then be defined as an expectation value of 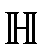 with respect to the (so far) unknown quantum state |*ψ*〉. This can be considered the equivalent representation of the differential problem in the latent space. A more detailed description of the construction of the effective Hamiltonian 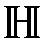 is provided below with reference to **Figs. 2** **and** **3****.**

The minimization of the energy function ε(*η*), and thus the solving of the differential problem, can be treated as a machine-learning task by either varying three independent parameters {*cₖ*} for *k* = 0, 1, 2, related to each component of |*ψ*〉. Alternatively, the eigenproperties of the effective Hamiltonian operator can be explored. The effective Hamiltonian operator may be constructed as a function of a single variable *η* > 0. An advantage of the latter approach is that it does not require a variational Ansatz, thus avoiding common training issues (such as barren plateaus and local minima trapping) that are generally applicable to all variational protocols.

In general, the effective Hamiltonian operator 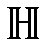 can be represented by a real symmetric matrix with distinct real eigenvalues and mutually orthonormal eigenvectors. In the eigen-space representation, *ε*(*η*) can be expressed as a sum of three squared projection length ${d}_{k}^{2}$ weighted by the eigenvalue *λₖ* associated with eigenvector *qₖ*. It is known that (i) the diagonal entries of Λ control the definiteness of *ε*(*η*) and that (ii) the total energy is always non-negative, and by construction equal to zero for the solution to the differential problem. These facts imply that $ℍ \left(η\right)$ is a positive-semidefinite matrix with exactly one eigenvalue equal to 0 for a certain value *η* ∈ {*ηᵢ*} = argmin*_{η} ε*(*η*) with *i =* 0, 1, 2. In particular, a positive-semidefinite $ℍ \left(η\right)$ with one eigenvalue being zero is achieved when *η* = *η* (corresponding to *λ* = *λ*ₘᵢₙ), where *η*ₘₐₓ is the largest value in {*ηᵢ*}. Thus, the energy minimization leads to the solution |*ψ*ₛₒₗ〉 (up to normalisation), which is the lowest-energy eigenstate of the (effective) Hamiltonian 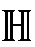 . The normalisation factor or scaling factor $\sqrt{η}$ may be obtained from a non-zero data constraint (in this example, boundary condition f(-1) = 1).

Thus, in an exemplary embodiment, the method may comprise the steps of: formulating the differential equation and, optionally, the data constraints as overlap models in a quantum Chebyshev space; summing the latent contributions to form an effective Hamiltonian; preparing a ground state of the effective Hamiltonian, e.g., by thermalization and/or QSVT; and applying a Chebyshev feature map to evaluate the overlap model for a given input value.

**Fig. 2A** is a flow chart of a method according to an embodiment and **Fig. 2B** provides an explicit example. In a first step **202,** a differential problem is obtained (e.g., received or generated) as input. The differential problem comprises a differential equation DE and zero or more data constraints DC, e.g., boundary conditions, an initial value, measurement data, et cetera. Typically, the number of data constraints should be equal to or larger than the number of degrees of freedom of the differential equation minus one, but the number may be (substantially) higher, e.g., when fitting a function to measurements.

In the current example, the differential equation reads $f " \left(x\right) - 2 f \left(x\right) = 0 .$

Two different kinds of data constraints are considered: (i) a homogeneous data constraint $f \left({x}_{o}\right) = 0 ,$

and (ii), a set of s inhomogeneous data constraints: ${\left\{f\left({x}_{i}\right)={y}_{i}\right\}}_{i = 1}^{s}$

This differential problem can be solved analytically, and its solution is (for the homogeneous case) $f \left(x\right) = C sin \left(\sqrt{2}\left(x-{x}_{0}\right)\right) / sin \left(\sqrt{2} {x}_{0}\right) ,$ with C a scaling factor.

A step **204** comprises selecting a function basis. The function basis may be used to express the solution as a vector of coefficients with respect to that basis. The function basis may be selected based on the differential problem. In some cases, it may be necessary to rescale the independent variable, as is known in the art. A useful function basis, especially for polynomial, real-valued differential problems, is the Chebyshev basis. In general, a system with *n* encoding qubits gives access to *N* = 2*ⁿ* basis functions.

A Chebyshev polynomial of the first kind of order *k* may be defined as: ${T}_{k} \left(cos θ\right) = cos \left(k θ\right) or {T}_{k} \left(x\right) = cos \left(k arccos x\right) , x ∈ \left[-1,1\right]$ (1)

A Chebyshev polynomial of the second kind of order *k* may be defined as: ${U}_{k} \left(cos θ\right) = \frac{sin \left(\left(k+1\right)θ\right)}{sin θ} , x ∈ \left[-1,1\right]$ (2)

Depending on the computational problem being solved, Chebyshev polynomial of the first or second kind, or a combination thereof, may be best suited to encode the solution function. The corresponding state |*x*〉 is $\left|x\right〉 = \left|τ\left(x\right)\right〉 = \frac{1}{\sqrt{N}} {T}_{0} \left(x\right) \left|0\right〉 + \frac{\sqrt{2}}{\sqrt{N}} {\sum }_{k = 1}^{N - 1} {T}_{k} \left(x\right) \left|k\right〉$ (3)

The solution is then obtained as a vector of coefficients with respect to the selected function basis. $f \left(x\right) ∼ {\sum }_{k = 0}^{N - 1} {c}_{k} {T}_{k} \left(x\right)$

The problem can then be recast into finding a vector |*ψ*〉 = [*c*₀, *c₁*, *... , c*_{*N-*1}]^{T} such that${f}_{Q} \left(x\right) = \sqrt{η} \left〈x\left|ψ\right.\right〉 .$ . is a solution to the differential problem. This vector |*ψ*〉 is x-independent.

For the current example, it is assumed a two-qubit system is used, and that the function basis comprises the zeroth through third Chebyshev polynomials of the first kind: $\begin{matrix}{T}_{0} \left(x\right) = 1 \\ {T}_{1} \left(x\right) = x \\ {T}_{2} \left(x\right) = 2 {x}^{2} - 1 \\ {T}_{3} \left(x\right) = 4 {x}^{3} - 3 x\end{matrix} , \left|τ\left(x\right)\right〉 = \frac{\sqrt{2}}{\sqrt{N}} \left[\begin{matrix}1 / \sqrt{\left(2\right)} \\ x \\ 2 {x}^{2} - 1 \\ 4 {x}^{3} - 3 x\end{matrix}\right]$

Based on the selected model, a step **206** comprises writing each term of the differential equation as a matrix operator in a latent space.

The derivative of a polynomial is a lower-order polynomial; hence, when a polynomial basis is used, the derivative can be written on the same polynomial basis. $\frac{d}{d x} \left|τ\left(x\right)\right〉 = \frac{\sqrt{2}}{\sqrt{N}} \left[\begin{matrix}0 \\ 1 \\ 4 x \\ 12 {x}^{2} - 3\end{matrix}\right] = G \left|τ\left(x\right)\right〉 , G = \left(\begin{matrix}0 & 0 & 0 & 0 \\ \sqrt{2} & 0 & 0 & 0 \\ 0 & 4 & 0 & 0 \\ 3 \sqrt{2} & 0 & 6 & 0\end{matrix}\right)$ Higher-order derivatives can be obtained by repeatedly applying 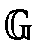 : $\frac{{d}^{2}}{d {x}^{2}} \left|τ\left(x\right)\right〉 = \frac{\sqrt{2}}{\sqrt{N}} \left[\begin{matrix}0 \\ 0 \\ 4 \\ 24 x\end{matrix}\right] = {G}^{2} \left|τ\left(x\right)\right〉 , {G}^{2} = \left(\begin{matrix}0 & 0 & 0 & 0 \\ 0 & 0 & 0 & 0 \\ 4 \sqrt{2} & 0 & 0 & 0 \\ 0 & 24 & 0 & 0\end{matrix}\right)$

And hence, the differential equation can be written as: $f " \left(x\right) - 2 f \left(x\right) = 0 \to \frac{{d}^{2}}{d {x}^{2}} \sqrt{η} \left〈τ\left(x\right)\left|ψ\right.\right〉 - 2 \sqrt{η} \left〈τ\left(x\right)\left|ψ\right.\right〉 = 0$ $\sqrt{η} \left〈τ\left(x\right)\right| {\left({G}^{T}\right)}^{2} - 2 I \left|ψ\right〉 = 0$ $\sqrt{η} \left〈τ\left(x\right)\right| A \left|ψ\right〉 = 0$

With $A = {\left({G}^{T}\right)}^{2} - 2 I$, where 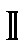 is the identity matrix. As will be shown in more detail below, matrix operations can also be defined for several other operations, such as multiplication by *x^{p}*; as this increase the maximum order of the polynomial basis, one or more additional qubits may be used to increase the set of available basis functions.

As all x-dependency is contained in |τ(*x*)〉*,* and the differential equation must be true for all *x*, the differential equation DE can be written as: $\left〈ψ\right| η {\left({\left({G}^{T}\right)}^{2}-2 I\right)}^{T} \left({\left({G}^{T}\right)}^{2}-2 I\right) \left|ψ\right〉 = η \left〈ψ\right| {A}^{T} A \left|ψ\right〉 = 0$

This equation is automatically obeyed when |*ψ*〉 is an eigenvector of 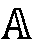 with eigenvalue zero.

For the data constraints (both the homogeneous and inhomogeneous ones), the function at independent variable value *xⱼ* is given by: $f \left({x}_{j}\right) ∼ {\sum }_{k = 0}^{N - 1} {c}_{k} {T}_{k} \left({x}_{j}\right) = {\sum }_{k = 0}^{N - 1} {c}_{k} {T}_{k} \left({x}_{j}\right) {T}_{0} \left(x\right)$

(using *T*₀(*x*) = 1) and with $\left〈τ\left({x}_{j}\right)\right| = \left〈τ\left(x\right)\right| B \left({x}_{j}\right) , B \left({x}_{j}\right) = \left(\begin{matrix}{τ}_{0} \left({x}_{j}\right) & {τ}_{1} \left({x}_{j}\right) & {τ}_{2} \left({x}_{j}\right) & {τ}_{3} \left({x}_{j}\right) \\ 0 & 0 & 0 & 0 \\ 0 & 0 & 0 & 0 \\ 0 & 0 & 0 & 0\end{matrix}\right)$

this can be written as $f \left({x}_{j}\right) = {y}_{j} \to \sqrt{η} \left〈τ\left({x}_{j}\right)\left|ψ\right.\right〉 = {y}_{j} \to \sqrt{η} \left〈τ\left(x\right)\left|B\left({x}_{j}\right)\left|ψ\right.\right.\right〉 = {y}_{j}$

where in the homogeneous case, *y*₀ = 0. From this, it follows that: $\left〈ψ\right| η {B}^{T} \left({x}_{j}\right) B \left({x}_{j}\right) \left|ψ\right〉 = {y}_{j}^{2} \to \left〈ψ\right| η {B}^{T} \left({x}_{j}\right) B \left({x}_{j}\right) - {y}_{j}^{2} I \left|ψ\right〉 = 0$ using 〈*ψ*|*ψ*〉 = 1 in the last step.

A step **208** comprises constructing an effective Hamiltonian ${ℍ}_{eff} \left(η\right)$ based on the matrix operators. The effective Hamiltonian may be parametrised by a scaling factor *η*. In some embodiments, the effective Hamiltonian may comprise distinct weights for the contribution of the differential equation and the data constraint(s). However, in the current example, all weights are identical.

Thus, taking the above matrix operators together (in this example, with equal weights), leads to: $\left〈ψ\left|η\left({A}^{T}A+{B}^{T}\left({x}_{0}\right) B\left({x}_{0}\right)\right)\right|ψ\right〉 = 0$

for the homogenous case and to: $\left〈ψ\left|η\left({A}^{T}A+{\sum }_{i = 1}^{s} {B}^{T} \left({x}_{i}\right) B \left({x}_{i}\right)\right)-\left({\sum }_{i = 1}^{s} {y}_{i}^{2}\right)I\right|ψ\right〉 = 0$

for the inhomogeneous case. In either case, this can be written as: $\left〈ψ\left|ℍ\left(η\right)\right|ψ\right〉 = 0$

Which is solved by a zero-eigenvalue eigenstate of effective Hamiltonian 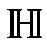 .

It is noted that by defining a reduced Hamiltonian ${ℍ}^{˜}$ as ${ℍ}^{˜} = \left({A}^{T}A+{\sum }_{i = 1}^{s} {B}^{T} \left({x}_{i}\right) B \left({x}_{i}\right)\right) ,$

the inhomogeneous problem can be redefined as finding the (unique) eigenvector |*ψ*ₛₒₗ〉 with eigenvalue zero of the effective Hamiltonian ${ℍ}_{eff} = η {ℍ}^{˜} - \left({\sum }_{i = 1}^{s} {y}_{i}^{2}\right) I$. This is equivalent to finding a normalised eigenvector *v*ₛₒₗ with eigenvalue *λ*ₛₒₗ of W such that |*ψ*ₛₒₗ〉 = *v*ₛₒₗ and $η {λ}_{sol} - {\sum }_{i = 1}^{s} {y}_{i}^{2} = 0$*.*

A subsequent step (not shown) comprises receiving or determining one or more quantum circuits defining operations of the effective Hamiltonian 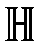 .

A step 210 comprises determining an eigenvector of the effective Hamiltonian $ℍ \left({η}_{max}\right)$ using a quantum processor, e.g., by determining the ground state of the effective Hamiltonian. This is discussed in more detail below. The solution in latent space is then given by $\sqrt{η} \left|{ψ}_{sol}\right〉$, and the general solution by $\sqrt{η} \left〈\left.x\right|{ψ}_{sol}\right〉$. If necessary, the scaling factor $\sqrt{η}$ may be determined by evaluating the function for a known point (e.g., a non-zero data constraint).

An optional step **212** comprises evaluating the determined solution, using the quantum model solution, at one or more input points. In particular, a known feature map may be used to encode |*xⱼ*〉; for example, |τ(*xⱼ*)〉 *=* 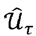 (x*ⱼ*)|Ø〉 wherein 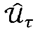 (*x*) is the Chebyshev feature map. Thus, $f \left({x}_{j}\right) ∼ {f}_{Q} \left({x}_{j}\right) = \sqrt{η} \left〈∅\left|{\hat{U}}_{τ}^{†}\left({x}_{j}\right)\right|{ψ}_{sol}\right〉 .$

Additionally or alternatively, an optional step **214** comprises generating samples using the encoded solution, e.g., by applying a quantum transform associated with the used feature map (e.g., a quantum Chebyshev transform for the current example) and performing a projective measurement.

Similarly, a function evaluation of a derivative of the target function can be obtained by computing an overlap with a derivative Chebyshev feature map.

As noted before, once the solution has been encoded as a ground state of the effective Hamiltonian, it may be used for various kinds of computations, not limited to mere function evaluations. For example, the solution may be used to generate random samples that follow a distribution encoded by the solution, as input for a quantum machine learning algorithm (e.g., a quantum neural network, QNN) such as a classification algorithm, and so on.

It is noted that in some cases, the ground state of the effective Hamiltonian may not correspond to a solution of the differential problem. For example, the data constraints essentially appear in squared form, so that sign information may be lost in the process. In such cases, the method may further comprise adding additional data constraints (and/or replacing the data constraints already used), and repeating steps **206-210.**

More in general, the following observations may be made. Although in the following, reference is made to the Chebyshev basis using Chebyshev polynomials of the first kind, the same or similar considerations apply to other function bases. Depending on the specific context, the function basis may fulfil one or more of the following requirements: real-valued, comprising a constant function, complete, orthogonal, and/or orthonormal.

Similarly, in the following *x* is used as a general independent variable, which can be either one- or multidimensional. Some specificities related to multidimensional variables (and/or several one-dimensional variables) are discussed in more detail further below.

Since the basis functions *Tₖ*(*x*) satisfy a discrete orthogonality condition and form a complete orthogonal basis over the interval [-1, 1], any arbitrary function that is smooth and continuous on the same interval can be expressed as $f \left(x\right) = {\sum }_{k = 0}^{∞} {c}_{k} {T}_{k} \left(x\right)$, with *cₖ* = $\frac{2}{π} {\int }_{- 1}^{1} f \left(x\right) {T}_{k} \left(x\right) \frac{d x}{\sqrt{1 - {x}^{2}}}$ *for k >* 1 and ${c}_{0} = \frac{1}{π} {\int }_{- 1}^{1} f \left(x\right) \frac{d x}{\sqrt{1 - {x}^{2}}}$. This is known as a Chebyshev expansion. In practical applications, a good approximation can generally be obtained using only a finite set of *k < N* basis functions. To prevent overfitting, it may be beneficial if *N* is not too large. In practice, it has been found that for many applications, good results are obtained if *N* is chosen as, e.g., 16, 32, or 64, which generally requires, respectively, 4, 5, or 6 qubits for encoding the coefficients; thus, an economical use may be made of the available computational resources. Functions or problems that are defined on a different (preferably compact) domain, can be scaled to the interval [-1,1].

Similar to the Chebyshev expansion, the quantum model *f_{Q}*(*x*) is built with finite *n* qubits as a state overlap, represented by the scaled Hermitian inner product of an *x-*dependent Chebyshev basis state |τ(*x*)〉*ₙ* and a quantum state |*ψ*〉*ₙ* (generally consisting of unknown coefficients to be determined), living in *N* = 2*ⁿ* bra and ket spaces, respectively, given by ${f}_{Q} \left(x\right) = \sqrt{η} {\left〈τ\left(x\right)\right|}_{n} {\left|ψ\right〉}_{n} , subject to {\left〈ψ\right|}_{n} {\left|ψ\right〉}_{n} = 1 ,$ (4)

where $\sqrt{η}$ denotes a scaling factor, *η* > 0. The quantum model may also be referred to as an overlap model, as a function evaluation typically involves an overlap of two quantum states, one quantum state representing the function coefficients (*x*-independent) and the other quantum state representing the function basis for a given value of the independent variable (*x*-dependent).

The purely real Chebyshev basis state reads $\left|x\right〉 = \left|τ\left(x\right)\right〉 = \frac{1}{\sqrt{N}} {T}_{0} \left(x\right) \left|0\right〉 + \frac{\sqrt{2}}{\sqrt{N}} {\sum }_{k = 1}^{N - 1} {T}_{k} \left(x\right) \left|k\right〉$ (5)

where |*k*〉, *k = 0, ...,N -* 1 is the *n*-qubit computational basis. The Chebyshev basis states in eq. (5) are orthonormal when evaluated at the so-called Chebyshev nodes *x̅ⱼ* := cos(π(*j* + *½*)/*N*) ∈ (-1, 1), defined as the roots or zeros of *T_{N}*(*x*), and also when evaluated at the Chebyshev extrema ${{x}^{˜}}_{j} : = - cos \left(j\frac{π}{N}\right) ∈ \left[-1,1\right]$. These Chebyshev states ${\left\{\left|τ\left({\overline{x}}_{j}\right)\right〉\right\}}_{j = 0}^{N - 1}$ or ${\left\{\left|τ\left({{x}^{˜}}_{j}\right)\right〉\right\}}_{j = 0}^{N - 1}$ form an orthonormal basis set.

Eq. (4) indicates that the unknown |*ψ*〉*ₙ* is naturally separable from the *x*-dependent basis, i.e., all *x*-dependency of *f_{Q}*(*x*) is contained in the function basis and the coefficients vector |*ψ*〉 is *x*-independent. Therefore, the quantum model *f_{Q}*(*x*) can be symbolically differentiated with respect to *x* via a Chebyshev differentiation matrix, ${G}_{n}$, as follows: ${f}_{Q}^{′} \left(x\right) = \frac{d {f}_{Q} \left(x\right)}{d x} = \sqrt{η} {\left〈τ\left(x\right)\left|G n T n\right|ψ\right〉}_{n} ,$ (6)

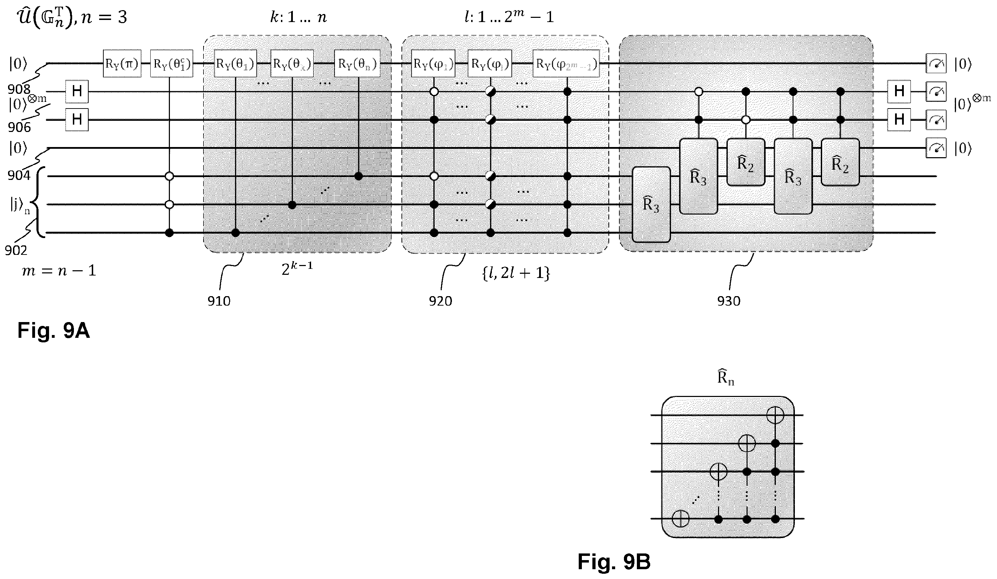

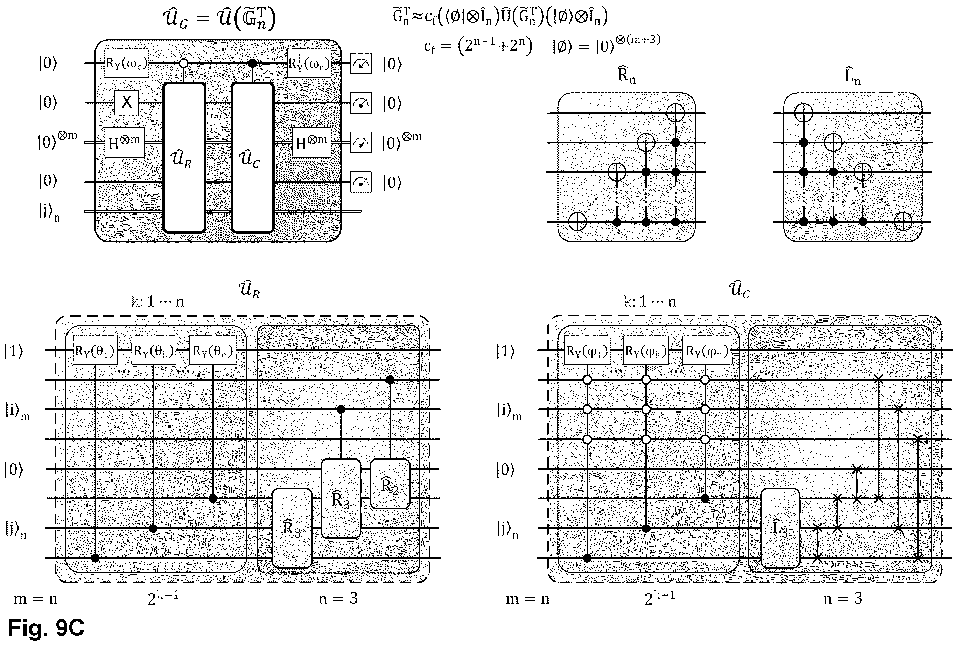

where the fact that $d {\left|τ\left(x\right)\right〉}_{n} / d x = {G}_{n} {\left|τ\left(x\right)\right〉}_{n}$ is employed and ${G}_{n}^{T}$ is a constant upper triangular matrix with T in the superscript denoting a matrix transpose. An example of a quantum circuit for implementing derivative operator ${G}_{n}^{T}$ is shown in **Fig. 9****.** The double-struck capital letter (also called blackboard bold) is utilized to signify a non-unitary matrix throughout the application. This constant differentiation operator allows easy access to the *m*^{th}-order derivative of the quantum model by matrix multiplication of ${G}_{n}^{T}$ m times, i.e.: ${f}_{Q}^{\left(m\right)} \left(x\right) = \frac{{d}^{m} {f}_{Q} \left(x\right)}{d {x}^{m}} = \sqrt{η} {\left〈τ\left(x\right)\left|\left({G}_{n}^{T}\right) m n\right|ψ\right〉}_{n} ,$ (7) where ${f}_{Q}^{\left(m\right)} \left(x\right)$ denotes the *m*^{th} derivative of *f_{Q}*(*x*).

The Chebyshev polynomials and their derivatives are related by: ${T}_{k}^{′} \left(x\right) = k {U}_{k - 1} \left(x\right)$ (8) where *Uₖ*(*x*) denotes a Chebyshev polynomial of the second kind of order *k.* This can then be further expanded to: ${T}_{0}^{′} \left(x\right) = 0$ (9) ${T}_{2 k}^{′} \left(x\right) = 4 k {\sum }_{m = 1}^{k} {T}_{2 m - 1} \left(x\right)$ (10) ${T}_{2 k + 1}^{′} \left(x\right) = \left(4k+2\right) {\sum }_{m = 1}^{k} {T}_{2 m} \left(x\right) + \left(2k+1\right) {T}_{0} \left(x\right)$ (11) This allows the derivation of the matrix elements for ${G}_{n}$. This also means that the derivative of a Chebyshev polynomial is a linear combination of lower order Chebyshev polynomials. Therefore, an effective operator 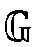 can be extracted such that: $\left|τ′\left(x\right)\right〉 = G \left|τ\left(x\right)\right〉$ (12) (where the subscript *n* has been dropped).

If one wants to evaluate a derivative of the solution function, the operator 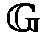 may be used to encode a derivate Chebyshev feature map. The operator 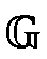 is non-unitary, but can be implemented using known techniques to implement non-unitary operators, such as a linear combination of unitaries or embedding in a higher-order space.

In addition, using the product-to-sum identity of Chebyshev polynomials, it can be shown that the product of a variable *x* to the *p*^{th} power and 〈*τ*(*x*)|*ₙ* equates to the product of 〈τ(*x*)|_{*n*+1} and an x-independent matrix ${M}_{{x}^{p}}$: ${x}^{p} {\left〈τ\left(x\right)\right|}_{n} = {\left〈τ\left(x\right)\right|}_{n + 1} {M}_{n , p} ,$ (13) with the integer *p* ∈ [0, *N*]. This requires an additional qubit; i.e., *〈τ*(*x*)|*ₙ* denotes an n-qubit basis, and 〈*τ*(*x*)|*ₙ* denotes an (*n* + 1)-qubit basis. If higher powers are required (*p* > *N*), more additional qubits may be used; each additional qubit doubles the set of basis functions. When necessary, differential equations that include a non-polynomial function of the independent variable may be approximated using, e.g., a Taylor series expansion or other suitable polynomial expansion of the non-polynomial function, or, in some cases, they can be converted into a polynomial differential equation using a suitable coordinate transformation.

It is generally desirable to encode all elements of the differential problem (e.g., terms of the differential equation, and data constraints) with respect to the same basis. Thus, if the (*n* + 1)-qubit basis 〈*τ*(*x*)|*ₙ* is used for some elements, other elements of the differential problem may be defined with respect to the same basis. To that end, projections matrices ${M}_{n , 0}$ and ${ℕ}_{n}$ may be defined, such that: ${\left〈τ\left(x\right)\right|}_{n} = {\left〈τ\left(x\right)\right|}_{n + 1} {M}_{n , 0} ,$ (14) ${\left〈τ\left(x\right)\right|}_{n} ⊗ {\left〈τ\left(x\right)\right|}_{n} = {\left〈τ\left(x\right)\right|}_{n + 1} {ℕ}_{n} .$ (15)

These non-square projection/embedding matrices are unique constant matrices that allow for the projection of the n-qubit quantum state to a higher dimensional Chebyshev basis (or vice versa). Such projection is useful because , 〈*τ*(*x*)|*ₙ* and *〈τ*(*x*)|_{*n*+1} are linearly-independent basis sets, while both *x^{p}* 〈*τ*(*x*)|*ₙ* and (〈*τ*(*x*)|*ₙ* ⊗ 〈τ(*x*)|*ₙ*) are not linearly-independent basis sets.

The data constraints can be included in the same formalism by formulating them as state overlaps with the basis functions, to obtain their latent representations. Usually, the term "boundary conditions" is used for constraints imposed at one or more boundaries of the problem domain (e.g., *x*₀ = -1 and *x*₁ = 1), whereas the more general term "data constraints" also covers internal constraints. Such constraints can be written as, for example: ${f}_{Q} \left({x}_{0}\right) = f \left({x}_{0}\right) \to \sqrt{η} {\left〈τ\left(x\right)\right|}_{n} B \left({x}_{0}\right) {\left|ψ\right〉}_{n} = {r}_{{x}_{0}} {\left〈τ\left(x\right)\right|}_{n} {\left|{c}_{r}\right〉}_{n} ,$ (16) ${f}_{Q}^{′} \left({x}_{1}\right) = f ′ \left({x}_{1}\right) \to \sqrt{η} {\left〈τ\left(x\right)\right|}_{n} B \left({x}_{1}\right) {G}_{n}^{T} {\left|ψ\right〉}_{n} = {s}_{{x}_{1}} {\left〈τ\left(x\right)\right|}_{n} {\left|{c}_{s}\right〉}_{n} ,$ (17) where $B \left({x}_{0}\right)$ and $B \left({x}_{1}\right)$ are obtained from ${\left〈τ\left({x}_{0}\right)\right|}_{n} = {\left〈τ\left(x\right)\right|}_{n} B \left({x}_{0}\right)$ and 〈τ(*x*₁)|*ₙ* = ${\left〈τ\left(x\right)\right|}_{n} B \left({x}_{1}\right)$, respectively. This leverages the fact that the zeroth-order Chebyshev polynomial is just a constant function, and consequently, $\left〈τ\left({x}_{j}\right)\right| {M}_{0} = \left〈τ\left({x}_{j}\right)\right| {M}_{0} {τ}_{0} \left(x\right) =$ $\left〈τ\left({x}_{j}\right)\right| B \left({x}_{j}\right)$ where $B \left({x}_{j}\right)$ is an x-dependent (data-related) matrix with nonzero elements only for the first row.

It is useful to distinguish between "invariant" or "homogeneous" constraints, and "regular" or "inhomogeneous" constraints. The former are constraints of the form ${f}_{Q}^{\left(m\right)} \left({x}_{z}\right) = 0 ,$ (in which case *r*_{*x*₀} and *s*_{*x*₁} as used in eqs. (16) and (17), respectively, are equal to 0), whereas the latter are of the form ${f}_{Q}^{\left(m\right)} \left({x}_{s}\right) = {y}_{0} \neq 0$ (and hence *r*_{x₀} ≠ 0 and *s*_{*x*₁} ≠ 0). Here, *f*^{(*m*)}(*x*) represents the *m*^{th} derivative of *f*(*x*).

In some cases, a regular constraint may be converted into an invariant constraint by a suitable transformation, e.g., ${f}_{Q} \left({x}_{s}\right) = {y}_{0} ⇒ {{f}^{˜}}_{Q} \left({x}_{s}\right) = 0 with {{f}^{˜}}_{Q} \left(x\right) : = {f}_{Q} \left(x\right) - {y}_{0} ,$ et cetera. In general, regular data constraints can be used to determine a normalisation factor or scale of the (inherently normalised) solution in the latent space.

Additionally, regular data constraints can be used to encode polynomials of the independent variable, as can be seen from the following equations: ${f}_{Q}^{\left(m\right)} \left({x}_{s}\right) = {y}_{0} ⇒ \frac{{f}_{Q}^{\left(m\right)} \left({x}_{s}\right)}{{y}_{0}} = 1$ (18) and $\frac{{f}_{Q}^{\left(m\right)} \left({x}_{s}\right)}{{y}_{0}} = \sqrt{η} {\left〈τ\left(x\right)\right|}_{n} \frac{B \left({x}_{s}\right)}{{y}_{0}} {\left({G}_{n}^{T}\right)}^{m} {\left|ψ\right〉}_{n}$ (19) so that ${x}^{p} = \sqrt{η} {\left〈τ\left(x\right)\right|}_{n} {M}_{p} \frac{B \left({x}_{s}\right)}{{y}_{0}} {\left({G}_{n}^{T}\right)}^{m} {\left|ψ\right〉}_{n} .$ (20) Non-polynomial functions may be approximated using a polynomial expansion, e.g., using a Maclaurin series: $g \left(x\right) \approx {\sum }_{p = 0}^{N - 1} {c}_{p} {x}^{p} = \sqrt{η} {\left〈τ\left(x\right)\right|}_{n} \left({\sum }_{p = 0}^{N - 1} {c}_{p} {M}_{p}\right) \frac{B \left({x}_{s}\right)}{{y}_{0}} {\left({G}_{n}^{T}\right)}^{m} {\left|ψ\right〉}_{n} .$ (21) In the following, ${D}_{n}^{\left(m\right)} \left({x}_{s}\right) = \frac{{B}_{n} \left({x}_{s}\right)}{{f}_{Q}^{\left(m\right)} \left({x}_{s}\right)} {\left({G}_{n}^{T}\right)}^{m}$ will be used for notational simplicity.

Thus, both a function value *f*(*x*₀) and a derivative function value *f'(x₁)* can be expressed as their respective state overlaps in the same basis as well and the corresponding weighting factors r_{x₀} and *s*_{*x*₁} are then computed, subject to 〈c*ᵣ*|*ₙ*|*cᵣ〉ₙ* = *〈cₛ*|*ₙ*|*cₛ*〉*ₙ* = 1. |*cᵣ*〉*ₙ =* |*cₛ*〉*ₙ* = |Ø〉 always holds in the case of constant boundary conditions (*f*(*x*₀) = *y*₀ and $f ′ \left({x}_{1}\right) = {m}_{1} ∈ \left.ℝ\right)$. Eqs. (16) and (17) imply that available data can be supplied in the form of boundary conditions and serve as the physics-informed constraints, playing a crucial role to guide the model toward the desired outcome. Unlike boundary/initial conditions, data constraints are not necessarily restricted to be located at the boundaries (e.g., *x*₂ and *x*₃ ∈ [-1,1]).

Therefore, *BC =* {*f*(*x*₀), *f'*(*x*₁)} may be regarded as regular boundary conditions used to determine a unique analytical solution to a physical problem and *DC = {f(x₂), f'*(*x*₃)} as given data-related constraints used to minimize the total energy, which make two situations distinguishable by symbols. Note that the elements of *DC* can be exactly the same as those of *BC,* partially inclusive of boundary terms *(DC =* {*f*(*x*₀), *f*(*x*₂), *f'*(*x*₃)}) or exclusive when the boundary values are unavailable in reality. Both boundary and initial conditions can be incorporated into the effective Hamiltonian as part of data constraints to capture the local behaviour of the solution to DEs.

As $B \left({x}_{j}\right)$ is a sparse matrix with non-zero elements in its first row, it can be easily implemented by block encoding techniques such as Fast Approximate Block-Encoding algorithm (FABLE). With FABLE, the implementation of unitary 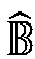 , a block encoding of ${\hat{B}}_{n} \left({x}_{j}\right) = {B}_{n} \left({x}_{j}\right) / \left‖{B}_{n}\left({x}_{j}\right)\right‖$ requires 2*n* + 1 qubits (including *n* + 1 ancilla qubits), which typically contains 2*n* Hadamard gates and *n* SWAP gates in general and 2^{2*n*} R_{Y} and 2^{2*n*} CNOT gates at most. The same holds for (right-side) products of 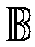 , such as $\frac{B \left({x}_{s}\right)}{{y}_{0}} {\left({G}_{n}^{T}\right)}^{m}$.

**Fig. 3A-D** depict a solution of a differential problem comprising an ordinary differential equations with constant coefficients using a method according to an embodiment.

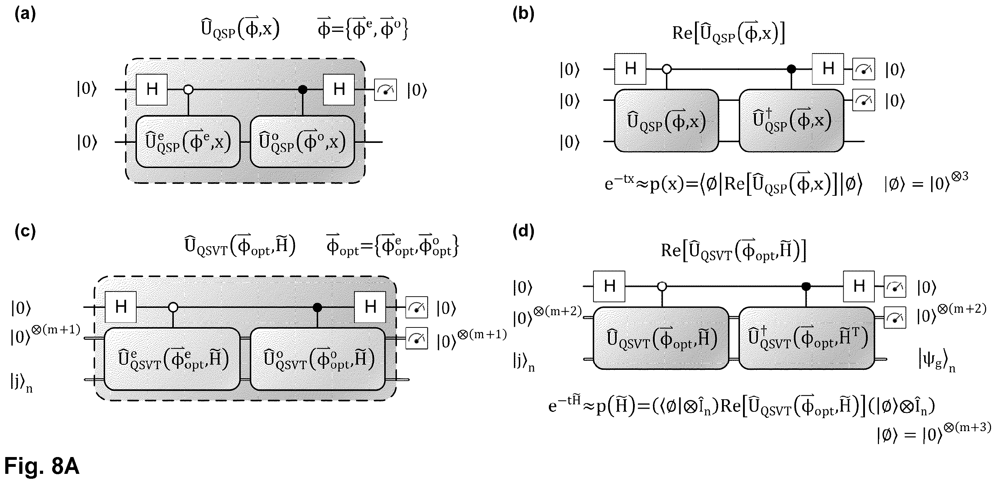

In particular, **Fig. 3A** schematically shows a circuit for evaluation of a function value for a given input value *x*. The circuit is initialized with a zero-product state |Ø〉 = |0〉^{⊗*n*} and a state preparation circuit ${\hat{U}}_{ψ}^{PREP}$ is responsible for preparing the desired state of a problem of interest, followed by an inverse Chebyshev feature map ${\hat{U}}_{τ}^{†} \left(x\right)$ to obtain the overlap probabilities in the Chebyshev basis. In this example, a generic preparatory circuit ${\hat{U}}_{ψ}^{PREP}$ is used to prepare the ground state of the effective Hamiltonian, represented by |0*ₐ*〉 |*ψ*〉*ₙ.* Some examples of such preparatory circuits (based, e.g., on quantum imaginary-time evolution) are discussed in more detail below with reference to **Fig. 8A-C****.** This preparatory circuit is followed by an inverse Chebyshev feature map ${\hat{U}}_{τ}^{†} \left(x\right)$ to perform an overlap measurement with respect to the continuous variable *x,* given by 〈0*ₐτ*(*x*)|0*ₐψ*〉.

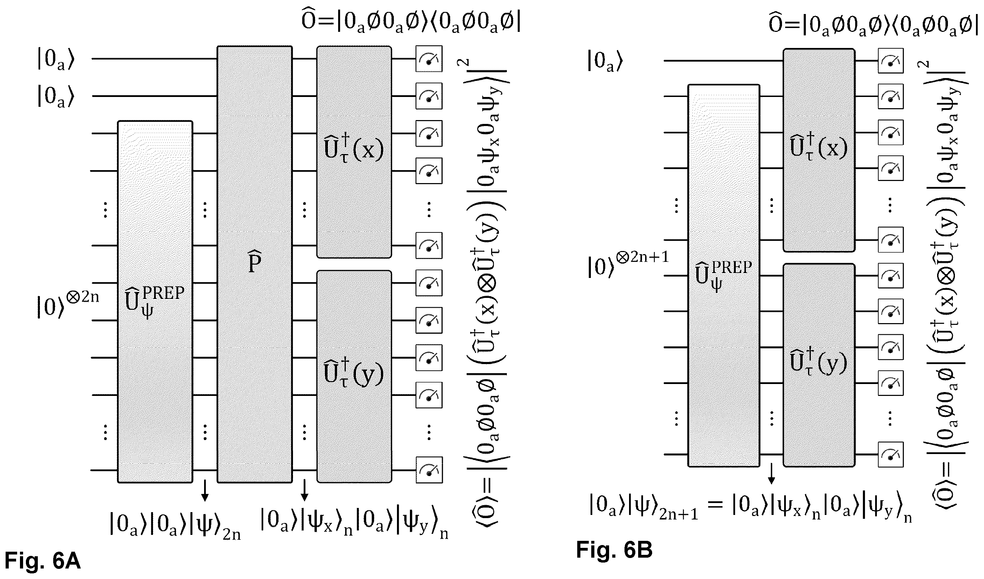

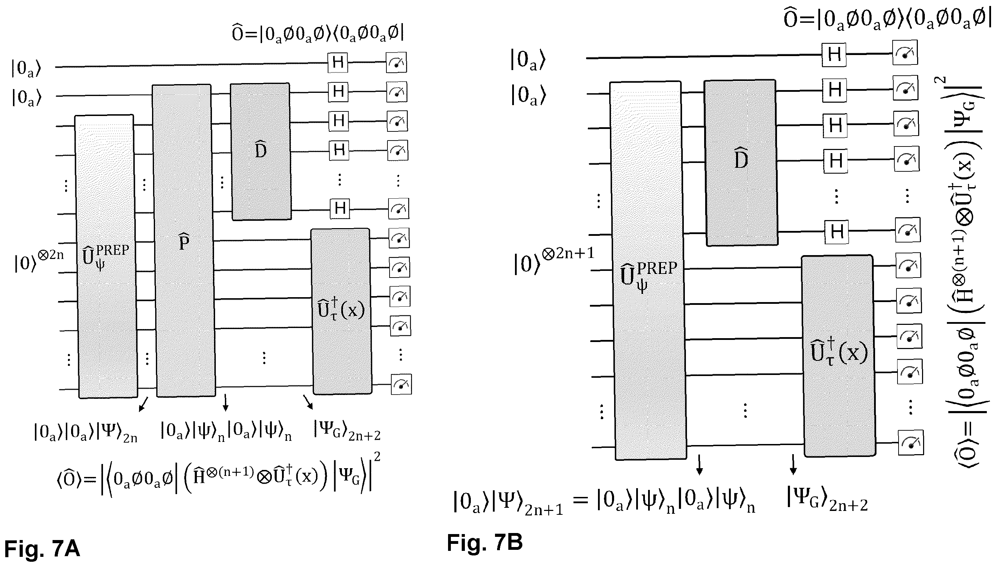

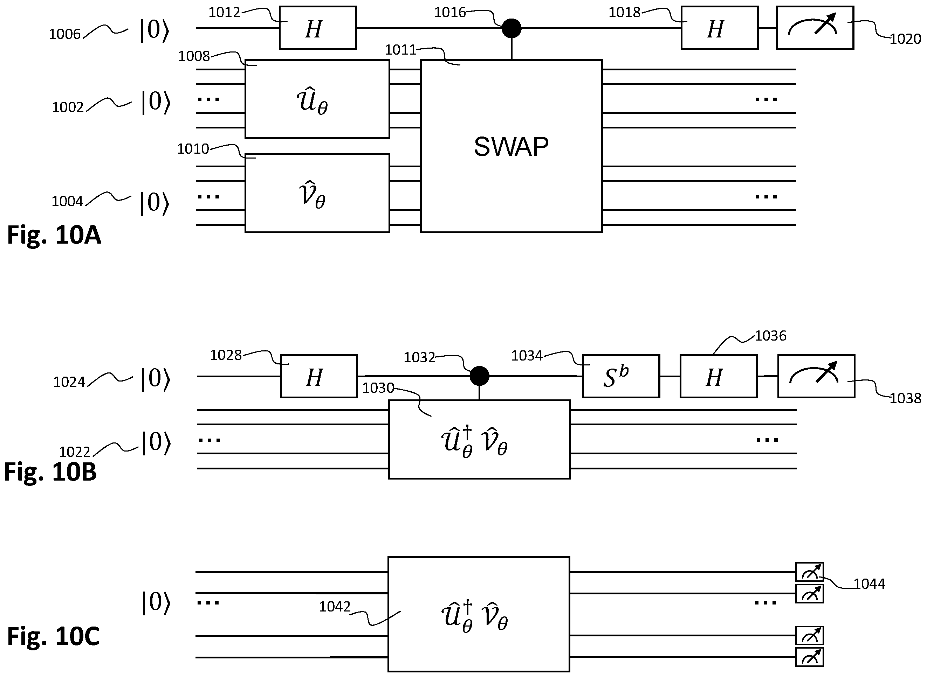

It is stressed that the function evaluation is given by the state overlaps themselves, and not by the absolute value square of the state overlaps. Note that *f_{Q}*(*x*) *= Re*[*f_{Q}*(*x*)] as the resulting quantum states are purely real under Chebyshev basis $\left〈{0}_{a}\right| {\left〈τ\left(x\right)\right|}_{n} = \left〈{0}_{a}∅\right| {\hat{U}}_{τ}^{†} \left(x\right)$*,* where the subscript *a* refers to the ancilla qubit(s) and |Ø〉 ≡ |0〉^{⊗*n*} denotes an n-qubit zero product state. In general, such overlap measurement can be carried out through the Hadamard test, or any other suitable method, as discussed in more detail below with reference to **Fig. 10A-D****.** However, the Hadamard test relies on the use of a set of controlled operations via an extra ancillary qubit to control each quantum gate in the circuit. As a result, the implementation of the Hadamard test for evaluations of overlaps tends to increase circuit complexity and decrease noise resiliency. By contrast, interferometric measurements, which involve both ground and combined states can be implemented more easily on current hardware. It turns out that a single overlap measurement can be obtained from two separate evaluations of the expectation value of an observable 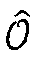 = |0*ₐ*Ø〉 〈0ₐØ| using the same circuit architecture; this will be discussed in more detail below with reference to **Fig. 6A** and **7A****,** and eqs. (24), (41), and (54).

As an example, a second-order ordinary differential equation (ODE) is considered with constant coefficients (*a*, *b* and $c ∈ ℝ$): $a \frac{{d}^{2} f \left(x\right)}{d {x}^{2}} + b \frac{d f \left(x\right)}{d x} + c f \left(x\right) = 0 .$ (22)

The state-overlap form of this ODE is ${\left〈τ\left(x\right)\right|}_{n} \sqrt{η} A {\left|ψ\right〉}_{n} = 0$ where $A = a {\left({G}_{n}^{T}\right)}^{2} + b {G}_{n}^{T} + c {I}_{n}$ is an x-independent matrix. Because *〈τ*(*x*)|*ₙ* is a linearly independent basis set, the *x-*dependent part can be removed (as the equation has to be valid for all x), keeping only the latent representation of the DE, that is, $\sqrt{η} A {\left|ψ\right〉}_{n} = 0$. This leads to ${\left〈ψ\right|}_{n} η {A}^{T} A {\left|ψ\right〉}_{n} = 0$ by multiplying its transpose from the left, i.e., computing the quadratic form. By the same token, according to eqs. (16) and (17), the quadratic forms of given data constraints *DC =* {*f*(*x₀ =* 0), *f'*(*x*₁ = 0)} are ${\left〈ψ\right|}_{n} η {B}_{0}^{T} {B}_{0} {\left|ψ\right〉}_{n} = 0$ and ${\left〈ψ\right|}_{n} η {G}_{n} {B}_{0}^{T} {B}_{0} {G}_{n}^{T} {\left|ψ\right〉}_{n} = 0$, respectively. Next, the latent differential equation may be combined with the data constraints to obtain a total energy function *ε*(*η*) as a sum of individual latent contributions given by $E \left(η\right) = {\left〈ψ\right|}_{n} ℍ \left(η\right) {\left|ψ\right〉}_{n} = 0 ,$ (23) where $ℍ \left(η\right) = η \left({A}^{T}A+{B}_{0}^{T}{B}_{0}+{G}_{n}{B}_{0}^{T}{B}_{0}{G}_{n}^{T}\right)$ is the effective Hamiltonian matrix that consists of the symmetric (quadratic) forms of the latent representation of the x-independent differential equation and the x-dependent (data-related) constraints. In general, different weights may be used for different terms in the Hamiltonian, but for simplicity's sake, all weights are taken equal to 1.

Since eq. (23) is the latent representation of eq. (22), the differential problem becomes an eigenvalue problem $ℍ \left(η\right) {\left|v\right〉}_{n} = λ {\left|v\right〉}_{n}$ such that ${\left〈v\right|}_{n} ℍ \left(η\right) {\left|v\right〉}_{n} = λ {\left〈v\right|}_{n} {\left|v\right〉}_{n} = λ$. Considering the total energy is always non-negative, this means that if one of the positive eigenvalues of $ℍ \left(η\right)$ goes to zero, the corresponding eigenvector is the ground state of the solution to eq. (22). Simply put, $ℍ \left(η\right)$ must be a positive-semidefinite matrix for certain *η* ∈ $\left\{{η}_{i}^{∗}\right\} = arg {min}_{η} ε \left(η\right)$ with the integer *i* ∈ [0, *N* - 1].

In the case that the data constraints are inhomogeneous, the effective Hamiltonian can instead be written as: $ℍ \left(η\right) = η \left({A}^{T}A+{B}_{0}^{T}{B}_{0}+{G}_{n}{B}_{0}^{T}{B}_{0}{G}_{n}^{T}\right) - \left({r}_{0}^{2}+{s}_{0}^{2}\right) {Î}_{n}$, wherein *Îₙ* is the n-qubit identity matrix, and wherein ${r}_{0}^{2}$ and ${s}_{0}^{2}$ are defined in eqs. (16) and (17). In that case, the requirement of the zero eigenvalue (*λ* = 0) enables the determination of the scaling factor ${η}_{i}^{∗}$. Given that *wᵢ* is the (*i* + 1)^{th} positive eigenvalue of the symmetric positive-definite matrix $W = \left({A}^{T}A+{B}_{0}^{T}{B}_{0}+{G}_{n}{B}_{0}^{T}{B}_{0}{G}_{n}^{T}\right) , {η}_{i}^{∗}$ can be specifically found by solving a set of linear equations $\left\{{η}_{i}^{∗}\times {w}_{i}-\left({r}_{0}^{2}+{s}_{0}^{2}\right)=0\right\}$. The positive-semidefinite $ℍ \left(η\right)$ with (exactly) one eigenvalue being zero can be accomplished when $η = {η}_{max}^{*}$*,* where ${η}_{max}^{*}$ is the largest value in the set $\left\{{η}_{i}^{*}\right\}$, if appropriate datasets are supplied. Since the smallest eigenvalue *w*ₘᵢₙ is the eigenvalue closest to zero, the selection of ${η}_{max}^{*}$ can take the minimum energy consumption to reach the ground state of the overall system based on their reciprocal relation.

In **Fig. 3B-D**, three possible types of solution to eq. (22) are investigated, with coefficients C = {*a, b, c*} and data constraints *BC =* {f(0), f'(0)}. The overlap model *f_{Q}*(*x*) is evaluated under different data constraints *DC_{I}.* Plots of *f(x)* and *f_{Q}*(*x*) are given for
**3B** C = {1, 4, 4}, *BC* = {0.5, -0.5} and *DC_{I} =* { *f*(-1) = 0}, *ηₑ* = 1.29.
**3C** C = {1, -2, -3}, *BC* = {0, 1} and *DC_{I} =* { *f*(0) = 0}, *ηₑ* = 32.47.
**3D** C = {1, 5,400}, *BC* = {1,0} and *DC_{I} =* {f'(0) = *0}, ηₑ* = 451.714.

In each panel, *n and ηₑ* represent the number of qubits and the scaling factor of the quantum model, respectively.

**Fig. 3B** and **3C**, show exemplary differential equations having real repeated and distinct roots, whose analytical solutions are *f(x)* = 0.5 (exp(-2*x*) + *x* exp(-2*x*)) and *f(x)* = 0.25 (exp(3*x*) - exp(-*x*)), respectively; this represents a lognormal-like function (dashed curve). For the supplied data constraint, the lowest-energy eigenstate of $ℍ = T \left(A\right) +$ $T \left(B\left(-1\right)\right)$ is denoted as |*ψ_{g}*〉*ₙ* and the resulting state overlap solution ${f}_{q}^{*} \left(x\right) = {\left〈τ\left(x\right)\right|}_{n} {\left|{ψ}_{g}\right〉}_{n}$ (gray solid curve) is in direct proportion to the exact solution. Here and in the following, T denotes the Gram operator: $T \left(A\right) = {A}^{T} A$.

For complex pairs of roots, as in the case of **Fig. 3D**, the differential equation has an analytical solution $f \left(x\right) = exp \left(-\frac{5}{2}x\right) \left(cos\left(\frac{15}{2}\sqrt{7}x\right)+\frac{\sqrt{7}}{21}sin\left(\frac{15}{2}\sqrt{7}x\right)\right)$, which represents a damped harmonic oscillator. Both *ηₑ* and ground state |*ψ_{g}*〉*ₙ* are then calculated according to the aforementioned methods. The resultant overlap model is displayed as the solid curve in **Fig. 3D**.

Similar results were obtained in simulations using inhomogeneous data constraints (not shown). As data constraints can manipulate the matrix elements of W and control the definiteness of $ℍ \left(η\right)$, the selection of inhomogeneous data constraints can determine the eigen-behaviour of the overlap model. Adequate inhomogeneous data constraints can help the model to rapidly probe the ground state of the problem.

Eq. (24) or (25) can be used to evaluate the overlap models of ordinary differential equations and non-linear differential equations, and to verify the solutions. This is also known as an interferometric measurement, $Re \left({f}_{Q}\left(x\right)\right) = \sqrt{{η}_{max}^{∗} N} \left({N}_{C}{\left|{\hat{O}}_{C}\left(x\right)\right|}^{2}-{\left|{\hat{O}}_{G}\left(x\right)\right|}^{2}-\frac{1}{2 N}\right) ,$ (24) where ${\left|{\hat{O}}_{G}\left(x\right)\right|}^{2} = {\left|\left〈{0}_{a}∅\right|{\hat{U}}_{τ}^{†}\left(x\right){\left|{ψ}_{G}\right〉}_{n + 1}\right|}^{2}$ is the overlap probabilities of measuring the Chebyshev basis state |0ₐ〉*τ*(*x*)〉*ₙ* given (*n* + 1)-qubit ground state |*ψ_{G}*〉_{*n*+1} = |0ₐ〉|*ψ_{g}*〉*ₙ* where |*ψ_{g}*〉*ₙ* is prepared by the imaginary-time evolution based on the obtained $ℍ \left({η}_{max}^{∗}\right)$, and ${\left|{\hat{O}}_{C}\left(x\right)\right|}^{2} = {\left|\left〈{0}_{a}∅\right|{\hat{U}}_{τ}^{†}\left(x\right){\left|{Ψ}_{C}\right〉}_{n + 1}\right|}^{2}$ is the overlap probabilities of measuring the Chebyshev basis state |0*ₐ*〉|τ(*x*))*ₙ* given the (*n* + 1)-qubit combined state |*ψ*_{C}〉_{*n*+1} = (|*ψ*_{G}〉_{*n*+1} + |*ψᵣ*〉_{*n*+1})/ 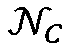 where 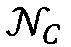 *=* ∥*ψ_{G}*〉_{*n*+1} + |*ψᵣ*〉_{*n*+1}|² is a normalization factor. The reference state |*ψᵣ*〉_{*n*+1} is set as |0〉^{⊗(*n*+1)} so as to easily decouple the reference function when computing the real part of the product term, and *N* = 2*ⁿ* is used. In the special cases of either *f(x)* ≥ 0 (for instance **Fig. 3B****)** or *f(x)* ≤ 0 ∀*x* ∈ [-1,1], it is sufficient to evaluate the |*Ô_{G}*(*x*)|*²* term. ${f}_{Q} \left(x\right) = \left\{\begin{matrix}\sqrt{2 {η}_{max}^{∗}} \sqrt{{\left|{\hat{O}}_{G}\left(x\right)\right|}^{2}} , & f \left(x\right) \geq 0 \\ - \sqrt{2 {η}_{max}^{∗}} \sqrt{{\left|{\hat{O}}_{G}\left(x\right)\right|}^{2}} , & f \left(x\right) \leq 0\end{matrix}\right.$ (25)

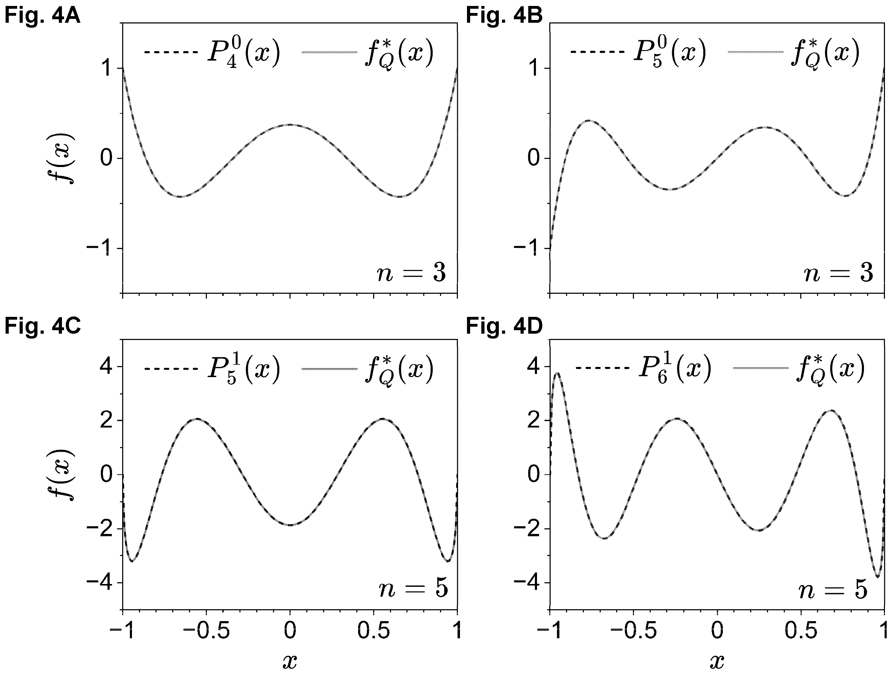

**Fig. 4A-D** show results of solving Legendre differential equations and associated Legendre differential equations using a method according to an embodiment. These are examples of ordinary differential equations with variable coefficients.

As a further example, the general Legendre differential equation with 0 ≤ m ≤ *l ∈ N is* discussed, which is given by: $\left(1-{x}^{2}\right) \frac{{d}^{2} f \left(x\right)}{d {x}^{2}} - 2 x \frac{d f \left(x\right)}{d x} + \left(l\left(l+1\right)-\frac{{m}^{2}}{1 - {x}^{2}}\right) f \left(x\right) = 0 ,$ (26)

The complete solution to this ordinary differential equation is ${c}_{1} {P}_{l}^{m} \left(x\right) + {c}_{2} {Q}_{l}^{m} \left(x\right)$ where ${P}_{l}^{m} \left(x\right)$ and ${Q}_{l}^{m} \left(x\right)$ are two linearly independent functions called associated Legendre functions of the first and second kind, respectively. They are frequently used when solving Laplace's equation and scattering problem in spherical coordinates. For the azimuthally symmetric case (*m* = 0), the state-overlap form of this differential equation is ${\left〈τ\left(x\right)\right|}_{n + 1} \sqrt{η} A {\left|ψ\right〉}_{n} = 0$ where $A = \left(M-{M}_{2}\right) {\left({G}_{n}^{T}\right)}^{2} - 2 {M}_{1} {G}_{n}^{T} + l \left(l+1\right) M$ (27) is an *x*-independent matrix. The multiplication of *x²* with the *n*-qubit Chebevshev basis indicates that the leading power of *x* is raised from *N -* 1 to *N -* 1 + 2 in the Chebyshev polynomials, so that *n* + 1 qubits are needed to ensure that each term in the equation shares the same linearly independent basis set (see eqs. (13) and (14); in eq. (27), the subscript *n* has been dropped); consequently, each term in A comprises a matrix ${M}_{p}$, with 0 ≤ *p < N* (using $M = {M}_{0}$ for brevity). This allows to remove the x-dependent part and keep intact the latent representation of the ODE.

Data constraints including function and derivative values are also expressed in terms of the (*n* + 1)-qubit Chebyshev basis, and thus eqs. (16) and (17) are modified as follows: ${f}_{Q} \left({x}_{0}\right) = f \left({x}_{0}\right) \to \sqrt{η} {\left〈τ\left(x\right)\right|}_{n + 1} {B}_{n + 1} \left({x}_{0}\right) M {\left|ψ\right〉}_{n} = 0 ,$ (28) ${f}_{Q}^{′} \left({x}_{1}\right) = f ′ \left({x}_{1}\right) \to \sqrt{η} {\left〈τ\left(x\right)\right|}_{n + 1} {B}_{n + 1} \left({x}_{1}\right) M {G}_{n}^{T} {\left|ψ\right〉}_{n} = 0 ,$ (29) where ${B}_{n + 1} \left({x}_{0}\right)$ and ${B}_{n + 1} \left({x}_{1}\right)$ are obtained from ${\left〈τ\left({x}_{0}\right)\right|}_{n + 1} = {\left〈τ\left(x\right)\right|}_{n + 1} {B}_{n + 1} \left({x}_{0}\right)$ and ${\left〈τ\left({x}_{1}\right)\right|}_{n + 1} = {\left〈τ\left(x\right)\right|}_{n + 1} {B}_{n + 1} \left({x}_{1}\right)$, respectively. They are *x*-dependent (data-related) matrices with nonzero elements on their first row as usual, and may be encoded using sparese matrix encoding techniques as described above. With *l*-dependent boundary conditions, this equation has an analytical solution $f \left(x\right) = {P}_{l}^{0} \left(x\right)$, the Legendre polynomials (shown in black dashed curves). The data constraints are chosen such that $ℍ \left(η\right) = η \left({A}^{T}A+{M}^{T}\left({B}_{n + 1}^{T}\left({x}_{0}\right){B}_{n + 1}\left({x}_{0}\right)\right)M\right) for even l$ and $H \left(η\right) = η \left({A}^{T}A+{\left({B}_{n + 1}\left({x}_{1}\right)M {G}_{n}^{T}\right)}^{T}\left({B}_{n + 1}\left({x}_{1}\right)M {G}_{n}^{T}\right)\right) for odd l .$ The total energy function *ε*(*η*) is the same as eq. (23).

In the case of *m* ≠ 0, multiplying both sides of eq. (26) by (1 *- x*²) yields the latent governing equation $A = \left(M-2 {M}_{2}+{M}_{4}\right) {\left({G}_{n}^{T}\right)}^{2} + 2 \left({M}_{3}-{M}_{1}\right) {G}_{n}^{T} + l \left(l+1\right) {M}_{3} + \left(l\left(l+1\right)-{m}^{2}\right) M .$ (30) In the case of *m* = 1 with fixed boundary conditions, this differential equation has an analytical solution $f \left(x\right) = {P}_{l}^{1} \left(x\right)$, the associated Legendre polynomials, again shown as black dashed curves. The effective Hamiltonian has effectively the same shape as for *m* = 0, but with a different matrix A as described in eq. (30). Following the same procedures as described above, the evaluated quantum models (shown as solid curves) closely follow the target functions for *m* = 0 and exhibit best-fit behaviour even though singular points occur at *x* = -1 and *x* = 1 for *m* = 1.

More specifically, results are shown for the following simulations. In each panel, *n* represents the number of qubits of the quantum model. As before, *ηₑ* represents the scaling factor.

For m = 0, eq. (26) with *l*-dependent boundary conditions *BC* = {*f*(-1) = (-1)*^{l}, f(1)* = 1} is used to determine a unique analytical solution $f \left(x\right) = {P}_{l}^{0} \left(x\right)$*.* The overlap model *f_{Q}*(*x*) is evaluated for different integers of *l* under the same data constraints *DC =* {*f*(0), *f*(±1)}. The plots show ${P}_{l}^{0} \left(x\right)$ and *f_{Q}*(*x*) for (**Fig. 4A**) *l* = 4 and *ηₑ* = 1.75 and (**Fig. 4B**) *l* = 5 and *ηₑ =* 1.49.

For *m* = 1, eq. (26) with fixed boundary conditions *BC =* {*f*(-1) = 0, f(1) = 0} is used to determine a unique analytical solution $f \left(x\right) = {P}_{l}^{1} \left(x\right)$*.* The overlap model *f_{Q}*(*x*) is evaluated for different integers of *l* under the different data constraints DC. The plots show ${P}_{l}^{1} \left(x\right)$ and *f_{Q}*(*x*) for (**Fig. 4C**) *l* = 5 and *DC =* { f'(0) *= 0}, ηₑ* = 108.51 and (**Fig. 4D**) *l* = 6 and *DC =* {f(0) = *0}, ηₑ* = 135.38.

Again, similar results were obtained (not shown) using inhomogeneous data constraints (for *m* = 1, *l* = 5 and *DC =* { *f*(±*x̅*₀), *f*(±*x̅*₁₂)}, and for *m* = 1, *l* = 5 and *DC =* {*f*(±*x̅*₀), *f*(±*x̅*₈)}). Since, as noted, eq. (26) has two regular singular points at -1 and 1 for *m* ≠ 0, the 0^{th} and *j*^{th} Chebyshev nodes of opposite signs located between two singular points are chosen as DC. Finally, we have $ℍ \left(η\right) = η \left({A}^{T}A+{M}^{T}\left({B}_{\pm {\overline{x}}_{0}}^{T}{B}_{\pm {\overline{x}}_{0}}+{B}_{\pm {\overline{x}}_{j}}^{T}{B}_{\pm {\overline{x}}_{j}}\right)M\right)$. The right choice of appropriate and meaningful datasets is essential in today's data-driven model to facilitate physics-informed machine learning in order to unravel insights and discover patterns as well as to extract valuable knowledge and underlying information. It is found that the overlap models also in these cases closely follow the target functions for m = 0, and exhibit small relative errors nearby the singular points of -1 and 1 for m = 1.

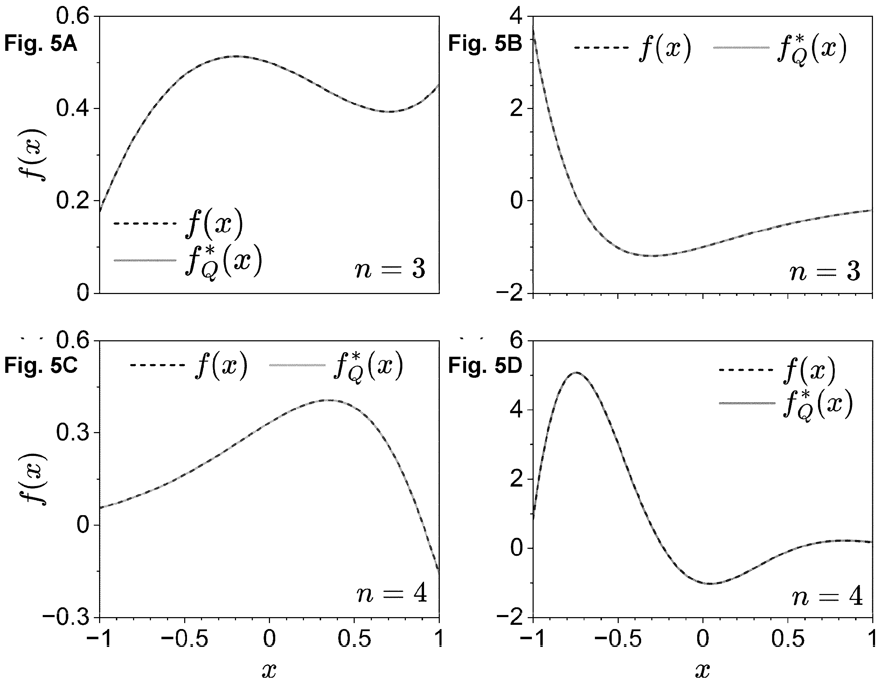

**Fig. 5A-D** show results of solving second-order inhomogeneous differential equations using a method according to an embodiment. The second-order inhomogeneous differential equations are given by $o \left(x\right) \frac{{d}^{2} f \left(x\right)}{d {x}^{2}} + p \left(x\right) \frac{d f \left(x\right)}{d x} + q \left(x\right) f \left(x\right) = r \left(x\right) ,$ (31) with coefficients and a source function on either side of the equal sign, which may be denoted as 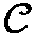 = {*o*(*x*), *p*(*x*), *q*(*x*); $\left.r\left(x\right)\right\} ∈ ℝ$.

**Fig. 5A-D** shows solution for eq. (31) with coefficients and a source function denoted as 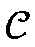 = {*o*(*x*), *p*(*x*), *q*(*x*); *r*(*x*)} and data constraints *BC =* {*f*(0), *f*'(0)} (which are used to determine a unique analytical solution *f*(*x*)), as follows:
**Fig. 5A****:** 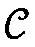 = {(*x* - 1), -*x*, 1; (*x* - 1)²}, *BC* = {1/2 , -1/8} and *DC_{I}* = {f'(-0.2) = 0}, *ηₑ* = 1.35.
**Fig. 5B****:** *C* = {1, 4, 4; e*^{-2x}*}, *BC* = {-1, 1} and *DC_{I} =* {*f*(-0.73) = 0}, *ηₑ* = 15.74.
**Fig. 5C****:** 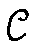 = {1, -5, 6; *x* e*^{2x}*}, *BC* = {1/3, 1/3} and *DC_{I} =* {*f*(0.111) = 0}, *ηₑ* = 0.82.
**Fig. 5D****:** *C* = {1, 4, 20; *x*e^{-2*x*} sin 4*x*}, *BC* = {-1, -1} and *DC_{I}* = {f'(-0.75) = 0} , *ηₑ =* 77.51.
Here, *ηₑ* is again the scaling factor used to obtain the scaled solution. Plots are shown for *f*(*x*) and ${f}_{Q}^{∗} \left(x\right)$*.* In each panel, *n* represents the number of qubits of the quantum model.

For 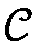 = {(*x* - 1), -*x*, 1; (*x* - 1)²} and data constraints *DC* = {f(-0.2) = 0, *f*(0) = 0.5}, i.e., the parameters used for **Fig. 5A**, this differential equation eq. (31) has an analytical solution *f*(*x*) = 3/2 e*^{x} - x* (*x* + 13/8) - 1. Following the same procedures as described above, eq. (21) is used to find the latent representation of *r*(*x*). The quantum model of eq. (31) is ${\left〈τ\left(x\right)\right|}_{n + 1} \sqrt{η} A {\left|ψ\right〉}_{n} = 0$, where $A = \left({M}_{1}-{M}_{0}\right) {\left({G}_{n}^{T}\right)}^{2} - {M}_{1} {G}_{n}^{T} + {M}_{0} - \left({M}_{2}-2{M}_{1}+{M}_{0}\right) {D}_{n}^{\left(0\right)} \left({x}_{s}\right)$ is a data-encoded matrix, where again ${D}_{n}^{\left(m\right)} \left({x}_{s}\right) = \frac{{B}_{n} \left({x}_{s}\right)}{{f}_{Q}^{\left(m\right)} \left({x}_{s}\right)} {\left({G}_{n}^{T}\right)}^{m}$. With the supplied homogeneous data constraints, the lowest-energy eigenstate of $ℍ = T \left(A\right) +$ $T \left({B}_{n + 1}\left(-0.2\right) M {G}_{n}^{T}\right)$ is calculated, and then the state overlap solution is found. The scaling factor can be determined by *f*(*xₛ* = 0) = 0.5, the same as the one appearing in A. Eventually, the evaluated quantum model agrees with the exact solution, as shown in **Fig. 5A**. For complicated (e.g., non-polynomial) source functions, a polynomial expansion such as the Maclaurin expansion of *r*(*x*) is applied and the first *t +* 1 terms are taken for approximation eq. (21). For simplicity, eq. (22) with *r*(*x*) on the right hand side may be considered. The corresponding latent governing equation is $A = {M}_{0} \left(a{\left({G}_{n}^{T}\right)}^{2}+b {G}_{n}^{T}+c {I}_{n}\right) - \left({\sum }_{p = 0}^{t} {c}_{p} {M}_{p}\right) {D}_{n}^{\left(0\right)} \left({x}_{s}\right) .$ Again, three exemplary differential equations with real repeated, real distinct, and complex pairs of roots are solved (shown in **Fig. 5B-D**, respectively), whose analytical solutions are $f \left(x\right) = {e}^{- 2 x} \left(\frac{1}{2}{x}^{2}-x-1\right) , f \left(x\right) = \frac{1}{6} \left(4 {e}^{3 x}-{e}^{2 x}\left(3{x}^{2}+6x+2\right)\right)$ and *f*(*x*) = $\frac{1}{64} {e}^{- 2 x} \left(\left(x-48\right) sin 4x-\left(4{x}^{2}+64\right) cos 4x\right)$, respectively. Given the abovementioned data constraints, the effective Hamiltonian operators are $ℍ = T \left(A\right) + T \left({B}_{n + 1}\left({x}_{s}\right) M\right)$ for the first two cases and $ℍ = T \left(A\right) + T \left({B}_{n + 1}\left({x}_{s}\right) M {G}_{n}^{T}\right)$ for the last. The resultant quantum models evaluated with *t* = 3, 5, 7 reveal excellent agreement with the exact solutions, as shown in **Fig. 5B-D**, respectively.

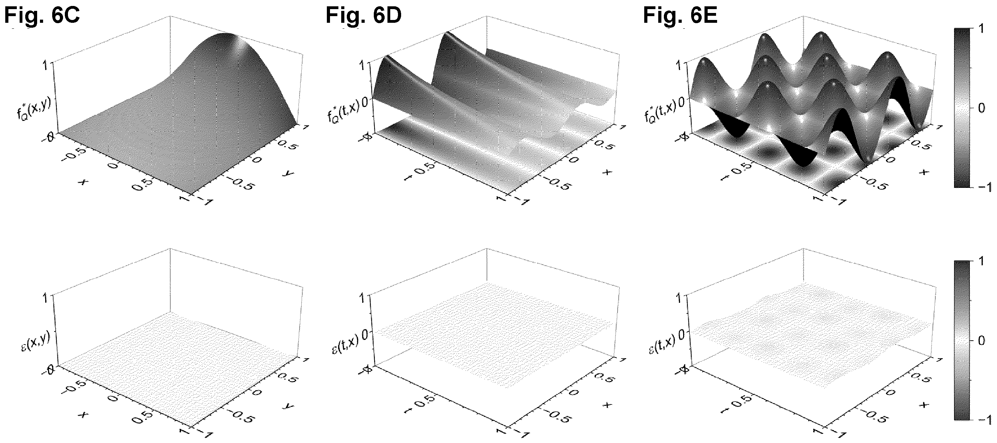

**Fig. 6A** and **6B** show quantum circuits and **Fig. 6C-E** show results of solving partial differential equations using a method according to an embodiment. In particular, **Fig. 6A** shows a quantum circuit that can be used to evaluate the two-dimensional state overlaps, 〈0*ₐ τ*(*x*) 0*ₐ τ*(*y*)|0*ₐ ψₓ* 0*ₐ ψ_{y}*〉, through an interferometric measurement where a single overlap measurement can be obtained from two separate measurements of overlap probabilities. The circuit is initialized with a zero-product state and a state preparation circuit ${\hat{U}}_{Ψ}^{PREP}$ is employed to prepare the desired state of a problem of interest. A permutation circuit **P̂** is responsible to shuffle the ancillary and prepared states in a specific order and generate separable input states for parallel inverse Chebyshev feature maps to obtain the overlap probabilities in the Chebyshev basis. An alternative circuit, not requiring a permutation subcircuit, is discussed in more detail below, around eq. (49).

**Fig. 6B** shows an alternative quantum circuit, where the effect of the permutation circuit has been absorbed in the state preparation circuit.

**Fig. 6C-E** show, respectively, **(Top)** intensity-scale surface plots of quantum effective Hamiltonian model-solved (**Fig. 6C**) Laplace's equation (eq. (33)) with *n* = 3 and *ηₑ =* 5.21559, (**Fig. 6D**) heat equation (eq. (39)) with *n* = 4 and *ηₑ* = 603.863 and (**Fig. 6E**) wave equation (eq. (40)) with *n* = 5 and ${η}_{max}^{∗} = 216.469$. **(Bottom)** the corresponding error plots *ε* defined as the difference between the estimated and true values. All plots share the same intensity scale bar on the right.

The methods described herein can be applied to both univariate and multivariate cases. The effective Hamiltonian allows to express the solution of differential problem as the ground state of a multidimensional system, without the need of a quantum variational Ansatz and costly grid evaluations, as used in known methods. For simplicity, we first demonstrate how to tackle a partial differential equation (PDE) involving partial derivatives of an unknown function (or a dependent variable) *f*(*x, y*) with respect to two independent variables *x* and *y*. For encoding of two independent variables (as shown in **Fig. 6A** and **6B**), the quantum model *f_{Q}*(*x, y*) can be built in parallel registers of equal qubit numbers *nₓ* = *n_{y} = n* as the two-dimensional state overlap given by ${f}_{Q} \left(x, y\right) = \sqrt{η} \left({\left〈τ\left(x\right)\right|}_{n}⊗{\left〈τ\left(y\right)\right|}_{n}\right) {\left|ψ\right〉}_{2 n} , subject to {\left〈ψ\right|}_{2 n} {\left|ψ\right〉}_{2 n} = 1 .$ (32)

In the following, *〈τ*(*x, y)*|_{2*n*} is used as shorthand notation for the two-dimensional linearly-independent Chebyshev basis set 〈*τ*(*x*)|*ₙ* ⊗ 〈τ(*y*)|*ₙ*. As an example, Laplace's equation (which is an elliptic PDE that arises in many applications, such as electrostatics and fluid dynamics, to describe steady-state phenomena), is solved s=using the following parameters: $\frac{{\partial }^{2} f \left(x, y\right)}{\partial {x}^{2}} + \frac{{\partial }^{2} f \left(x, y\right)}{\partial {y}^{2}} = 0 ,$ (33) $BC = \left\{f\left(\pm 1,y\right)=0, f\left(x,-1\right)=0, f\left(x, 1\right)=sin\left(\left(x+1\right)π/2\right)\right\} .$ Eq. (33) has an analytical solution *f*(*x, y*) = csch(*π*) cosh(*πx*/2) sinh((y + 1) *π*/2). The state-overlap form of this PDE is ${\left〈τ\left(x, y\right)\right|}_{2 , n} \sqrt{η} A {\left|ψ\right〉}_{2 n} = 0$, where $A = \left({\left({G}_{n}^{T}\right)}^{2}⊕{\left({G}_{n}^{T}\right)}^{2}\right)$ is an *x-* and *y*-independent matrix with the symbol ⊕ denoting the Kronecker sum operation. Boundary and initial conditions including function and derivative values are formulated as the two-dimensional state overlap as well. Homogeneous Dirichlet and Neumann boundary conditions respectively take the form $\begin{matrix}{f}_{Q} \left({x}_{0}, y\right) = f \left({x}_{0}, y\right) \to \sqrt{η} {\left〈τ\left(x, y\right)\right|}_{2 , n} \left({B}_{n}\left({x}_{0}\right)⊗{Î}_{n}\right) {\left|ψ\right〉}_{2 n} = 0 \\ {f}_{Q} \left(x, {y}_{0}\right) = f \left(x, {y}_{0}\right) \to \sqrt{η} {\left〈τ\left(x, y\right)\right|}_{2 , n} \left({Î}_{n}⊗{B}_{n}\left({y}_{0}\right)\right) {\left|ψ\right〉}_{2 n} = 0 ,\end{matrix}$ (34) $\begin{matrix}\frac{\partial {f}_{Q} \left({x}_{1}, y\right)}{\partial x} = \frac{\partial f \left({x}_{1}, y\right)}{\partial x} \to \sqrt{η} {\left〈τ\left(x, y\right)\right|}_{2 n} \left({B}_{n}\left({x}_{1}\right){G}_{n}^{T}⊗{Î}_{n}\right) {\left|ψ\right〉}_{2 n} = 0 , \\ \frac{\partial {f}_{Q} \left(x, {y}_{1}\right)}{\partial y} = \frac{\partial f \left(x, {y}_{1}\right)}{\partial y} \to \sqrt{η} {\left〈τ\left(x, y\right)\right|}_{2 n} \left({Î}_{n}⊗{B}_{n}\left({y}_{1}\right){G}_{n}^{T}\right) {\left|ψ\right〉}_{2 n} = 0 ,\end{matrix}$ (35)

Similar to eqs. (16) and (17), ${B}_{n} \left({y}_{0}\right)$ and ${B}_{n} \left({y}_{1}\right)$ are obtained from 〈τ(*y*₀)|*ₙ* = ${\left〈τ\left(y\right)\right|}_{n} {B}_{n} \left({y}_{0}\right)$ and ${\left〈τ\left({y}_{1}\right)\right|}_{n} = {\left〈τ\left(y\right)\right|}_{n} {B}_{n} \left({y}_{1}\right)$, respectively. They are *y*-dependent (data-related) matrices with nonzero elements on their first row as usual.

In contrast to 2D collocation points in PINNs, the regions of minimum variation of the function value and/or the first derivative are chosen as homogeneous data constraints, *DC =* {*f*(±1,*y*) = 0,*f*(*x*, -1) = 0}, and/or $\left\{\frac{\partial f \left(0, y\right)}{\partial x}=0,\frac{\partial f \left(x,-1\right)}{\partial y}=0\right\}$, such that $ℍ \left(η\right) = η \left(\begin{matrix}{A}^{T} A + {w}_{1} T \left({B}_{n}\left(\pm 1\right)⊗{Î}_{n}\right) + {w}_{2} T \left({B}_{n}\left(0\right){G}_{n}^{T}⊗{Î}_{n}\right) + {w}_{3} T \left({Î}_{n}⊗{B}_{n}\left(-1\right)\right) \\ + {w}_{4} T \left({Î}_{n}⊗{B}_{n}\left(-1\right){G}_{n}^{T}\right)\end{matrix}\right)$ with at least two weights *wᵢ* ≠ 0; or more in general, at least one non-zero weight for each independent variable.

Again, inhomogeneous data constraints may be represented by: $\begin{matrix}{f}_{Q} \left({x}_{0}, y\right) = f \left({x}_{0}, y\right) \to \sqrt{η} {\left〈τ\left(x, y\right)\right|}_{2 n} \left(B\left({x}_{0}\right)⊗{Î}_{n}\right) {\left|ψ\right〉}_{2 n} = {r}_{{x}_{0}} {\left〈τ\left(x, y\right)\right|}_{2 n} {\left|{c}_{r}\right〉}_{2 n} , \\ {f}_{Q} \left(x, {y}_{0}\right) = f \left(x, {y}_{0}\right) \to \sqrt{η} {\left〈τ\left(x, y\right)\right|}_{2 n} \left({Î}_{n}⊗B\left({y}_{0}\right)\right) {\left|ψ\right〉}_{2 n} = {u}_{{y}_{0}} {\left〈τ\left(x, y\right)\right|}_{2 n} {\left|{c}_{u}\right〉}_{2 n} ,\end{matrix}$ (36) $\begin{matrix}\frac{\partial {f}_{Q} \left({x}_{1}, y\right)}{\partial x} = \frac{\partial f \left({x}_{1}, y\right)}{\partial x} \to \sqrt{η} {\left〈τ\left(x, y\right)\right|}_{2 n} \left(B\left({x}_{1}\right){G}_{n}^{T}⊗{Î}_{n}\right) {\left|ψ\right〉}_{2 n} = {s}_{{x}_{0}} {\left〈τ\left(x, y\right)\right|}_{2 n} {\left|{c}_{s}\right〉}_{2 n} , \\ \frac{\partial {f}_{Q} \left(x, {y}_{1}\right)}{\partial y} = \frac{\partial f \left(x, {y}_{1}\right)}{\partial y} \to \sqrt{η} {\left〈τ\left(x, y\right)\right|}_{2 n} \left({Î}_{n}⊗B\left({y}_{1}\right){G}_{n}^{T}\right) {\left|ψ\right〉}_{2 n} = {v}_{{x}_{0}} {\left〈τ\left(x, y\right)\right|}_{2 n} {\left|{c}_{v}\right〉}_{2 n} ,\end{matrix}$ (37) wherein *u_{y₀}* and *v*_{*y*₁} are the corresponding weighting factors associated with the function value and the derivative value, subject to 〈*cᵤ*|*ₙ*|*cᵤ*〉*ₙ* = 〈*cᵥ*|*₂ₙ*|*cᵥ*〉*₂ₙ* = 1 and the same for the other two.

Also in that case, the regions of minimum variation of the function value and the first derivative are chosen as data constraints, $DC = \left\{f\left(\pm {\overline{x}}_{0},y\right),\frac{\partial f \left(0, y\right)}{\partial x},f\left(x,-{\overline{y}}_{0}\right),\frac{\partial f \left(x,-{\overline{y}}_{0}\right)}{\partial y}\right\}$, such that $ℍ \left(η\right) = η \left({A}^{T}A+T\left({B}_{\pm {\overline{x}}_{0}}⊗{Î}_{n}\right)+T\left({B}_{0}{G}_{n}^{T}⊗{Î}_{n}\right)+T\left({Î}_{n}⊗{B}_{- {\overline{y}}_{0}}\right)+T\left({Î}_{n}⊗{B}_{- {\overline{y}}_{0}}{G}_{n}^{T}\right)\right) -$ $\left({r}_{\pm {\overline{x}}_{0}}^{2}+{s}_{0}^{2}+{u}_{- {\overline{y}}_{0}}^{2}+{v}_{- {\overline{y}}_{0}}^{2}\right) {Î}_{2 n}$ is obtained, where the (symmetric) Gram operator 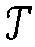 (·) = (·)^{T}(·) is used to concisely represent the data constraints (operands) in the formula.

In either case (homogeneous or inhomogeneous data constraints), the total energy function for PDE is written as $ε \left(η\right) = {\left〈ψ\left|ℍ 2 n\left(η\right)\right|ψ\right〉}_{2 n} = 0 .$ (38) Both *ηₑ* and ground state |*ψ*_{g}〉_{2*n*} are then calculated according to the aforementioned methods; typically by minimizing eq. (38) to obtain the lowest-energy eigenstate (ground state) of the effective Hamiltonian 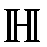 . The exact value of the scaling factor can be obtained via $\sqrt{{η}_{e}} = f \left({x}_{s}, {y}_{s}\right) / {f}_{q}^{*} \left({x}_{s}, {y}_{s}\right)$ using an inhomogeneous data constraint {*f*(*xₛ, yₛ*) ≠ 0} . The quantum model can be measured with the quantum circuit shown in **Fig. 6A** and eq. (43).The resultant overlap model is displayed as a grey-level surface plot in **Fig. 6C** and nicely follows the hyperbolic sine and cosine function with small errors nearby its maximum along the boundary.

As a further example, a time-dependent PDEs in one spatial dimension is shown in **Fig. 6D** and **6E**. The dependent variable is a function of time *t* and (one-dimensional) space *x*. Two representative examples, the heat and wave equations, are examined as these parabolic and hyperbolic PDEs are widely used to describe many physical and engineering problems such as diffusion processes/heat flow and vibrating systems/wave motion, respectively. $\begin{matrix}\frac{\partial f \left(t, x\right)}{\partial t} - k \frac{{\partial }^{2} f \left(t, x\right)}{\partial {x}^{2}} = 0 , k = \frac{1}{25} , \\ IBC = \left\{f\left(0, x\right)=cos\left(2πx\right), f\left(t,\pm 1\right)=0\right\} ,\end{matrix}$ (39) $\begin{matrix}\frac{{\partial }^{2} f \left(t, x\right)}{\partial {t}^{2}} - {c}^{2} \frac{{\partial }^{2} f \left(t, x\right)}{\partial {x}^{2}} = 0 , c = 0 , \\ IBC = \left\{f\left(0, x\right)=sin\left(2πx\right), \frac{\partial f \left(0, x\right)}{\partial t}=0, f\left(t,\pm 1\right)=0\right\} ,\end{matrix}$ (40) where IBC is the set of initial and boundary conditions (i.e., data constraints) to specify the distribution at the initial time and domain boundaries to pin down an unique solution. Eqs. (39) and (40) have unique analytical solutions *f*(*t, x*) = exp(-4 *π²k t*) cos(2*πx*) and *f*(*t, x*) *=* cos(4*πt*) sin(2*πx*), respectively. The corresponding quantum model is *f_{Q}*(*t, x*) *=* $\sqrt{η} {\left〈τ\left(t, x\right)\left|{2 n}_{}\right|ψ\right〉}_{2 n}$ revised from eq. (32), with 〈τ(*t, x*)|_{2*n*} representing the two-dimensional linearly-independent Chebyshev basis set 〈τ(*t*)|*ₙ* ⊗ *〈τ*(*x*)|*ₙ*. Both PDEs have the same state-overlap form ${\left〈τ \left(t , x\right) \left|{2 n}_{} \sqrt{η} A\right| ψ\right〉}_{2 n} = 0$, with their respective $A = \left({G}_{n}^{T}⊗{Î}_{n}-k {Î}_{n}⊗\right.$ $\left.{\left({G}_{n}^{T}\right)}^{2}\right)$ and $A = \left({\left({G}_{n}^{T}\right)}^{2}⊗{Î}_{n}-{c}^{2} {Î}_{n}⊗{\left({G}_{n}^{T}\right)}^{2}\right)$. The independent variables *x* and *y* in eqs. (34) and (35) are respectively replaced by *t* and *x.* Given $DC = \left\{f\left(t,\pm 1\right)=0,\frac{\partial f \left(t,\pm 3/4\right)}{\partial x}=0\right\}$ and *DC* = { *f*(1/8,*x*) = 0, *f*(7/8,*x*) *=* 0, *f*(*t,* ±1) = 0}, this ultimate leads to effective Hamiltonians $ℍ \left(η\right) = η \left({A}^{T}A+T\left({Î}_{n}⊗{B}_{n}\left(\pm 1\right)\right)+T\left({Î}_{n}⊗{B}_{n}\left(\pm 3/4\right){G}_{n}^{T}\right)\right)$ for eq. (39) and $ℍ \left(η\right) = η \left({A}^{T}A+T\left({B}_{n}\left(1/8\right)⊗{Î}_{n}\right)+T\left({B}_{n}\left(7/8\right)⊗{Î}_{n}\right)+T\left({Î}_{n}⊗{B}_{n}\left(\pm 1\right)\right)\right)$ for eq. (40). The results are shown as intensity-scale surface plots in **Fig. 6D** and **6E**, respectively. Overall, the quantum models closely follow mixed decaying and oscillating (heat) solution and highly oscillatory (wave) solution, with small errors appearing at their maxima and minima. Again, very similar results may also be obtained using (a larger number of) inhomogeneous data constraints (results not shown).

Eq. (41) can be used to evaluate the overlap models of partial differential equations, and to verify the solutions. $Re \left({f}_{Q}\left(x, y\right)\right) = \sqrt{{η}_{max}^{*}} 2 N \left({N}_{C}{\left|{\hat{O}}_{C}\left(x, y\right)\right|}^{2}-{\left|{\hat{O}}_{G}\left(x, y\right)\right|}^{2}-\frac{1}{4 {N}^{2}}\right) ,$ (41) where ${\left|{\hat{O}}_{G}\left(x, y\right)\right|}^{2} = \left.{\left|\left〈{0}_{a} ∅ {0}_{a} ∅\right|\left({\hat{U}}_{τ}^{†}\left(x\right)⊗{\hat{U}}_{τ}^{†}\left(y\right)\right){\left|{ψ}_{G}\right〉}_{2 n + 2}\right|}^{2}\right|$ is the overlap probability of measuring the two-dimensional Chebyshev basis state |0*ₐ*〉τ(*x*)〉*ₙ*|0*ₐ*〉*τ*(*y*)〉*ₙ* given (2n + 2)-qubit ground state |*ψ_{G}〉*_{2*n*+2} = |0*ₐ*〉|*ψ_{gx}*〉*ₙ*|0*ₐ*〉|*ψ_{gy}*〉*ₙ* = **P̂**(|0*ₐ*〉|0*ₐ*〉|*ψ_{g}*〉_{2*n*}) where |*ψ_{g}*〉_{2*n*} is prepared by the imaginary-time evolution based on the obtained $ℍ \left({η}_{max}^{*}\right)$ and **P̂** is a permutation circuit responsible to shuffle the ancillary and prepared states in a specific order and generate separable input states for parallel registers, and |*Ô_{C}*(*x, y*)|² = ${\left|\left〈{0}_{a} ∅ {0}_{a} ∅\right|\left({\hat{U}}_{τ}^{†}\left(x\right)⊗{\hat{U}}_{τ}^{†}\left(y\right)\right){\left|{Ψ}_{C}\right〉}_{2 n + 2}\right|}^{2}$ is the overlap probability of measuring the two-dimensional Chebyshev basis state |0*ₐ*〉|τ(*x*)〉*ₙ*|0*ₐ*〉τ(*y*)〉*ₙ* given (2n + 2)-qubit combined state |*Ψ_{C}*〉_{2*n*+2} = (|*ψ_{G}*〉_{2*n*+2} + |*ψᵣ*〉_{2*n*+2})/ 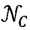 where 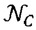 = ||*ψ_{G}*〉_{2*n*+2} + |*ψᵣ*〉_{2*n*+2}|² is a normalization factor. The reference state |*ψᵣ*〉_{2*n*+2} is set as |0〉^{⊕(2*n*+2)} so as to easily decouple the reference function when computing the real part of the product term, and *N* = 2*ⁿ* is used.

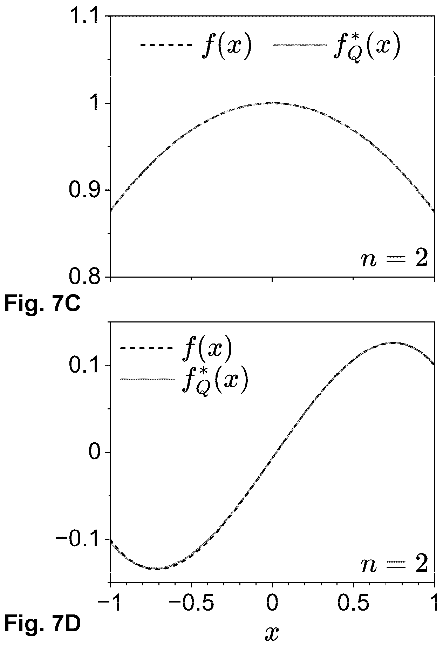

**Fig. 7A** and **7B** show quantum circuits and **Fig. 7C** and **7D** show results of solving nonlinear differential equations using a method according to an embodiment. In particular, **Fig. 7A** shows a quantum circuit that can be used to evaluate the state overlaps, *〈*0*ₐ τ*(*x*)|0*ₐ ψ*〉, through the interferometric measurement where a single overlap measurement can be obtained from two separate measurements of overlap probabilities. The circuit acts on two (n + 1)-qubit registers, each qubit register comprising an ancilla qubit and *n* data qubits. The circuit is initialized with a zero-product state and a state preparation circuit ${\hat{U}}_{Ψ}^{PREP}$ is responsible to prepare the desired state of a problem of interest. This is followed by a permutation circuit ***P̂***. A data constraint circuit ***D̂*** is applied to the first (*n* + 1)-qubit register, followed by a layer of Hadamards H. An inverse Chebyshev feature map is then applied on the second (*n* + 1)-qubit register to obtain the overlap probabilities in the Chebyshev basis.

**Fig. 7B** shows an alternative quantum circuit, where the effect of the permutation circuit has been absorbed in the state preparation circuit.

**Fig. 7C** shows a plot of *f*(*x*) and *f_{Q}*(*x*) for eq. (42) with *DC =* {*f'*(0) = 0,}, *ηₑ =* 3.75367. **Fig. 7D** shows a plot of *f*(*x*) and *f_{Q}*(*x*) for eq. (47) and *DC* = {*f*(0.02615) = 0}, *ηₑ* = 0.7984. In both panels, *n* represents the number of qubits of the quantum model.

In this final example, the developed strategy is applied to nonlinear differential equations (NDEs). We first consider a nonlinear differential equation whose analytical solution is an even function, 1 - *x*²/8, written as $4 \frac{{d}^{2} f \left(x\right)}{d {x}^{2}} + 2 {\left(\frac{d f \left(x\right)}{d x}\right)}^{2} + f \left(x\right) = 0 , BC = \left\{f\left(0\right)=1, f′\left(0\right)=0\right\} ,$ (42) The problem is solved following the same workflow as in the previously described linear cases, while noticing that the quantum state is encoded twice as |*ψ*〉*ₙ* ⊗ |*ψ*〉*ₙ* in the nonlinear (function squared) term while the quantum state for the linear term is only encoded once. To maintain the same dimension of Hilbert space, the linear terms are multiplied with the identity (e.g., as expressed in eq. (19)) such that |*ψ*〉*ₙ* ⊗ |*ψ*〉*ₙ* appears in all linear terms (at the expense of a 'doubled' Hilbert space).

Thus, for non-linear differential equations, the quantum model of eq. (4) and the homogeneous boundary conditions of eqs. (28) and (29) become, after introducing the identity: $\begin{matrix}{f}_{Q} \left(x\right) = η {f}_{q} \left(x\right) = η {\left〈τ\left(x\right)\right|}_{n + 1} {ℕ}_{1} \left({D}_{n}^{\left(0\right)}\left({x}_{s}\right)⊗{\hat{I}}_{n}\right) \left({\left|ψ\right〉}_{n}⊗{\left|ψ\right〉}_{n}\right) , \\ subject to \left({\left〈ψ\right|}_{n}⊗{\left〈ψ\right|}_{n}\right) \left({\left|ψ\right〉}_{n}⊗{\left|ψ\right〉}_{n}\right) = 1 ,\end{matrix}$ (43) ${f}_{Q} \left({x}_{0}\right) = 0 \to η {\left〈τ\left(x\right)\right|}_{n + 1} {ℕ}_{1} \left({D}_{n}^{\left(0\right)}\left({x}_{s}\right)⊗{B}_{n}\left({x}_{0}\right)\right) \left({\left|ψ\right〉}_{n}⊗{\left|ψ\right〉}_{n}\right) = 0 ,$ (44) ${f}_{Q}^{′} \left({x}_{1}\right) = 0 \to η {\left〈τ\left(x\right)\right|}_{n + 1} {ℕ}_{1} \left({D}_{n}^{\left(0\right)}\left({x}_{s}\right)⊗{B}_{n}\left({x}_{1}\right) {G}_{n}^{T}\right) \left({\left|ψ\right〉}_{n}⊗{\left|ψ\right〉}_{n}\right) = 0 ,$ (45) where eq. (15) is employed to create a linearly independent basis set. For conciseness, (〈*ψ*|*ₙ* ⊗ 〈*ψ*|*ₙ*) may also be written as 〈Ψ|_{2*n*} (and analogously for analogous expressions). The equations contain *f*(*xₛ*) encoded in the expressions. It is noted that eq. (43) is essentially identical to eq. (4) and both equations are applied to the linear and nonlinear terms of non-linear differential equations, respectively. The quantum model, represented by the state-overlap form of the nonlinear differential equations can be written as ${\left〈τ\left(x\right)\right|}_{n + 1} η A \left({\left|ψ\right〉}_{n}⊗{\left|ψ\right〉}_{n}\right) = 0$ where $A = {ℕ}_{1} \left[{D}_{n}^{\left(0\right)}\left({x}_{s}\right)⊗\left(4{\left({G}_{n}^{T}\right)}^{2}+{I}_{n}\right)+2\left({G}_{n}^{T}⊕{G}_{n}^{T}\right)\right]$ is an x-independent matrix. Given the data constraint *DC =* {*f'*(0) = 0}, the effective Hamiltonian can be written as $ℍ = T \left(A\right) + T \left({ℕ}_{1}\left({D}_{n}^{\left(0\right)}\left({x}_{s}\right)⊗{B}_{n}\left({x}_{1}\right){G}_{n}^{T}\right)\right)$. The total energy function *ε*(*η*) for the non-linear differential equation is then given by: $ε \left(η\right) = \left({\left〈ψ\right|}_{n}⊗{\left〈ψ\right|}_{n}\right) ℍ \left(η\right) \left({\left|ψ\right〉}_{n}⊗\left|{ψ}_{n}\right〉\right) = 0 ,$ (46)

Like linear DEs, solving the second-order NDEs requires one invariant constraint to obtain the state overlap solution and one regular constraint to determine the scaling factor. The regular constraint is selected as *DC_{R}* = {*f*(*xₛ* = 0) = 1}, the same as the one appearing in 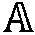 .

The consequence of the doubled Hilbert space is that 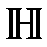 possesses at least 2^{2*n*-1} degenerate states associated with zero eigenvalue *λ*_{deg} = 0. Most importantly, the task of solving an NDE is converted to that of seeking a degenerate state |Ψ*_{g}*〉_{2*n*} = |*ψ_{g}*〉*ₙ* ⊗ |*ψ_{g}*〉*ₙ* that closely matches the analytical solution, which can be verified by substituting the chosen ground state into eq. (43) and determining the scaling factor with the given *DC_{R}.* On the other hand, the quantum model in eq. (43)indicates that the same independent variable *x* is encoded to both registers. In this case, based on the identical quantum model in eq. (4), one can simply replace the inverse Chebyshev feature map in the first register with a layer of Hadamards on each qubit and then measure the overlap in the Hadamard-Chebyshev basis, as illustrated in **Fig. 7A**. The quantum model is measured with the described quantum circuit along with eq. (54), and the result is consistent with the analytically exact solution, as shown in **Fig. 7B****.**

Another example shows a non-linear differential equation with a quadratic non-linearity on the unknown function, given by $\frac{{d}^{2} f \left(x\right)}{d {x}^{2}} - 2 f {\left(x\right)}^{2} + x = 0 , BC = \left\{f\left(-1\right)=-0.1,f\left(1\right)=0.1\right\} ,$ (47)

This non-linear differential equation has no analytical solution, so instead a numerical solution to the non-linear differential equation is found. The latent governing equation is $A = {ℕ}_{1} \left({D}_{n}^{\left(0\right)}\left({x}_{s}\right)⊗{\left({G}_{n}^{T}\right)}^{2}-2{I}_{n}⊗{I}_{n}\right) + {ℕ}_{x} \left({D}_{n}^{\left(0\right)}\left({x}_{s}\right)⊗{D}_{n}^{\left(0\right)}\left({x}_{s}\right)\right) .$ (48) Given *DC_{I}* = {*f*(0.02615) = 0}, the resultant effective Hamiltonian operator is $ℍ = T \left(A\right) +$ $T \left({ℕ}_{1}\left({D}_{n}^{\left(0\right)}\left({x}_{s}\right)⊗{B}_{n}\left(0.02615\right)\right)\right)$. *DC_{R} =* {*f*(*xₛ* = 0.5) = 0} is utilized and the choice of *DC_{R}* only affects the accuracy of the solution.

After performing measurements, the result is shown in **Fig. 7D**, demonstrating excellent agreement with the numerical solution. Overall, the representation of quantum states in a higher dimensional space is the key to solve NDEs in the degenerate eigenspace of the effective Hamiltonian 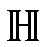 for the methods described herein.

In general, boundary (initial) conditions specify the value of the dependent variable at the domain borders (initial time) of the independent variable, which impose constraints on the solution to restrict the solution space and guarantee a unique solution to the differential equation. In PINNs (or quantum PINNs), the optimized solution is found by (variationally) minimizing a total loss function, e.g., a mean squared error (MSE), defined as the sum of individual contributions that match the differential equation and satisfy the boundary/initial conditions and data-based constraints. In general, PINNs requires a costly loss function evaluation at uniformly-spaced collocation points ( 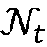 × 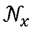 ) for solving PDEs like those shown in **Fig. 6D** and **6E**. By contrast, the methods described herein do not require evaluation at a plurality of collocation points.

In the methods described herein, however, the aim is to minimize the total (global) energy function, the expectation value of an effective Hamiltonian $ℍ \left(η\right)$, which is the sum of the symmetric forms of latent PDE and data constraint matrices whose size is determined by the number of qubits (*nₜ* + *nₓ*) used to encode the temporal and spatial quantum states.

Different from PINNs (or quantum PINNs), the formulated energy function is regarded as an eigenvalue problem and thus the solution naturally corresponds to the lowest energy eigenstate that resides in the eigenspace of 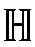 . Furthermore, 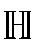 is a real symmetric matrix, which guarantees that the eigensolution exists unlike the variational or quantum matrix inversion methods. This also bypasses variational optimization and avoids barren plateaus and trainability issues in initialization and throughout optimization, offering a novel means to reach the solution of DEs in a variation-free manner. The method can thus be regarded as a novel means to reach the solution of DEs in a machine-learning amenable and yet variation-free manner. Notwithstanding the natural target of (early) fault-tolerant quantum devices, the present algorithm may be run on current, noisy quantum hardware leveraging the plethora of methods existent in the literature to (at least approximately) solve eigenvalue problems. This is demonstrated for the key step in solving the Legendre DE example (Eq. 17), using a realistic emulation of neutral atom QPUs to prepare the relevant ground states, using the pulser library. This library is compatible with cloud-accessible devices, and allows to design a pulse sequence preparing the targeted states with high-fidelity, while incorporating hardware constraints like the modulation bandwidth of the pulse.

In addition, two data constraints suffice to solve the second-order linear/nonlinear DEs (as shown in **Figs. 3-5** and **7**) and three to four data lines (**Fig. 6**) or discrete points along lines for PDE problems. In general, for higher-order linear and nonlinear DEs, *d* - 1 invariant constraints are needed and one regular constraint, where *d* is the number of degrees of freedom (e.g., the order of the differential equation). Consequently, the methods described herein do not require costly evaluations on dense collocation points, which typically raises computational costs when the problem dimensionality increases, making the current approach distinct from PINNs.

The invariant constraint plays a crucial role in separating the overlap model and scaling factor, enabling us to independently tackle them. It enforces a physics-informed restriction on the null space of ${A}^{T} A$ to ensure the state overlap solution respecting the laws of physics governed by the differential equation, while meeting the specifics of data and improving the model toward the desired outcome. Simple rescaling of a state overlap solution is more efficient than directly solving a differential equation with extra cost for a large number of collocation points. It is worth mentioning that 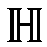 is positive-definite for linear differential equations, and thus the ground state corresponds to the lowest-energy state. However, for non-linear differential equations, 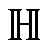 is (only) positive semi-definite, so the ground state can be one of a number of degenerate states associated with zero energy.

Alternatively, several non-homogeneous (or regular) data constraints may be used; e.g., for the shown examples, it is enough to solve linear/nonlinear DEs with 3-5 data points (**Figs. 4**, **5**, and **7**) and PDEs with 5-7 data lines (**Fig. 6**) or with discrete points along lines. In that case, the matrix elements of $ℍ \left(η\right)$ may be deliberately manipulated through supplying appropriate data constraints such that the resultant $ℍ \left({η}_{max}^{∗}\right)$ turns out to be a positive-semidefinite matrix. Note that *x*-independent ${A}^{T} A$ itself is a positive-semidefinite matrix and acts as a global (regularization) term to ensure the solution respects the laws of physics governed by the differential equation, while *x* (or *t*)-dependent ${B}_{j}^{T} {B}_{j}$ is a rank-one matrix and behaves as a local term responsible to meet the specifics of the solution and improve the model toward the desired outcome. Unlike PINNs (or quantum PINNs), the formulated total energy function can be regarded as an eigenvalue problem and thus the solution naturally corresponds to the scaled zero-energy eigenstates that resides in the null-space of $ℍ \left({η}_{max}^{∗}\right)$. This bypasses the variational optimization and avoids the barren plateaus and trainability issues in the initialization and throughout the optimization, offering a novel mean to reach the solution of DEs in a variation-free manner.

The former A is composed of qubit-dependent constant matrices $\left({G}_{n}, {\hat{I}}_{n}\right)$ and the later ${B}_{j}$ is dependent on the given local temporal and spatial datasets. These data constraints can be provided at anywhere within the domain rather than limited at the domain extreme ends like boundary/initial conditions.

An advantage of the (Chebyshev-enabled) Hamiltonian differential eigensolver described herein concerns the capability of systemically building an effective Hamiltonian and expressing the ground state of a multidimensional system. Moreover, the described effective Hamiltonian method offers the flexibility to adapt to the inputs of a multivariate system in a cost-effective manner. For example, the previously included permutation circuit *P̂* in Fig. 6A can be removed if eq. (32) is replaced with the equivalent quantum model $\begin{matrix}{f}_{Q} \left(x, y\right) = \sqrt{η} \left({\left〈τ\left(x\right)\right|}_{n}⊗\left〈0\right|⊗{\left〈τ\left(y\right)\right|}_{n}\right) {\left|ψ\right〉}_{2 n + 1} = \left(\left〈τ\left(x\right)\right.\left|{n}_{}\right.⊗\left〈τ\left(y\right)\left|{n}_{}\right.\right.\right) {ℙ}_{a} {\left|ψ\right〉}_{2 n + 1} , \\ subject to {\left〈ψ\right|}_{2 n + 1} {\left|ψ\right〉}_{2 n + 1} = 1 ,\end{matrix}$ (49) where ${ℙ}_{a}$ is a non-square constant matrix that has only one 1 in each row. In this alternative model, the unknown quantum state |*ψ*〉_{2*n*+1} is implicitly engineered to directly follow the desired input pattern of the inverse Chebyshev feature maps, |0*ₐ*〉ψ〉_{2*n*+1} = |0*ₐ*〉|*ψₓ*〉*ₙ*|0*ₐ*〉|*ψ_{y}*〉*ₙ,* and therefore *P̂* is no longer needed.

Dirichlet and Neumann boundary conditions (as described in eqs. (34) and (35)) accordingly become $\begin{matrix}{f}_{Q} \left({x}_{0}, y\right) = f \left({x}_{0}, y\right) \to \sqrt{η} {\left〈τ\left(x, y\right)\right|}_{2 n} \left({B}_{{x}_{0}}⊗{\hat{I}}_{n}\right) {ℙ}_{a} {\left|ψ\right〉}_{2 n + 1} \\ = {r}_{{x}_{0}} {\left〈τ\left(x, y\right)\right|}_{2 n} {ℙ}_{a} {\left|{c}_{r}\right〉}_{2 n + 1} ,\end{matrix}$ (50) $\begin{matrix}{f}_{Q} \left(x, {y}_{0}\right) = f \left(x, {y}_{0}\right) \to \sqrt{η} {\left〈τ\left(x, y\right)\right|}_{2 n} \left({\hat{I}}_{n}⊗{B}_{{y}_{0}}\right) {ℙ}_{a} {\left|ψ\right〉}_{2 n + 1} \\ = {u}_{{y}_{0}} {\left〈τ\left(x, y\right)\right|}_{2 n} {ℙ}_{a} {\left|{c}_{u}\right〉}_{2 n + 1} ,\end{matrix}$ $\begin{matrix}\frac{\partial {f}_{Q} \left({x}_{1}, y\right)}{\partial x} = \frac{\partial f \left({x}_{1}, y\right)}{\partial x} \to \sqrt{η} {\left〈τ\left(x, y\right)\right|}_{2 n} \left({B}_{{x}_{1}}{G}_{n}^{T}⊗{\hat{I}}_{n}\right) {ℙ}_{a} {\left|ψ\right〉}_{2 n + 1} \\ = {s}_{{x}_{1}} {\left〈τ\left(x, y\right)\right|}_{2 n} {ℙ}_{a} {\left|{c}_{s}\right〉}_{2 n + 1}\end{matrix}$ $\begin{matrix}\frac{\partial {f}_{Q} \left(x , {y}_{1}\right)}{\partial y} = \frac{\partial f \left({x}_{1} , {y}_{1}\right)}{\partial y} \to \sqrt{η} {\left〈τ \left(x , y\right) \left|{2 n}_{} \left({\hat{I}}_{n} ⊗ {B}_{{y}_{1}} {G}_{n}^{T}\right) {ℙ}_{a} \left|ψ\right.\right.\right〉}_{2 n + 1} \\ = {v}_{{y}_{0}} {\left〈τ \left(x , y\right)\right|}_{2 n} {ℙ}_{a} {\left|{c}_{v}\right〉}_{2 n + 1} .\end{matrix}$ (51)

For homogenous data constraints, *r*_{*x*₀}, *u*_{*y*₀}*, s*_{*x*₁}*,* and/or *v*_{*y*₀} are equal to zero. For inhomogeneous data constraints, the corresponding weighting factors associated with the function and derivative values are calculated, subject to ${\left〈{c}_{r}\right|}_{2 n + 1} {ℙ}_{a}^{T} {ℙ}_{a} {\left|{c}_{r}\right〉}_{2 n + 1} =$ ${\left〈{c}_{s}\right|}_{2 n + 1} {ℙ}_{a}^{T} {ℙ}_{a} {\left|{c}_{s}\right〉}_{2 n + 1} = {\left〈{c}_{u}\right|}_{2 n + 1} {ℙ}_{a}^{T} {ℙ}_{a} {\left|{c}_{u}\right〉}_{2 n + 1} = {\left〈{c}_{v}\right|}_{2 n + 1} {ℙ}_{a}^{T} {ℙ}_{a} {\left|{c}_{v}\right〉}_{2 n + 1} = 1$.

For the case of Laplace's equation, the state-overlap quantum model is ${\left〈τ\left(x, y\right)\right|}_{2 n} \sqrt{η} A {\left|ψ\right〉}_{2 n + 1} = 0$ with $A = \left({G}_{n}^{T}⊗{G}_{n}^{T}\right) {ℙ}_{a}$. The (2n + 1)-qubit ground state can be found by eigen-solving the total energy function $ε \left(η\right) = {\left〈ψ\right|}_{2 n + 1} ℍ \left(η\right) {\left|ψ\right〉}_{2 n + 1} = 0$ using the same approach as described previously. After discarding *N*² degenerate zero-energy states, the ground state |*ψ_{g}*〉_{2*n*+1} associated with the lowest eigenvalue is found. Both approaches return the same values of *ηₑ* under the same data constraints for different PDE problems, but this alternative approach provides the ground state exactly matching the inverse Chebyshev feature map circuits without the need of the complex permutation circuit (because the effect of **P̂** has been absorbed into the effective Hamiltonian operator). Therefore, the resulting quantum circuit (**Fig. 6B**) used to evaluate the two-dimensional state overlaps is similar to that in ODEs (**Fig. 3A**).

**Fig. 7B** shows an alternative quantum circuit for applying the methods described herein to PDEs. Quantum circuit used to evaluate the two-dimensional state overlaps, (0*ₐ τ*(*x*) 0*ₐ τ*(*y*)|0*ₐ ψₓ* 0*ₐ ψ_{y}*〉, through the interferometric measurement where a single overlap measurement can be obtained from two separate measurements of overlap probabilities. The circuit is initialized with a zero-product state and a state preparation circuit is utilized to prepare the desired state of a problem of interest for parallel inverse Chebyshev feature maps to obtain the overlap probabilities in the Chebyshev basis.

To verify if the same procedure is applicable to NDEs, Eqs. (28), (29) and (30) are rewritten as: $\begin{matrix}{f}_{Q} \left(x\right) = η \left({\left〈τ\left(x\right)\right|}_{n}⊗\left〈0\right|⊗{\left〈τ\left(x\right)\right|}_{n}\right) \left({D}_{n}^{\left(0\right)}⊗{\hat{I}}_{1}⊗{\hat{I}}_{n}\right) {\left|Ψ\right〉}_{2 n + 1} \\ = η {\left〈τ\left(x\right)\right|}_{n + 1} {ℚ}_{a} \left({D}_{n}^{\left(0\right)}⊗{\hat{I}}_{1}⊗{\hat{I}}_{n}\right) {\left|Ψ\right〉}_{2 n + 1} , s . t . {\left〈Ψ\right|}_{2 n + 1} {\left|Ψ\right〉}_{2 n + 1} = 1 ,\end{matrix}$ $f \left({x}_{0}\right) = 0 \to η {\left〈τ\left(x\right)\right|}_{n + 1} {ℚ}_{a} \left({D}_{n}^{\left(0\right)}⊗{\hat{I}}_{1}⊗{B}_{n}\left({x}_{0}\right)\right) {\left|Ψ\right〉}_{2 n + 1} = 0 ,$ $f ′ \left({x}_{1}\right) = 0 \to η {\left〈τ\left(x\right)\right|}_{n + 1} {ℚ}_{a} \left({D}_{n}^{\left(0\right)}\left({x}_{s}\right)⊗{\hat{I}}_{1}⊗{B}_{n}\left({x}_{1}\right){G}_{n}^{T}\right) {\left|Ψ\right〉}_{2 n + 1} = 0 ,$ where ${ℚ}_{a}$ is a non-square constant matrix with the matrix elements like ${ℕ}_{1}$. For the case of Eq. (39), the corresponding quantum model is ${\left〈τ\left(x\right)\right|}_{n + 1} η A {\left|Ψ\right〉}_{2 n + 1} = 0$, with $A =$ ${ℚ}_{a} \left({D}_{n}^{\left(0\right)}\left({x}_{s}\right)⊗{\hat{I}}_{1}⊗\left(4{\left({G}_{n}^{T}\right)}^{2}+{\hat{I}}_{n}\right)+2\left({G}_{n}^{T}⊗{\hat{I}}_{1}⊗{G}_{n}^{T}\right)\right)$, and the total energy function is $ε = {\left〈Ψ\right|}_{2 n + 1} ℍ {\left|Ψ\right〉}_{2 n + 1} = 0$, with $ℍ = T \left(A\right) + T \left({ℚ}_{a}\left({D}_{n}^{\left(0\right)}\left({x}_{s}\right)⊗{\hat{I}}_{1}⊗{B}_{n}\left({x}_{1}\right){G}_{n}^{T}\right)\right)$. The (2n + 1)-qubit ground state can be found from the degenerate zero-energy space of 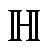 with the number of degeneracy increased by *N*²*.* Again, both approaches return the same value of *ηₑ.* The resulting quantum circuit, which can be used to measure the state overlap related to the quadratic nonlinearity, is depicted in **Fig. 7B**.

It is noted that if the solution function has neither zero crossings nor zero slopes in the Chebyshev domain, invariant constraints do not exist. For instance, consider this situation with a NDE whose analytical solution is a cubic function -(*x* - 3)³/27, written as: $3 f \left(x\right) \frac{d {f}^{2} \left(x\right)}{d {x}^{2}} - 2 {\left(\frac{d f \left(x\right)}{d x}\right)}^{2} = 0 , BC = \left\{f\left(0\right)=1,f′\left(0\right)=-1\right\} ,$ (52)

Apparently, invariant constraints are not available for this analytical solution in the interval [-1,1]. A new dependent variable may be defined as *f̃*(*x*) *= f*(*x*) *- f*(*0*) *= f*(*x*) - 1 so that Eq. (39) becomes: $3 {f}^{˜} \left(x\right) \frac{d {{f}^{˜}}^{2} \left(x\right)}{d {x}^{2}} + 3 \frac{d {{f}^{˜}}^{2} \left(x\right)}{d {x}^{2}} - 2 {\left(\frac{d {f}^{˜} \left(x\right)}{d x}\right)}^{2} = 0 , BC = \left\{{f}^{˜}\left(0\right)=0,f′\left(0\right)=-1\right\} ,$ (53)

Now, eq. (53) has *DC_{I}* = {*f̃*(0) = 0} and the methods described above for homogeneous or invariant data constraints are applicable. The corresponding effective Hamiltonian operator is $ℍ = T \left(A\right) + T \left({ℕ}_{1}\left({D}_{n}^{\left(0\right)}\left({x}_{s}\right)⊗{B}_{n}\left(0\right)\right)\right)$ with $A = {ℕ}_{1} \left(3\left({\hat{I}}_{1}+\right.\right.$ ${D}_{n}^{\left(0\right)} \left.\left({x}_{s}\right)\right) ⊗ {\left({G}_{n}^{T}\right)}^{2} - 2 \left.\left({G}_{n}^{T}⊗{G}_{n}^{T}\right)\right)$, where *DC_{R}* = { *f̃*(-1/16) = *f*(-1/16) - 1} is utilized. As soon as ${{f}^{˜}}_{Q}^{∗} \left(x\right)$ is obtained, the original quantum model solution can be retrieved by ${f}_{Q}^{∗} \left(x\right) =$ ${{f}^{˜}}_{Q}^{∗} \left(x\right) + 1$.

Eq. (54) allows evaluation of the quantum model that contains the quadratic nonlinearity. $Re \left[{f}_{Q}\left(x\right)\right] = {η}_{e} {N}_{D} {N}_{G} 2 N \left({N}_{C}{\left|{\hat{O}}_{C}\left(x\right)\right|}^{2}-{\left|{\hat{O}}_{G}\left(x\right)\right|}^{2}-\frac{1}{4 {N}^{2}}\right) ,$ (54) where ${\left|{\hat{O}}_{G}\left(x\right)\right|}^{2} = {\left|\left〈{0}_{a}∅ {0}_{a}∅\right|\left({\hat{H}}^{⊗ \left(n+1\right)}⊗{\hat{U}}_{τ}^{†}\left(x\right)\right){\left|{Ψ}_{G}\right〉}_{2 n + 2}\right|}^{2}$ is the overlap probability of measuring the Hadamard-Chebyshev basis state |+*ₐ*〉|*+*〉^{⊗n}|0*ₐ*〉|*τ*(*x*)〉*ₙ* given 2(*n* + 1)-qubit ground state |*Ψ_{G}*〉_{2*n*+2} = (*Î*₁ ⊗ *D̂ₙ* ⊗ *Î*_{1+*n*})(*Î*₁ ⊗ *P̂*)|0*ₐ*〉|0*ₐ*〉|Ψ*_{g}*〉_{2*n*} with |Ψ*_{g}*〉_{2*n*} prepared by, e.g., imaginary-time evolution (as described below) based on the obtained 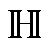 . *P̂* is a permutation circuit and *D̂* is a data constraint circuit with ${N}_{D} = \left‖{D}_{n}^{m}\left({x}_{s}\right)\right‖$ being a subnormalization factor. 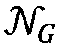 is the 2-norm of |*Ψ_{G}*〉_{2*n*+2}. ${\left|{\hat{O}}_{C}\left(x, y\right)\right|}^{2} = {\left|\left〈{0}_{a}∅ {0}_{a}∅\right|\left({\hat{H}}^{⊗ \left(n+1\right)}⊗{\hat{U}}_{τ}^{†}\left(x\right)\right){\left|{Ψ}_{C}\right〉}_{2 n + 2}\right|}^{2}$ is the overlap probability of measuring the Hadamard-Chebyshev basis state |+*ₐ*〉|+〉^{⊗*n*}|0*ₐ*〉|*τ*(*x*)〉*ₙ* given 2(*n* + 1)-qubit ground state |Ψ*_{C}*〉_{2*n*+2} = (|*Ψ_{G}*〉_{2*n*+2} + |Ψ*ᵣ*〉_{2*n*+2})/ 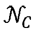 with 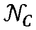 being the 2-norm of (|*Ψ_{G}*〉_{2*n*+2} + |*Ψᵣ*〉_{2*n*+2}). The reference state |*Ψᵣ*〉_{2*n*+2} is set as |0〉^{⊗(2*n*+2)} so as to easily decouple the reference function when computing the real part of the product term, and *N* = 2*ⁿ* is used.

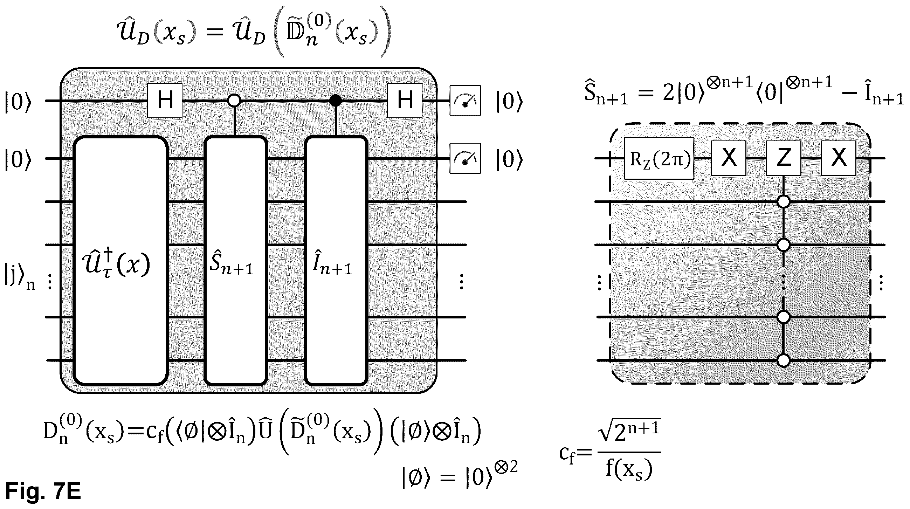

**Fig. 7E** is an example of a data constraint circuit, for example, circuit *D̂* in **Fig. 7A** and **7B****.** More in particular, **Fig. 7E** shows an implementation of ${\hat{U}}_{D} \left({{D}^{˜}}_{n}^{\left(0\right)}\left({x}_{s}\right)\right)$ via linear combinations of unitary operations, where ${{D}^{˜}}_{n}^{\left(0\right)} \left({x}_{s}\right) = {B}_{n} \left({x}_{s}\right) / \sqrt{{2}^{n + 1}}$. ${\hat{U}}_{τ}^{†} \left(x\right)$ is an inverse Chebyshev feature map, and *Ŝ*_{*n*+1} is a special type of the Grover diffusion operator for performing a reflection about the all zeros state.

**Fig 8A-C** show various quantum circuits that can be used in embodiments.

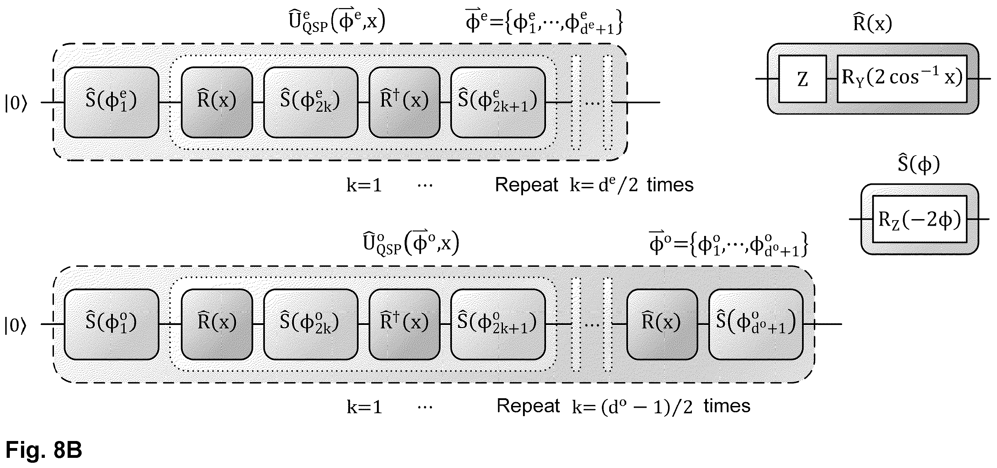

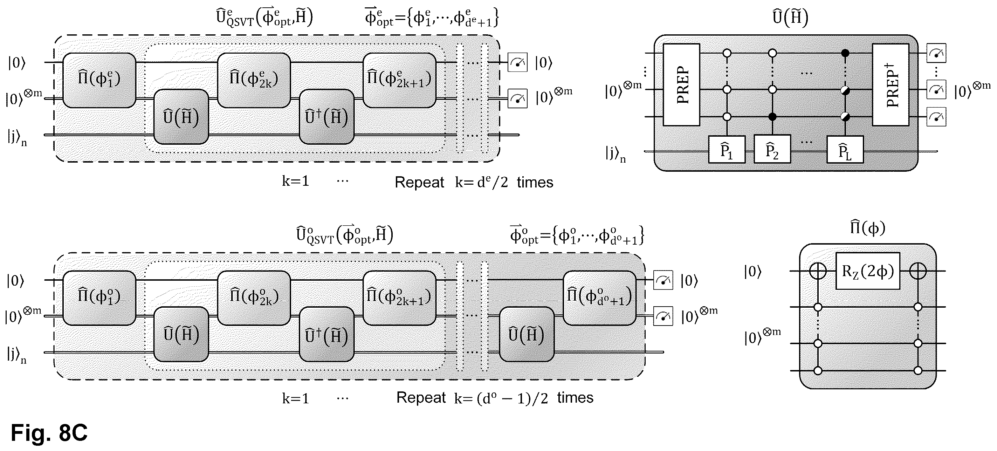

**Fig. 8A** shows quantum circuits for QSVT-based quantum imaginary time evolution. Panel **(a)** shows a 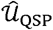 (*̅ϕ̅*̅, *x*) circuit used to generate a polynomial approximation of a mixed parity function based on the sum of even and odd polynomials via LCU. Relevant QSP subroutine circuits for even and odd parity are shown in **Fig. 8B**. Panel **(b)** shows a Re[ 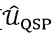 (*̅ϕ̅*̅, *x*)] circuit used to find the phase angles generating a polynomial approximation to e^{-*tx*}, where *t* is the evolution time. Panel **(c)** shows a ${\hat{U}}_{QSVT} \left({\vec{ϕ}}_{opt}, {ℍ}^{˜}\right)$ circuit used to generate a mixed parity polynomial transformation of a normalized effective Hamiltonian operator ${ℍ}^{˜}$ given a set of optimal phase angles obtained from **(b).** Relevant QSVT subroutine circuits for even and odd parity are shown in **Fig. 8C**. Panel **(d)** shows a $Re \left[{\hat{U}}_{QSVT}\left({\vec{ϕ}}_{opt}, {ℍ}^{˜}\right)\right]$ circuit producing ${e}^{- t {ℍ}^{˜}}$ in top left block used to find the ground state of ${ℍ}^{˜}$ in the second n-qubit register after measuring the first (*a* + 3)-qubit register and postselecting on the |0〉^{⊗(*a*+3)} outcome. ${ℍ}^{˜}$ is a symmetric operator, in this context typically the effective Hamiltonian. H denotes the Hadamard gate.

**Fig. 8B** shows quantum circuits for even and odd parity QSP circuits. Quantum signal processing (QSP) is performed by the repeated applications of the single-qubit reflection and parameterized *Z*-rotation gates, **R̂**(*x*) and **Ŝ**(*ϕ*). The phase angles *ϕ̅ =* {*ϕ̅^{e}, ϕ̅^{o}*} comprise even and odd parity groups, ${\vec{ϕ}}^{e} = \left\{{ϕ}_{1}^{e},…,{ϕ}_{{d}^{e} + 1}^{e}\right\}$ and ${\vec{ϕ}}^{o} = \left\{{ϕ}_{1}^{o},…,{ϕ}_{{d}^{o} + 1}^{o}\right\}$ where *d^{e}* and *d^{o}* are the maximum degrees of even and odd polynomial components of *p(x),* respectively. Note that *R̂*(*x*) is a symmetric operator.

**Fig. 8C** shows quantum circuits for even and odd parity QSVT circuits. Quantum singular value transformation (QSVT) operation is composed of repeated applications of block-encoding unitary and projector-controlled phase gates, $\hat{U} \left({ℍ}^{˜}\right)$ and Π̂(*ϕ*), where ${ℍ}^{˜} =$ $ℍ \left({η}_{max}^{∗}\right) / \left‖ℍ\left({η}_{max}^{∗}\right)\right‖$ is a normalized effective Hamiltonian (symmetric) operator. *̅ϕ̅*̅ₒₚₜ = $\left\{{\vec{ϕ}}_{opt}^{e}, {\vec{ϕ}}_{opt}^{o}\right\}$ is a set of optimal phase angles. $\hat{U} \left({ℍ}^{˜}\right)$ is an a-qubit block-encoding of 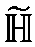 , which is constructed using the combination of PREPARE and SELECT subroutines based on Pauli decomposition of 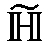 .

As soon as the effective Hamiltonian operator ${ℍ}_{eff}$ is ready, the zero-energy eigenstate (ground state) can be prepared by the quantum imaginary-time evolution (QITE). Known subroutines, such as quantum signal processing (QSP) and quantum singular value transformation (QSVT), may be used to realize QITE. First, phase angles are searched for generating a polynomial approximation of the target function, *p*(*x*) ≈ e^{-*t x*}. Since the function e^{-*t x*} has indefinite parity, *p(x)* can be synthesized by the sum of even and odd polynomials. This sum operation is accomplished by a mixed parity polynomial approximation circuit 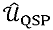 (*ϕ̅, x*) consisting of opposite parity QSP circuits ${\hat{U}}_{QSP}^{e} \left({\vec{ϕ}}^{e}, x\right)$ and ${\hat{U}}_{QSP}^{o} \left({\vec{ϕ}}^{o}, x\right)$ via a linear combination of unitaries (LCU), as shown in **Fig. 8A**, panel (a), where the phase angles *̅ϕ̅*̅ = {*ϕ̅^{e}, ϕ^{o}*} are split into even and odd parity groups, ${\vec{ϕ}}^{e} = \left\{{ϕ}_{1}^{e},…,{ϕ}_{{d}^{e} + 1}^{e}\right\}$ and *ϕ̅^{o}* = $\left\{{ϕ}_{1}^{o},…,{ϕ}_{{d}^{o} + 1}^{o}\right\}$ for each QSP circuit (**Fig. 8B**), with *d^{e}* and *d^{o}* being the maximum degrees of even and odd polynomial components of *p(x),* respectively. Note that *p(x)* is a purely real polynomial corresponding to the top left entry of Re[ 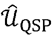 (*̅ϕ̅*̅, *x*)] circuit which can be similarly constructed using a linear combination of unitaries, as shown in **Fig. 8A**, panel (b). The phase angles are then adjusted until *p(x)* gets closer to the target function e^{-*t x*} and then a set of optimal phase angles ${\vec{ϕ}}_{opt} = \left\{{\vec{ϕ}}_{opt}^{e}, {\vec{ϕ}}_{opt}^{o}\right\}$ is obtained. We then upload the optimal phase angles to a mixed parity polynomial transformation circuit ${\hat{U}}_{QSVT} \left({\vec{ϕ}}_{opt}, {ℍ}^{˜}\right)$ composed of opposite parity QSVT circuits ${\hat{U}}_{QSVT}^{e} \left({\vec{ϕ}}_{opt}^{e}, {ℍ}^{˜}\right)$ and ${\hat{U}}_{QSVT}^{o} \left({\vec{ϕ}}_{opt}^{o}, {ℍ}^{˜}\right)$ via LCU, as shown in **Fig. 8A**, panel (c). The argument ${ℍ}^{˜}$ is a normalized effective Hamiltonian operator, ${ℍ}^{˜} =$= $ℍ \left({η}_{max}^{∗}\right) / \left‖ℍ\left({η}_{max}^{∗}\right)\right‖$. Inside each QSVT circuit (**Fig. 8C**), the unitary $\hat{U} \left({ℍ}^{˜}\right)$ is an *a*-qubit block-encoding of 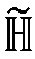 , which can be constructed using PREPARE and SELECT subroutines based on Pauli decomposition of 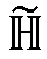 , with the numbers of ancillary qubits proportional to the numbers of Pauli string operators. Finally, $p \left({ℍ}^{˜}\right) \approx {e}^{- t {ℍ}^{˜}}$ is a purely real matrix polynomial corresponding to an (*a* + 3)-qubit encoding of $Re \left[{\hat{U}}_{QSVT}\left({\vec{ϕ}}_{opt}, {ℍ}^{˜}\right)\right]$ circuit which can be similarly constructed via LCU, as shown in **Fig. 8A**, panel (d). The acceptable value of time evolution *t* is determined by the maximum eigenvalue of 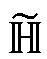 . For the DEs shown in **Fig. 4A** and **4B**, *t* = 120 is enough to recover the *n*-qubit ground state in the second register.

**Fig. 9A** shows a quantum circuit for a derivative operator and **Fig. 9B** shows a quantum circuit of a R-shift operator. More in particular, **Fig. 9A** shows a quantum circuit $\hat{U} \left({G}_{n}^{T}\right)$ for a derivative operator ${G}_{n}^{T}$ for a Chebyshev basis for 3 qubits (*n* = 3). The quantum circuit uses a first register **902** with *n* = 3 qubits (shown at the bottom) for encoding the Chebyshev basis functions, a single-qubit temporary register **904** (shown in the middle) to temporarily store qubit values for the R-shift circuits in block **930,** a second register **906** with *m = n* - 1 = 2 qubits, and an ancilla **908.** The first register may comprise a non-zero input, while the temporary register, the second register, and the ancilla are initialised in the zero state. The qubits in the first register may be numbered 1 ... *n* from top to bottom, with qubit n considered the least significant bit. For the sake of controlling the ancilla (or other qubits), the qubits in the first register may be interpreted as a bit string; i.e., if a qubit is controlled by bitstring 101 = 5, it is controlled by the first and third qubits, but not by the second.

The second register **906** is equipped with Hadamard gates H at the beginning and end of the quantum circuit. Two initial *R_{Y}* gates are applied to the ancilla **908.** Subsequently, a first block **910** comprises *n R_{Y}* gates acting on the ancilla, shown as *R_{Y}*(*θₖ*), *k =* 1,...*,n,* which are controlled by the (*n* + 1 - *k*)^{th} qubit (or bitstring 2^{*k*-1}) in the first register 902. A second block comprises 2*^{m}* - 1 *R_{Y}* gates acting on the ancilla, shown as *R_{Y}*(*ϕₗ*), *l =* 1,..., 2*^{m}* - 1, which are controlled by the bitstring 2*l* + 1 in the in the first register **902** and the bitstring *l* in the second register **906.**

The argument variables are as follows: ${θ}_{1}^{c} = 2 arccos α - π + Δ$, *θₖ* = *-*2^{*k*-1}Δ, and *φₗ* = 2 arccos[*α*(2*l* + 1)] - *π* + (2*l +* 1) Δ, with $α = \sqrt{2} / \left‖{G}_{n}^{T}\right‖ , Δ = \left(π-2 arccos\left[\sqrt{2} α/\left(N-1\right)\right]\right) /$ (*N -* 1), and *N* = 2*ⁿ*.

The third block **930** of the quantum circuit is composed of a series of R-shift circuits *R̂ₙ*, an example of which is shown in **Fig. 9B**.

**Fig. 9C** shows an alternative quantum circuit for a derivative operator, more in particular a Chebyshev differentiation circuit. The implementation of $\hat{U} \left({{G}^{˜}}_{n}^{T}\right)$ via linear combinations of unitary operations, where ${{G}^{˜}}_{n}^{T} = {G}_{n}^{T} / {\left‖{G}_{n}^{T}\right‖}_{S}$, is a normalised differentiation operator. The *m*-register is equipped with *m* Hadamard gates at the beginning and end of the circuit (where *m* = *n*). The R_{Y} gates acting on the top ancilla are controlled by the bit string |*j*〉*ₙ* = |2^{*k*-1}〉 in the *n* register of 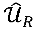 , and bit strings |*i*〉*ₘ* = |0〉^{⊗*m*} and |*j*〉*ₙ* = |2^{*k*-1}〉 in the m and *n* registers of 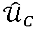 , respectively. The argument variables are as follows: *ω_{c}* = $2 arccos \sqrt{1 / 3} , α = 2 / {\left‖{G}_{n}^{T}\right‖}_{S}$, *θₖ* = 2 arcsin(-2 ^{*k*-1} *α*), ${φ}_{k} = 2 arcsin \left[-{2}^{k - 1}α \left(1/\sqrt{2}-1\right)\right]$. The last part of each unitary subroutine is composed of *n* R-shift (*R̂ₙ*) circuits for 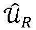 and one L-shift (*L̂ₙ*) circuit plus 2 *n* SWAP gates for 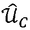 . **Fig. 9C** shows the case for *n* = 3 is shown here.

**Fig. 10A-D** depict circuit diagrams for evaluating an overlap, respectively a derivative thereof, according to various embodiments. Other embodiments may use different circuits to measure the overlap of two wave functions. In particular, **Fig. 10A** shows a circuit diagram for implementation of a squared overlap of the general form ${\left|\left〈{ψ}_{j}|{ψ}_{k}\right〉\right|}^{2} = \left〈0\left|{\hat{U}}^{†}\hat{V}\right|0\right〉 \left〈0\left|\hat{U}{\hat{V}}^{†}\right|0\right〉 .$ (55)

In this example, a so-called SWAP-test (as defined in H. Buhrman et al. "Quantum fingerprinting", Physical Review Letters 107:16 (2001), page 167902, which is hereby incorporated by reference) is used to measure the expectation value |〈*ψⱼ*|*ψₖ*〉|² of an overlap of two wave functions |*ψⱼ*〉 and |*ψₖ*〉 directly. The wave functions |*ψⱼ*〉 and |*ψₖ*〉 typically correspond to the solution wavefunction |*ψ*ₛₒₗ〉 (representing function coefficients) and the basis functions of the chosen basis (e.g., a one-dimensional or multi-dimensional Chebyshev basis). The swap test may be performed by having two parallel registers of n qubits, one for a first wave function |*ψⱼ*〉 **1002** and one for a second wave function |*ψₖ*〉 **1004,** plus a single ancillary qubit **1006.** Thus, the swap test requires 2*n* + 1 qubits where n is the number of qubits used to express |*ψⱼ*〉.

A unitary operator 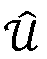 is applied to the registers for |*ψⱼ*〉 and |*ψₖ*〉, respectively, in order to obtain |*ψⱼ*〉 = 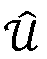 |0〉 **1008** and |*ψₖ*〉 = 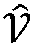 |0〉 **1010.** A Hadamard gate H **1012** is applied to the ancillary qubit, and then a controlled-SWAP operation **1014** is performed between all qubits of the other registers, conditioned on the ancilla qubit with a control operation **1016.** The controlled swap onto the size 2n register is made up of controlled swap on the *i*^{th} qubit of each of the two size *n* registers, for *i* ∈ 1: *n.* Subsequently, another Hadamard gate **1018** is applied to the ancillary qubit and the qubit is then measured in the Z basis **1020** to read the squared overlap value |〈*ψⱼ*|*ψₖ*〉|*².*

If *ψⱼ* and *ψₖ* are equal, the SWAP operation will not do anything, and hence the two Hadamard gates will combine to an *X* gate and the measurement results always exactly 1. If *ψⱼ* and *ψₖ* are different, the controlled-SWAP gate will incur a phase-kickback on the ancillary qubit, which is detected as an average value of the measurement between 0 and 1. This way, the squared overlap can be estimated using this circuit, which is physically implementable even on current-generation qubit-based quantum computers.

**Fig. 10B** shows a circuit diagram for an alternative implementation of an overlap measurement. This circuit may be used to determine an overlap $\left〈{ψ}_{j}\left|{ψ}_{k}\right.\right〉 = \left〈0\left|{\hat{U}}^{†}\hat{V}\right|0\right〉$ (56) (or functions thereof). Using this circuit, the real and imaginary parts of the overlap 〈*ψⱼ*|*ψₖ*〉 may be measured by means of a so-called 'Hadamard-test'. In this case, both *x* and *y* are mapped to one register of n qubits **1022.** A single ancillary qubit **1024** may be used for measurements. Thus, the swap test requires *n* + 1 qubits where *n* is the number of qubits used to express |*ψⱼ*〉.

First a Hadamard gate **1028** is applied to the ancillary qubit. Then, an (undaggered) unitary operator 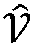 is applied to the register to create a quantum state |*ψₖ*〉 = 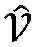 |0〉, followed by a daggered unitary operator 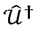 , in order to obtain a quantum state |*ψ_{j,k}*〉 = 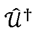 |0〉 **1030.** The application of the unitary operators is controlled by the ancillary qubit **1032.** This circuit employs the identity $\left〈{ψ}_{j}\left|{ψ}_{k}\right.\right〉 = \left〈0\left|{\hat{U}}^{†}\hat{V}\right|0\right〉 = \left〈0\left|{ψ}_{j , k}\right.\right〉$ (57)

An *S*-gate *S^{b}* = exp(-i *b π Z*/4) is then applied **1034** to the ancillary qubit, where Z is the Pauli-Z operator. It is noted that if *b* = 0, this gate does nothing. This is followed by an Hadamard gate **1036** and then a measurement operation **1038.** Steps **1034-1038** may be applied twice, once with *b* = 0 to measure the real part of the overlap *Re*(〈*ψⱼ*|*ψₖ*〉) and once with *b* = 1 to measure the imaginary part of the overlap Im(〈*ψⱼ*|*ψₖ*〉), but in many applications, only either the real or imaginary part is needed, so that a single application suffices.

Based on these measurements, various overlap-related functions may be constructed (typically using a classical computer), e.g. $\left〈{ψ}_{j}\left|{ψ}_{k}\right.\right〉 = Re \left(\left〈{ψ}_{j}\left|{ψ}_{k}\right.\right〉\right) + Im \left(\left〈{ψ}_{j}\left|{ψ}_{k}\right.\right〉\right)$ (58) or ${\left|\left〈{ψ}_{j}\left|{ψ}_{k}\right.\right〉\right|}^{2} = Re {\left(\left〈{ψ}_{j}\left|{ψ}_{k}\right.\right〉\right)}^{2} + Im {\left(\left〈{ψ}_{j}\left|{ψ}_{k}\right.\right〉\right)}^{2} .$ (59)

**Fig. 10C** shows a quantum circuit diagram for an alternative implementation of an overlap measurement. The quantum circuit is similar to **Fig. 10B**, but instead of the controlled-unitary **1030,** a control-free version **1042** of the (same) unitary is used. Finally, all n qubits are measured (rather than only the ancillary qubit), and the number of times a zero is observed divided by the total number of measurements is an estimate of the squared overlap value |〈*ψⱼ*|*ψₖ*〉|².

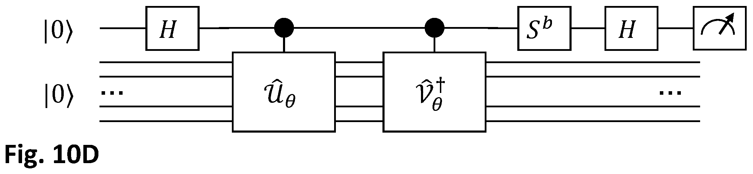

**Fig. 10D** is a circuit diagrams of Hadamard tests to measure overlaps. **Fig. 10D** shows a Hadamard test measuring $Re \left(\left〈0\left|{\hat{U}}_{θ}^{†}{\hat{V}}_{θ}\right|0\right〉\right)$ and $Im \left(\left〈0\left|{\hat{U}}_{θ}^{†}{\hat{V}}_{θ}\right|0\right〉\right)$ for *b* = 0 and *b* = 1, respectively. *S^{b}* denotes the phase gate, exp(-*π b* Z/4). When *b* = 0 and *b* = 1 are used the real and imaginary part is evaluated, respectively. By summing over *b* = 0/1 the full overlap can be evaluated.

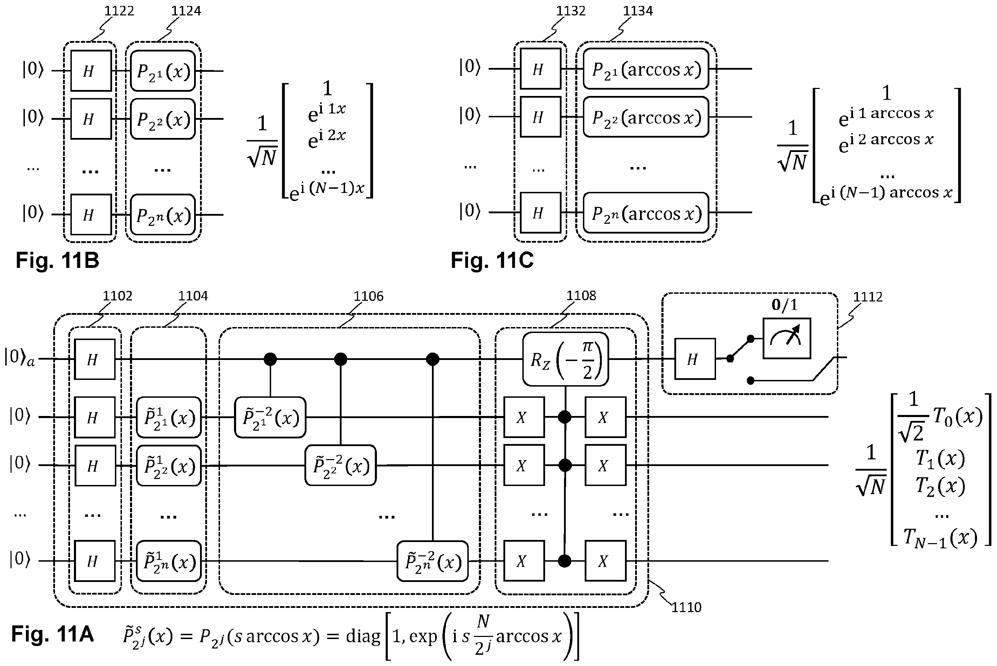

The construction of the circuit shown in **Fig. 11A**, which encodes a data point *x* with a Chebyshev feature map, is based on the observation that the Chebyshev polynomials are defined as *Tₖ*(*x*) = cos(*k* arccos(*x*)) and are therefore of the form of cosine; in particular, ${T}_{k} \left({x}_{j}^{Ch}\right) = cos \left(k π \left(1-\frac{j + 1 / 2}{N}\right)\right)$. The cosine can be recovered from $cos \left(x\right) = \frac{1}{2} \left({e}^{i x}+{e}^{- i x}\right)$, which can be implemented with the use of an ancillary qubit.

Thus, the Chebyshev polynomials can be prepared using a combination of exponents for some scaled variable *x,* where each amplitude is embedded via a phase feature map, as described in O. Kyriienko et al., 'Protocols for trainable and differentiable quantum generative modelling', Phys. Rev. Research 6 (2024) 033291, which is hereby incorporated by reference in its entirety. The positive and negative phase can be combined using a so-called Linear Combination of Unitaries (LCU) approach, as described in Childs et al., 'Quantum algorithm for systems of linear equations with exponentially improved dependence on precision', SIAM Journal on Computing 46 (2017) pages 1920-1950, which is hereby incorporated by reference in its entirety.

In this approach, maps are conditioned on the state of the (top) ancilla qubit, and effectively interfered, choosing the ancilla collapsed to 0 outcome.

In a first step **1102,** a layer of Hadamard gates is applied to all qubits (including the ancilla) to prepare a superposition of all basis states. In a step **1104,** a single-qubit scaled phase shift gate ${{P}^{˜}}_{{2}^{j}}^{1} \left(x\right)$ is applied to the encoding qubits, which is defined as ${{P}^{˜}}_{{2}^{j}}^{s} = {P}_{{2}^{j}} \left(s arccos x\right) = diag \left[1, exp\left(i s\frac{N}{{2}^{j}}arccos x\right)\right]$ (60) where *j* is the qubit number. This is followed by a layer **1106** of controlled single-qubit scaled phase feature maps ${{P}^{˜}}_{{2}^{j}}^{- 2} \left(x\right)$ that are conditioned on the ancilla. Conceptually, the first layer corresponds to exp(i *x*) and the second layer corresponds to exp(-i 2*x*). However, since exp(-i *x)* = exp(i *x)* exp(-i 2*x*), this results in equal-weight combinations of exponents exp(i *x)* + exp(-i *x).* Thus, the amplitudes for the basis functions are scaled, based on the variable *x* such that *Tₖ*(*x*) are recovered.

Finally, the weight of the constant (*T*₀(*x*)) term is adjusted. The depicted example uses a round of Grover's iterate circuit **1108,** rotating the state around |Ø〉 for a fixed angle -*π*/2. As the measurement operation **1112** on the ancilla (including the preceding Hadamard gate) commutes with rotation, the measurement can be postponed to the end of the circuit. This allows post-selection of the desired state also on systems where only all qubits can be read out simultaneously.

This way, the resulting quantum Chebyshev feature map creates a Chebyshev state via an x-parametrized isometry.

The layers **1102-1108** may together be referred to as the Chebyshev feature map **1110,** as in practice the measurement on the ancilla may often be postponed, with one or more other circuits in between. The Chebyshev feature map may be represented by a unitary operator 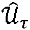 (*x*).

This results in a state such that at the set of the *N* = 2*ⁿ* Chebyshev nodes an orthonormal basis is formed. Therefore, there exists a bijection and corresponding transformation between this basis and any different orthonormal basis. **Fig. 5A** shows the Chebyshev transform which performs the transformation between the Chebyshev and computational bases.

**Fig. 11B** schematically shows a quantum circuits for a Fourier feature map (Fourier encoding or spectral encoding), for the sake of comparison. This circuit does not use an ancilla. The circuit comprises a layer of Hadamard gates **1122** to create a superposition of all basis states, followed by a layer **1124** of (unscaled) single-qubit phase feature maps ${P}_{{2}^{j}} \left(x\right) = diag \left[1, exp\left(i\frac{N}{{2}^{j}}x\right)\right]$ (61)

**Fig. 11C** schematically shows a quantum circuits for a phase-encoded Chebyshev-like feature map, for the sake of comparison. This circuit does not use an ancilla. The circuit comprises a layer of Hadamard gates **1132** to create a superposition of all basis states, followed by a layer **1134** of (scaled) single-qubit phase feature maps ${{P}^{˜}}_{{2}^{j}}^{1} \left(x\right) = {P}_{{2}^{j}} \left(arccos x\right) = diag \left[1, exp\left(i\frac{N}{{2}^{j}}arccos x\right)\right]$ (62)

For the sake of clarity, it is noted that the feature maps referred to as Chebyshev encoding feature maps in previous disclosures by the present inventors are fundamentally different from the Chebyshev feature map described herein. For example, the previously described feature maps have, in general, a non-zero imaginary part, and are not orthonormal. This prevents their conversion to amplitude encoding (which is standard in quantum information processing), and building distributions for generative modelling in particular. By contrast, the currently disclosed Chebyshev feature map is orthonormal and real (i.e., the imaginary part is zero), and may therefore be considered an amplitude encoding.

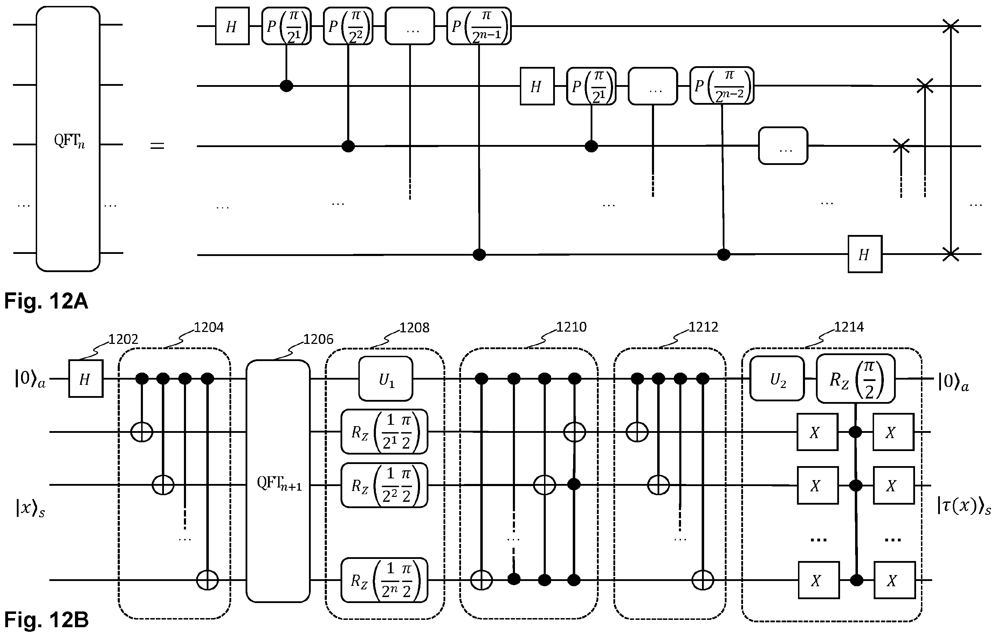

**Fig. 12A** schematically shows an example of a quantum Fourier transform circuit, as may be used in layer **1206** of the quantum Chebyshev transform shown in **Fig. 12B****.**

**Fig. 12B** schematically shows an example of a Quantum Chebyshev transform circuit according to an embodiment. This circuit maps computational basis states ${\left\{\left|j\right〉\right\}}_{j = 0}^{N - 1}$ into Chebyshev states ${\left\{\left|τ\left({x}_{j}^{Ch}\right)\right〉\right\}}_{j = 0}^{N - 1}$. Similar to the Chebyshev amplitude encoding, this circuit uses an ancillary qubit. In the depicted example, an Hadamard gate is applied to the ancilla, followed by a CNOT-ladder controlled by the ancilla.

The transform involves a quantum Fourier transform (QFT) circuit (described above with reference to **Fig. 12A**) applied to *n* + 1 qubits (*n* encoding qubits plus one ancilla), followed by phase-adjusting and permutation circuits. Here, single-qubit rotations of the form ${U}_{1} = P \left(-\frac{π}{2}N\right) {R}_{z} \left(-π\frac{N - 1}{2 N}\right) and {U}_{2} = P \left(-\frac{π}{2}\right) {R}_{y} \left(-\frac{π}{2}\right)$ (63) are used with the single-qubit phase shift gate *P*(*ϕ*) = diag{1, exp(i *ϕ*)}. The unitary operators *U*₁ and *U*₂ applied to the ancilla can be combined into a single-qubit gate *Uₐ* = *U*₂ *U*₁.

The quantum Chebyshev transform shown in **Fig. 12B** can be understood as a specific version of the (discrete) cosine transform. Considering the normalized output states evaluated at specific $x = \frac{N}{π} arccos \left({x}_{j}^{Ch}\right) = j + \frac{1}{2}$ with the integer *j* ∈ [0, *N -* 1], on the condition of ancilla bit measured in |0〉 state; in this case, each of them corresponds to the (*j* + 1)^{th} column of the type-II discrete cosine transform matrix, DCT^{II}_{N}, and they form a set of orthonormal basis states. ${DCT}_{N}^{II} : = \frac{\sqrt{2}}{\sqrt{N}} {\left({c}_{k} cos\left(\frac{\left(j+\frac{1}{2}\right)}{N} k π\right)\right)}_{k , j = 0 , … , N - 1} , {c}_{k} = \left\{\begin{matrix}\frac{1}{\sqrt{2}} , & k = 0 \\ 1 , & k \neq 0\end{matrix}\right.$ (64)

Therefore, the above-mentioned Chebyshev feature map circuit takes at least *N* times to construct a full DCT^{II}_{N} matrix. **Fig. 12B** shows an alternative approach similar to quantum Fourier transform (QFT) to obtain the quantum Chebyshev transform (QChT) equivalent to DCT^{II}_{N}.

The circuit coverts a complex-valued matrix into a purely real matrix through a series of unitary gates. The circuit **1200** starts with a Hadamard gate **1202** on the ancilla (being considered the most significant bit), followed by a sequence of controlled-NOT gates **1204** applied on the other n qubits to create a (*n* + 1)-qubit entangled state. This is followed by a (*n* + 1) QFT circuit **1206** applied to both the ancillary and encoding qubits. After the QFT, controlled-R_{z} gates **1208** are introduced to adjust the relative phase of the encoding qubits, and a unitary operator ${U}_{1} = P \left(-\frac{π}{2}N\right) {R}_{z} \left(-π\frac{N - 1}{2 N}\right)$ is applied to the ancilla.

The resulting state (behind the *U*₁ gate) has purely real amplitude of |0〉ₐ|*Φ*〉 and a purely imaginary amplitude of |1〉ₐ|*Φ*〉 for any *n*-qubit intermediate state |*Φ*〉. A permutation circuit **1210** is used to reorder amplitudes of the conditioned states, i.e., |1〉*ₐ* |Φ〉 → |1〉*ₐ* |(Φ *+ N -* 1) mod *N*〉, followed by a layer **1212** of *n*-controlled-NOT gates to ensure that the amplitude of |0〉ₐ|*Φ*〉 (|1〉ₐ|*Φ*〉) returns to purely real (imaginary). This is followed by a layer **1214** comprising a unitary operator ${U}_{2} = P \left(-\frac{π}{2}\right) {R}_{y} \left(-\frac{π}{2}\right)$ applied to the ancilla, and then multi-controlled *R_{X}* gates. Finally, on the condition of the input and output ancilla bits being respectively initialized with and measured in the |0〉 state (not shown), the quantum Chebyshev transform is obtained.

A representative example of the Chebyshev transform matrix for n = 2 is given by ${M}_{QChT} \left(2\right) = \frac{1}{\sqrt{2}} \left(\begin{matrix}cos \frac{π}{4} & cos \frac{π}{4} & cos \frac{π}{4} & cos \frac{π}{4} \\ cos \frac{1 π}{10} & cos \frac{3 π}{10} & cos \frac{12 π}{10} & cos \frac{7 π}{10} \\ cos \frac{2 π}{10} & cos \frac{6 π}{10} & cos \frac{12 π}{10} & cos \frac{15 π}{10} \\ cos \frac{3 π}{4} & cos \frac{11 π}{10} & cos \frac{16 π}{10} & cos \frac{21 π}{4}\end{matrix}\right)$ (65) where only the top-left corner of a three-qubit unitary is shown, and similar structure block with sine-valued coefficients appears in the right-bottom corner. For a general n-qubit quantum Chebyshev transformation, the unitary transformation can be expressed as ${\hat{U}}_{QChT} \left(n\right) = {\sum }_{j = 0}^{N - 1} \left|τ\left({x}_{j}^{Ch}\right)\right〉 \left〈j\right|$ (66) where |*τ*(*x*)〉 is given by Equation 11 and ${x}_{j}^{Ch}$ are the Chebyshev nodes.

To the circuit illustrated in **Fig. 12B**, a permutation circuit identical to block 1210 can be appended, in order to obtain the type II discrete sine transform. In this case, the input and output ancilla bits are initialized with and measured in |1〉, respectively.

The quantum Chebyshev transform circuit **1200** can be run in reverse direction to perform the inverse quantum Chebyshev transform, which equivalently maps Chebyshev basis states ${\left\{\left|τ\left({x}_{j}^{Ch}\right)\right〉\right\}}_{j = 0}^{N - 1}$ to computational basis states ${\left\{\left|j\right〉\right\}}_{j = 0}^{N - 1}$.

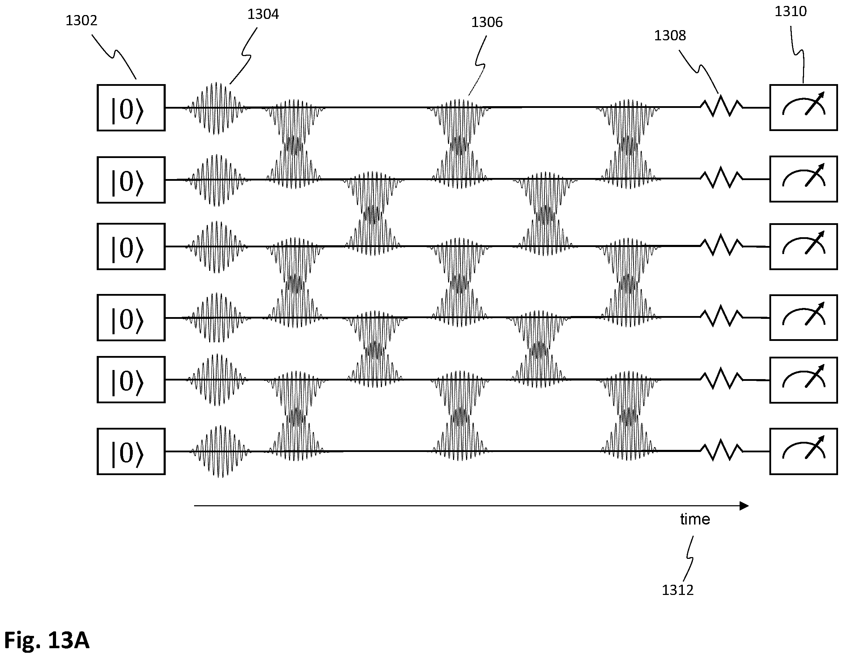

**Fig. 13A** is a hardware-level schematic of the actions effectuating the logical operations shown in circuit diagrams described herein, e.g., with reference to **Figs. 3A**, **6A-B**, **7A-B**, **8-12**, and **14-16.** Unitary operators, e.g. those to encode the quantum kernel feature map and derivatives thereof, can be decomposed into a sequence of logical gate operations. These logical gate operations are transformations in a quantum Hilbert space over the qubits encoding an input parameter. In order to transform the internal states of these qubits, a classical control stack is used to send pulse information to a pulse controller that affects one or more qubits. The controller may send a sequence of such pulses in time and for each qubit independently. An initialization pulse is used to initialize the qubits into the |0〉 state **1302.** Then, for example a series of single-qubit pulses is sent to the qubit array in **1304,** which may apply a single-layer feature map. Additionally, two-qubit pulse sequences can be used to effectively entangle multiple qubits with a feature map **1306.** The duration, type, strength and shape of these pulses determine the effectuated quantum logical operations. **1308** indicates a 'break' in the depicted timeline, which means the sequence of gates may be repeated in a similar fashion in the direction of the time axis **1312.** At the end of the pulse sequences, one or more of the qubits are measured **1310.**

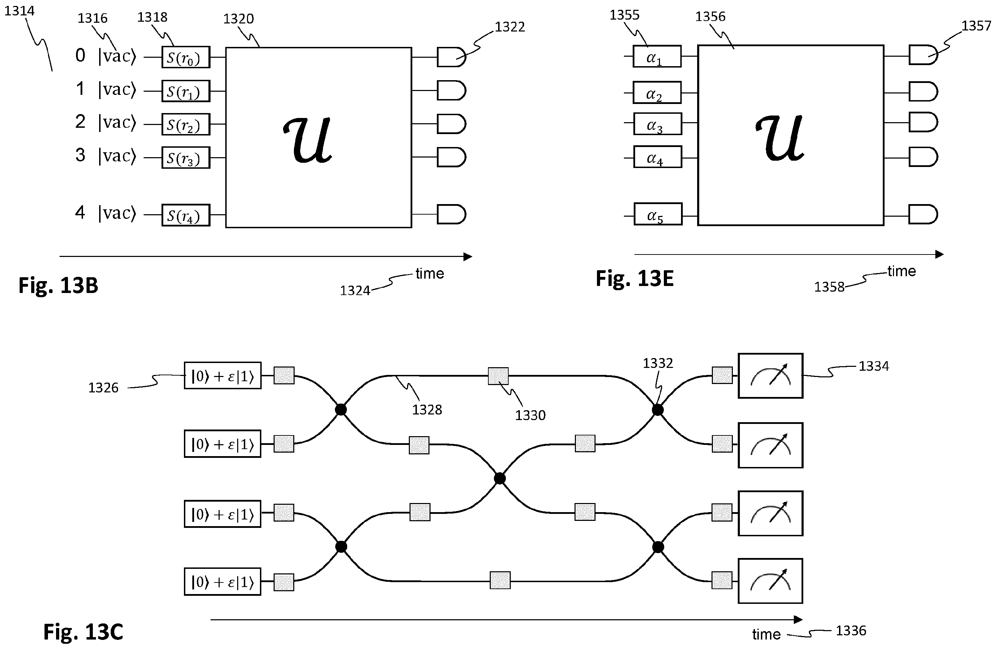

**Fig. 13B** is a hardware-level schematic of the actions effectuating the logical operations shown in circuit diagrams described herein, specified for a photonic/optical quantum processor. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send pulse information to a pulse controller that affects one or more modes. The controller may formulate the programmable unitary transformations in a parametrised way.

Initially the modes **1314** are all in the vacuum state **1316,** which are then squeezed to produce single-mode squeezed vacuum states **1318.** The duration, type, strength and shape of controlled-optical gate transformations determine the effectuated quantum logical operations **1320.** At the end of the optical paths, one or more modes are measured with photon-number resolving, Fock basis measurement **1322,** tomography or threshold detectors.

**Fig. 13C** is a hardware-level schematic of the actions effectuating the logical operations shown in circuit diagrams described herein, specified for a Gaussian boson sampling device. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send information to optical switches and delay lines. The controller may formulate the programmable unitary transformations in a parametrised way.

Initially the modes **1326** are all in a weak coherent state, which is mostly a vacuum state with a chance of one or two photons and negligibly so for higher counts. Subsequently, the photons travel through optical waveguides **1328** through delay lines **1330** and two-mode couplers **1332** which can be tuned with a classical control stack, and which determines the effectuated quantum logical operations.

At the end of the optical paths, one or more modes are measured with photon-number resolving **1334,** or threshold detectors.

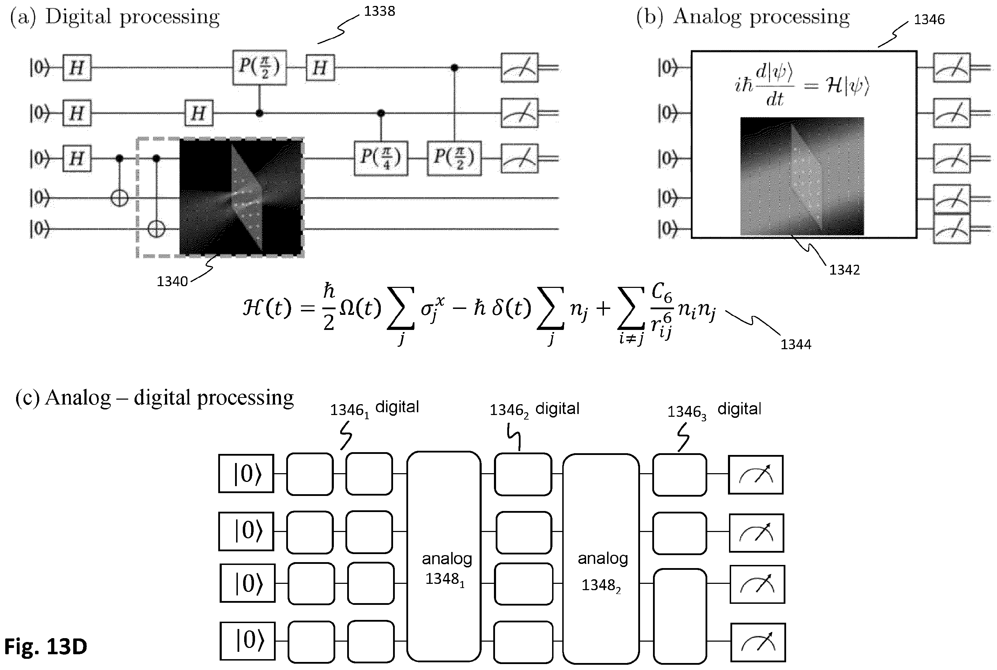

**Fig. 13D** is a hardware-level schematic of the actions effectuating the logical operations shown in circuit diagrams described herein, which may be executed on a neutral-atom-based quantum computer. On this type of hardware, unitary operators, e.g. those used to encode the quantum feature map and derivatives thereof, can be decomposed in two different kinds of operations: digital or analog. Both of these operations are transformations in the quantum Hilbert space over atomic states.

Schematic (a) of **Fig. 13D** depicts a digital quantum circuit **1338,** wherein local laser pulses may be used to individually address neutral atoms to effectuate transitions between atomic states which effectively implement sets of standardized or 'digital' rotations on computational states. These digital gates may include any single-qubit rotations, and a controlled-pauli-Z operation with arbitrary number of control qubits. Additionally, such digital gate operations may also include 2-qubit operations.

Schematic (b) of **Fig. 13D** depicts an analog mode **1346** of operation, wherein a global laser light pulse may be applied to groups of, or all, atoms at the same time, with certain properties like detuning, Rabi frequencies and Rydberg interactions to cause multi-qubit entanglement thereby effectively driving the evolution of a Hamiltonian **1344** of the atomic array in an analog way. The combined quantum wavefunction evolves according to Schrödinger's equation, and particular, unitary operators 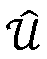 = 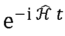 , where 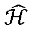 denotes the Hamiltonian and *t* the time, can be designed by pulse-shaping the parametrised coefficients of the Hamiltonian in time. This way, a parametric analog unitary block can be applied, which entangles the atoms and can act as a variational ansatz, or a feature map, or other entanglement operation.

The digital and analog modes can be combined or alternated, to yield a combination of the effects of each. Schematic (c) of **Fig. 13D** depicts an example of such digital-analog quantum circuit, including blocks **1346₁₋₃** of digital qubit operations (single or multi-qubit) and analog blocks **1348₁₋₃.**

It can been proven that any computation can be decomposed into a finite set of digital gates, including always at least one multi-qubit digital gate (universality of digital gate sets). This includes being able to simulate general analog Hamiltonian evolutions, by using Trotterization or other simulation methods. However, the cost of Trotterization is expensive, and decomposing multi-qubit Hamiltonian evolution into digital gates is costly in terms of number of operations needed.

Digital-analog circuits define circuits which are decomposed into both explicitly-digital and explicitly-analog operations. While under the hood, both are implemented as evolutions over controlled system Hamiltonians, the digital ones form a small set of pre-compiled operations, typically but not exclusively on single-qubits, while analog ones are used to evolve the system over its natural Hamiltonian, for example in order to achieve complex entangling dynamics.

It can be shown that complex multi-qubit analog operations can be reproduced/simulated only with a relatively large number of digital gates, thus posing an advantage for devices that achieve good control of both digital and analog operations, such as neutral atom quantum computer. Entanglement can spread more quickly in terms of wall-clock runtime of a single analog block compared to a sequence of digital gates, especially when considering also the finite connectivity of purely digital devices.

Further, digital-analog quantum circuits for a neutral quantum processor that are based on Rydberg type of Hamiltonians can be differentiated analytically so that they can be used in variational and/or quantum machine learning schemes, including the differential quantum circuit (DQC) schemes as described in this application.

In order to transform the internal states of these modes, a classical control stack is used to send information to optical components and lasers. The controller may formulate the programmable unitary transformations in a parametrised way.

At the end of the unitary transformations, the states of one or more atoms may be read out by applying measurement laser pulses, and then observing the brightness using a camera to spot which atomic qubit is turned 'on' or 'off', 1 or 0. This bit information across the array is then processed further according to the embodiments.

**Fig. 13E** is a hardware-level schematic of the actions effectuating the logical operations shown in circuit diagrams described herein, specified for a photonic/optical quantum processor. The quantum model can be decomposed into a sequence of optical gate operations. These optical gate operations are transformations in the quantum Hilbert space of the photons. In order to transform the internal states of these photons, a classical control stack is used to send information to a universal multiport interferometer. The controller may formulate the programmable unitary transformations in a parameterized way.

Initially the photons **1355** are in Fock states, weak coherent states or coherent states. The duration, type, strength and shape of controlled-optical gate transformations determine the effectuated quantum logical operations **1356.**

At the end of the optical paths, the modes are measured with photon-number resolving, Fock basis measurement **1357,** tomography or threshold detectors.

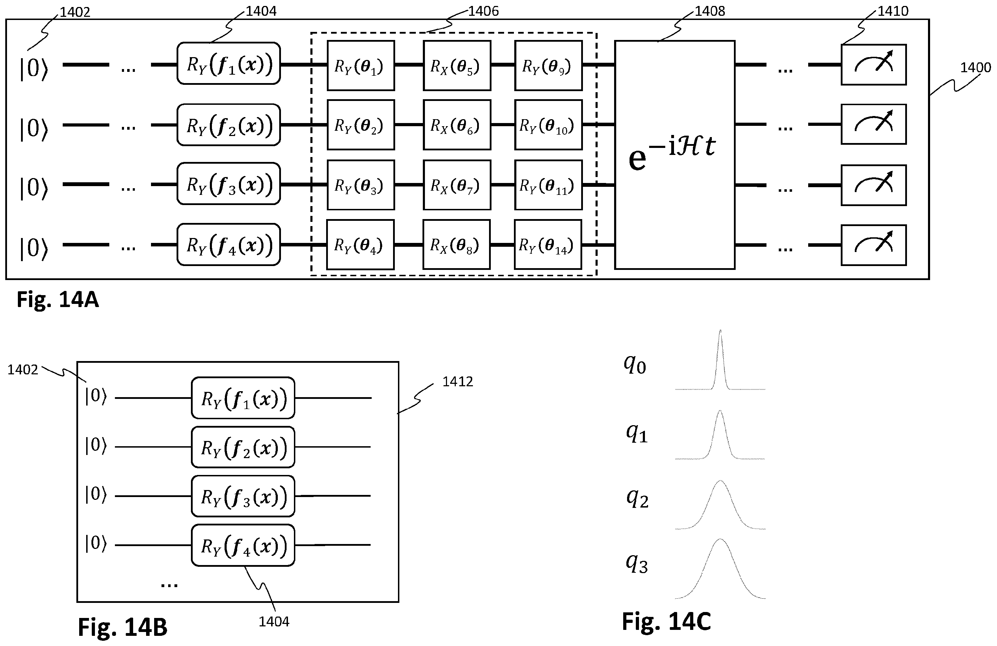

**Fig. 14A** depicts a system describing a Digital-Analog implementation of a quantum algorithm. In particular, **Fig. 14A** represents a Digital-Analog implementation where the qubit interactions can be switched on and off and there exists single-qubit addressability for the application of single-qubit gates, a process described in **1400.** In order to transform the internal states of these qubits, a classical control stack may be used to send information to a controller that affects one or more qubits. The controller may send multiple information carriers (e.g., pulses) in time and for each qubit independently. An initialization protocol is used to initialize the qubits, in this example into the |0〉 state **1402.** The current example shows only four qubits, but the same principles may be extended in a straightforward manner to systems with more (or less) than four qubits.

Then, a quantum feature map is applied **1404** to encode quantum information, e.g., an input variable, into a Hilbert space associated with the quantum processor.

Following application of the feature map, a variational Ansatz is applied, implemented as a variational quantum circuit **1406.** In the current example, the variational Ansatz comprises three single-qubit gates *R_{Y} - R_{X}* - *R_{Y}* with different rotational angles *θᵢ*. These single-qubit gates are typically sets of standardized or 'digital' rotations on computational states applied to different qubits with different rotation angles/parameters. These digital gates include any single-qubit rotations according to the *θᵢ* argument of the rotation. A single rotation/single-qubit gate is not sufficient to perform arbitrary rotation regardless of the parameter/angle since it can only rotate over a single axis. In order to accomplish a general rotation block, three gates in series with different rotation angles/parameters can be used, in this example represented by a block of single-qubit gates **1406.**

Then, the entanglement in this Digital-Analog approach is generated by a wavefunction evolution **1408,** described by the block 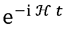 . During this evolution, the qubits are interacting amongst themselves, letting the system evolve for a specified amount of time. This process produces the necessary entanglement in the system. The combined quantum wavefunction evolves according to Schrödinger's equation, and particular unitary operators 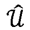 = 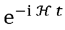 in which 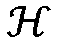 is the Hamiltonian of the system (for example, for neutral atoms the Hamiltonian that governs the system is $H = {\sum }_{j \neq k} \left(\frac{{C}_{6}}{{r}_{j} {k}^{6}}\right) ∗ {\hat{n}}_{j} ∗ {\hat{n}}_{k}$ with *n̂* being the state occupancy of the Rydberg atoms), and t is the evolution time. In this way, a parametric analog unitary block can be applied, which entangles the atoms and can act as a variational Ansatz.

After the evolution of the wavefunction **1408,** another set of single-qubit gates may be applied, similar to the process described in the block of gates *R_{Y} - R_{X} - R_{Y}* **1406.**

Then, the wavefunction may be evolved once more, and finally a measurement in the computational basis occurs as described in **1410.**

Optionally, additional steps may be included, represented by the ellipses, e.g., before, after, or in between the blocks shown. For example, a different initial state than |0〉 may be prepared prior to application of the feature map. Furthermore, the blocks can be executed in a different order, for instance, in some embodiments, block **1408** might precede block **1406.** One or more of the blocks **1404-1408,** or variations thereof, may be repeated one or more times prior to the measurement **1410.**

**Fig. 14B** represents a typical quantum feature map **1412** that starts by preparing the quantum register to the |0〉 quantum state **1402** and then applying single-qubit rotations in all of the qubits with (typically) different rotation angles **1404.** In this example, single qubit rotations **1404** (here chosen as *R_{Y}*(*fᵢ*(*x*)) act on each qubit individually and are parametrized by a variable x. For a non-linear feature map encoding such as the Chebyshev feature map, the variable x may be used as an angle of rotation.

The application **1404** of one rotation operation to each qubit in a register may be referred to as a single layer of rotation operations. This type of encoding of classical information into quantum states is known as angle encoding, which means that a data vector is represented by the angles of a quantum state. Angle encoding can be found in many Quantum Machine Learning algorithms, with the main advantage being that it only requires *n* = log *NM* qubits to encode a dataset of *M* inputs with *N* features each. Thus, considering an algorithm that is polynomial in n, it has a logarithmic runtime dependency on the data size.

**Fig. 14C** illustrates different pulses (potentially differing in pulse duration and/or amplitude/height) that can be sent to the quantum circuit (different qubits) to encode the classical information. The angle of the rotation that is described by the *fᵢ*(*x*) dictates the duration and geometry of the pulse.

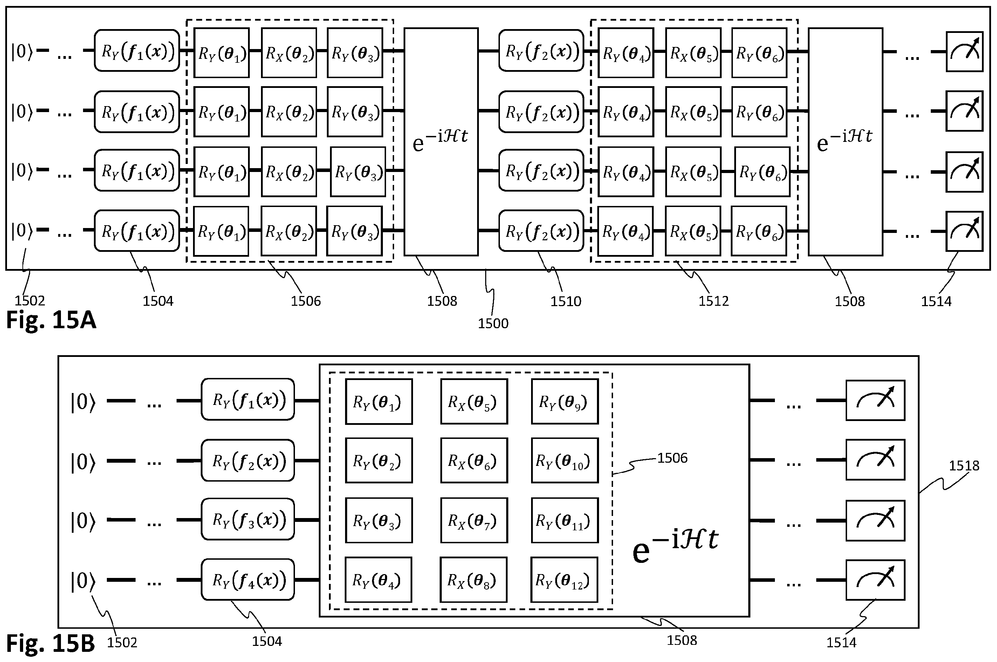

**Fig. 15A** presents a quantum circuit based on a Digital-Analog implementation **1500** that has no single-qubit addressability and uses a wavefunction evolution that can be turned on and off for the entanglement generation. **Fig. 15A** differs from **Fig. 14A** in that it shows a technique known as data re-uploading that alters the quantum feature map **1504** and **1510.** Loading classical data into a quantum system is a non-trivial task, and uploading large amounts of data makes it an even more critical issue. However, when the case of big-data is not considered, techniques like data re-uploading can be utilized. As the name suggests, this entails uploading the classical data multiple times, and encode them via rotational angle/parameter encoding into single-qubit rotations throughout the quantum circuit. Such a data re-uploading technique may start by setting the quantum register to an initial state, e.g., the all-zero state **1502,** followed by angle encoding that is based on a feature map **1504,** in this case a tower feature map.

Following that, as already explained above with reference to **1406,** three single-qubit gates in series are used to perform a general rotation block that acts as the Ansatz **1506.** In this example the encoding is done through the ***θᵢ*** variable of the *R_{Y} - R_{X} - R_{Y}* rotations; however, any type of combined rotations of the type (*R_{X}, R_{Y}, R_{Z}*) could be applied here. Since there is no single-qubit addressability in this example, each *R_{Y}* and *R_{X}* gate is applied at all qubits simultaneously with the same rotation angle *θᵢ*. Subsequently, the wavefunction is allowed to evolve for a specified amount of time **1508.**

Then the classical data are re-uploaded through angle encoding into single-qubit rotations **1510.** However, each time the (same) data are uploaded, the information is encoded using different angles than in the previous data uploading steps. For example, the amount of rotation may be doubled in each data (re-)uploading step **1504,1510** (i.e., the rotational angle of the might be increasing as 1-2-4, etc.).

Once again, the rotations *R_{Y} - R_{X} - R_{Y}* are applied to all qubits simultaneously with the same rotation angle for each single qubit gate, but different than **1506.** The classical information can be repeatedly encoded into the quantum feature map through the data re-uploading technique, while changing the angle of the single qubit rotational angle (**1504, 1510,** etc.) every time after the wavefunction evolution. The resulting quantum feature map can become more expressive as a tower feature map by doing this process of serial data re-uploading with different levels of rotational angles every time the re-uploading is done.

**Fig. 15B** illustrates a different (and at current technology levels more realistic) form of a Digital-Analog implementation. In this implementation, the system has single-qubit addressability, but the wavefunction evolution cannot be turned off, thus staying always on. This system requires less control over the qubit interactions (since they are always on) and only requires single-qubit addressability.

The single-qubit gates are applied while the wavefunction evolution (qubit interaction) is also happening. In the shown example, the quantum circuit **1518** starts by encoding information in the |0〉 quantum state **1502,** followed by a quantum feature map **1504** (analogous to **1404**).

Then, a variational Ansatz is applied, comprising both wavefunction evolution 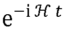 **1508** and simultaneous application of a block of single-qubit gates **1516** (similar to block **1406**). After multiple repetitions of block **1516,** each time with different rotational angles at the single-qubit gates, the circuit ends with a measurement in the computational basis **1514.**

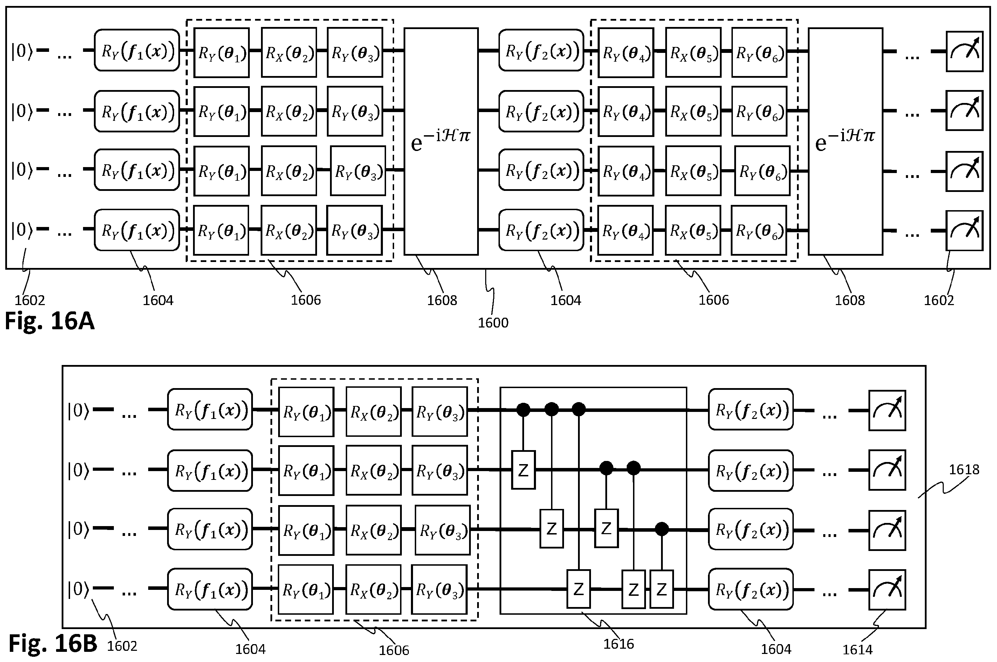

**Fig. 16A** illustrates a quantum circuit **1600** that implements a Digital-Analog implementation with single-qubit addressability, wherein the wavefunction evolution (e.g., atom interactions) can be turned on and off. This quantum circuit is equivalent to the quantum circuit in **Fig. 15A**, with the time of the wavefunction evolution **1608** being *t* = *π* (in dimensionless coordinates), while all other operations are the same as the ones described in **1500.** The same technique of data re-uploading with a tower feature map **1604, 1610** and the same Ansatz comprising single-qubit gates **1606,1612** followed by wavefunction evolution **1608** are used (all similar to **1500**).

The reason that such a specific time period for the wavefunction evolution **1608** is selected, is due to the fact that such evolution results in the application of Controlled-Z (CZ) gates between pairs of qubits. The benefit of describing the wavefunction evolution as a set of CZ gates lies in the fact that this Digital-Analog implementation of a quantum circuit resembles the structure of the equivalent Digital quantum circuit, which instead of the operation **1608** performs a set of CNOT gates between pairs of qubits included in the quantum circuit. This allows more straightforward comparisons to be drawn between the Digital and Analog implementation of such feature maps, and to evaluate their relative performance.

**Fig. 16B** illustrates a quantum circuit that implements a Digital-Analog implementation with single-qubit addressability **1618,** similar to **1600,** but with the entanglement generated via CZ gates between the qubits, resembling the atom interaction / entanglement generation.

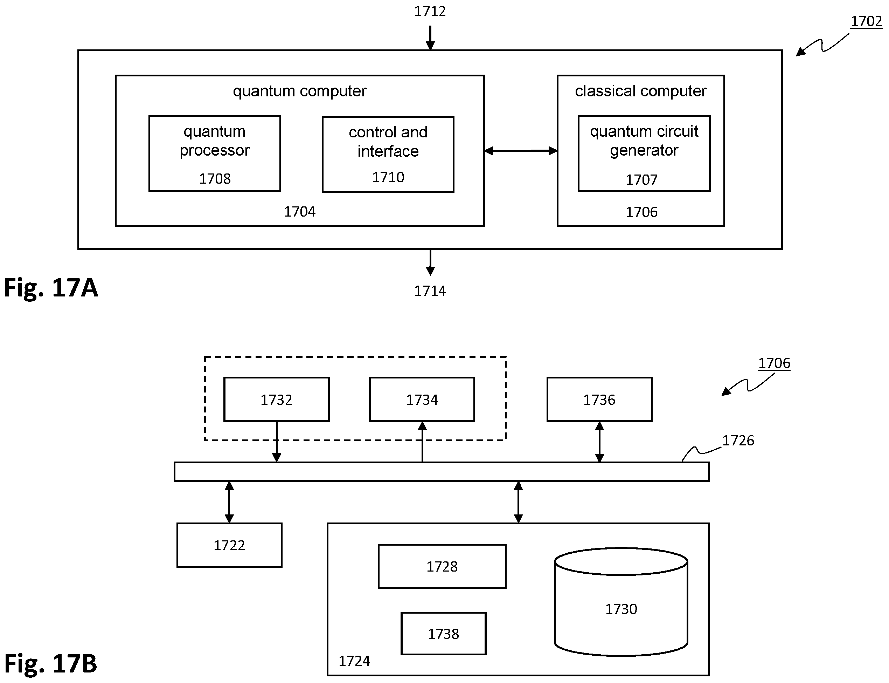

**Fig. 17A** depicts a system for determining a solution for an computational problem using a hybrid quantum computer system according to an embodiment. The system **1702** may include a quantum computer system **1704** comprising one or more quantum processors **1708,** e.g. a gate-based qubit quantum processor, and a controller system **1710** comprising input output (I/O) devices which form an interface between the quantum processor and the outside world, e.g., the one or more classical processors of a classical computer **1706.** For example, the controller system may include a system for generating control signals for controlling the quantum processing elements. The control signals may include for example a sequence of pulses, e.g. microwave pulses, voltage pulses and/or optical pulses, which are used to manipulate qubits. Further, the controller may include output device, e.g. readout circuits, for readout of the qubits and the control signals for readout of the quantum processing elements, e.g. a readout pulse for reading a qubit. In some embodiments, at least a part such readout circuit may be located or integrated with the chip that includes the qubits.

The system may further comprise a (purely classical information) input **1712** and an (purely classical information) output **1714.** The data processor systems may be configured to solve an optimization problem using the quantum computer. Input data may include information about the optimisation problem one wishes to solve. This information may include training data such as input-output pairs, a differential equation, boundary conditions, initial values, regularization values, etc. The input data may be used by the system to construct quantum circuits, in particular quantum feature maps and/or parametrized quantum circuits, and to classically calculate values, e.g. sequences of pulses, which may be used to initialize and control qubit operations according to the quantum circuit. To that end, the classical computer may include a quantum circuit generator **1707.** The input data may be used by the system to classically calculate values, e.g. parameter settings, which may be used to initialize the quantum circuit that is implemented on the quantum processor. Similarly, output data may include loss function values, sampling results, correlator operator expectation values, optimisation convergence results, optimized quantum circuit parameters and hyperparameters, and other classical data.

Each of the one or more quantum processors may comprise a set of controllable quantum processing elements, e.g. a set of controllable two-level systems referred to as qubits. The two levels are |0〉 and |1〉 and the wave function of a *N*-qubit quantum processor may be regarded as a complex-valued superposition of 2*^{N}* of these (distinct) basis states. The embodiments in this application however are not limited to qubits but may include any multi-level quantum processing elements, e.g. qutrits, that is suitable for performing quantum computation. Examples of such quantum processors include noisy intermediate-scale quantum (NISQ) computing devices and fault tolerant quantum computing (FTQC) devices.

The quantum processor may be configured to execute a quantum algorithm in accordance with the gate operations of a quantum circuit. The quantum processor may be implemented as a gate-based qubit quantum device, which allows initialization of the qubits into an initial state, interactions between the qubits by sequentially applying quantum gates between different qubits and subsequent measurement of the qubits' states. To that end, the input devices may be configured to configure the quantum processor in an initial state and to control gates that realize interactions between the qubits. Similarly, the output devices may include readout circuitry for readout of the qubits which may be used to determine a measure of the energy associated with the expectation value of the Hamiltonian of the system taken over the prepared state.

Furthermore, the one or more quantum processors may comprise a set of continuous variable systems, such as optical or photonic quantum computers. Furthermore, the quantum processor may comprise a Gaussian Boson Sampling device as described above with reference to **Fig. 13C** or any of the other hardware described above with reference to **Fig. 13A-E**.

In some embodiments, the first data processor system may be implemented as a software program for simulating a quantum computer system **1704** comprising a quantum processor system **1708.** Hence, in that case, the software program may be a classical software program that runs a classical computer **1706** so that quantum algorithms can be developed, executed and tested on a classical computer without requiring access to a hardware implementation of the quantum processor system.

**Fig. 17B** is a block diagram illustrating an exemplary classical data processing system described in this disclosure, for example classical computer **1706.** Classical data processing system **1720** may include at least one processor **1722** coupled to memory elements **1724** through a system bus **1726.** As such, the data processing system may store program code within memory elements **1724.** Further, processor **1722** may execute the program code accessed from memory elements **1724** via system bus **1726.** In one aspect, data processing system may be implemented as a computer that is suitable for storing and/or executing program code. It should be appreciated, however, that data processing system **1720** may be implemented in the form of any system including a processor and memory that is capable of performing the functions described within this specification.

Memory elements **1724** may include one or more physical memory devices such as, for example, local memory **1728** and one or more bulk storage devices **1730.** Local memory may refer to random access memory or other non-persistent memory device(s) generally used during actual execution of the program code. A bulk storage device may be implemented as a hard drive or other persistent data storage device. The classical data processing system **1720** may also include one or more cache memories (not shown) that provide temporary storage of at least some program code in order to reduce the number of times program code must be retrieved from bulk storage device **1730** during execution.

Input/output (I/O) devices depicted as key device **1732** and output device **1734** optionally can be coupled to the data processing system. Examples of key device may include, but are not limited to, for example, a keyboard, a pointing device such as a mouse, or the like. Examples of output device may include, but are not limited to, for example, a monitor or display, speakers, or the like. Key device and/or output device may be coupled to data processing system either directly or through intervening I/O controllers. A network adapter **1736** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Operation modems, cable operation modems, and Ethernet cards are examples of different types of network adapter that may be used with classical data processing system **1720.**

As pictured in **FIG. 17B**, memory elements **1724** may store an application **1738.** It should be appreciated that classical data processing system **1720** may further execute an operating system (not shown) that can facilitate execution of the application. Application, being implemented in the form of executable program code, can be executed by classical data processing system **1720,** e.g., by processor **1722.** Responsive to executing application, data processing system may be configured to perform one or more operations to be described herein in further detail.

In one aspect, for example, classical data processing system **1720** may represent a client data processing system. In that case, application **1738** may represent a client application that, when executed, configures classical data processing system **1720** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **1738,** when executed, may configure data processing system to perform (HTTP) server operations. In another aspect, data processing system may represent a module, unit or function as referred to in this specification.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed.

The description of the present embodiments has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. A method for determining a solution to a differential problem using a hybrid computer system comprising a classical computer system and a quantum processor, the differential problem defining a differential equation and one or more constraints, the solving comprising finding a target function defining an approximate solution of the differential equation, the target function being represented by a vector of coefficients with respect to a given function basis, the method comprising:
receiving or determining information on one or more quantum circuits encoding a Hamiltonian representing the differential problem with respect to the basis functions, the Hamiltonian comprising a first contribution representing the differential equation and a second contribution representing the one or more constraints; and
determining the solution to the differential problem, the determining comprising:
- initialising at least a first part of the quantum processor in an initial state;
- evolving the at least first part of the quantum processor into a final state, the final state targeting a zero-eigenvalue state of the Hamiltonian, the final state representing the vector of coefficients with respect to the given function basis; and
- receiving measurement data from the quantum processor, to obtain the solution to the differential problem.

2. The method as claimed in claim 1, further comprising evaluating the target function, wherein evaluating the target function comprises:
encoding an independent variable of the target function in a latent space of the quantum processor state by initialising a second part of the quantum processor in a fiducial state and evolving the fiducial state with a feature map associated with the given function basis to obtain an encoded state, the feature map being based on the independent variable; and
measuring an overlap of the encoded state with the final state representing the vector of coefficients with respect to the given function basis.

3. The method as claimed in claim 1, wherein the solution to the differential problem represents a probability density function, and wherein the method further comprises:
generating, by the quantum processor, samples according to the probability density function, the generating the samples comprising:
- applying a unitary transformation associated with the function basis; and
- measuring the quantum processor in a computational basis, a measurement yielding a bitstring, the bitstring representing a sample according to the probability density function.

4. The method as claimed in claim 1 or 2,
wherein the basis functions comprise a constant function; and/or
wherein the basis functions are real-valued functions; and/or
wherein the basis functions define a complete orthonormal function basis;
preferably the basis functions being the Chebyshev basis.

5. The method as claimed in any one of the preceding claims, wherein the Hamiltonian is represented by a sum of a first matrix representing the differential equation and one or more second matrices representing the one or more constraints,
the first matrix being defined as a quadratic form of a third matrix, the third matrix being defined as a sum of matrices corresponding to terms of the differential equation with respect to the basis functions, and
each of the one or more second matrices comprising a quadratic form of a fourth matrix, the fourth matrix corresponding to one of the one or more constraints with respect to the basis functions.

6. The method as claimed in any one of the preceding claims, wherein the one or more constraints are homogeneous data constraints.

7. The method as claimed in any one of the preceding claims, wherein the one or more quantum circuits further define operations for:
encoding a value of an independent variable of the differential equation in a first quantum state using a feature map associated with the basis functions;
encoding the eigenvector of the Hamiltonian with the minimal eigenvalue in a second quantum state; and
measuring an overlap between the first and second quantum states.

8. The method as claimed in any one of the preceding claims, wherein the Hamiltonian comprises a scaling factor, and wherein determining the eigenvector of the Hamiltonian with the minimal eigenvalue comprises:
computing a set of eigenvalues of a part of the Hamiltonian that is scaled by the scaling factor; and
selecting a smallest eigenvalue of the set of eigenvalues.

9. The method as claimed in any one of the preceding claims,
wherein the differential equation is a homogeneous differential equation; and/or wherein the differential equation is a polynomial differential equation.

10. The method as claimed in any one of the preceding claims,
wherein applying a quantum circuit to the quantum processor comprises translating the quantum circuit into a sequence of signals, e.g. optical or electric pulses, and using the sequence of signals to operate quantum elements, e.g. qubits, in a quantum register of the quantum processor; and/or,
wherein receiving measurement data comprises applying a read-out signal to the quantum elements, e.g. qubits, in a quantum register of the quantum processor and, in response to the read-out signal, obtaining data from the quantum hardware representing projective measurements.

11. The method as claimed in any of the preceding claims, wherein the pulses in the sequence of pulses are electromagnetic pulses, e.g., laser pulses, and wherein encoding the quantum circuits in the sequence of pulses comprises determining, for each pulse in the sequence of pulses, one or more of: a pulse duration, a pulse timing, a pulse amplitude, and a pulse phase.

12. The method as claimed in any of the preceding claims,
wherein the hybrid quantum computer includes at least one of: a gate-based qubit device, a digital/analog quantum device, a purely analog quantum device, a continuous-variable operating quantum device and/or a gaussian boson sampling device; and/or,
wherein the hybrid quantum computer comprises at least one of: a neutral atom quantum device, a photonic qubit quantum device, a superconducting qubits quantum device, and/or a trapped ion device.

13. A system for solving a differential problem, the differential problem defining a differential equation and one or more constraints, the solving comprising finding a target function defining an approximate solution of the differential equation, the target function being represented by a vector of coefficients with respect to a given function basis, the system comprising a hybrid computer system comprising a classical computer system and a quantum processor, the hybrid quantum computer system being configured for:
receiving or determining, by the classical computer system, information on one or more quantum circuits encoding a Hamiltonian representing the differential problem with respect to the basis functions; and
determining the solution to the differential problem, the determining comprising:
- initialising at least a first part of the quantum processor in an initial state;
- encoding the quantum circuits and, using the encoded quantum circuits, evolving the at least first part of the quantum processor into a final state, the final state targeting a zero-eigenvalue state of the Hamiltonian, the final state representing the vector of coefficients with respect to the given function basis; and
- receiving measurement data from the quantum processor, to obtain the solution to the differential problem.

14. A computer program product comprising instructions which, when the computer program is executed by a hybrid quantum computer, cause the hybrid quantum computer to execute the method according to any one of claims 1-12.

15. A computer-readable storage medium comprising instructions which, when executed by a hybrid quantum computer, cause the hybrid quantum computer to execute the method according to any one of claims 1-12.
